# EUROPEAN PATENT APPLICATION

(11) **EP 4 841 823 A1**
(43) Date of publication of application: **18.11.2026**
(21) Application number: 25762403.1
(22) Date of filing: 27.02.2025
(51) Int. Cl.: H01Q 1/24, H04M 1/02, H01Q 5/335, H01Q 5/50, H01Q 1/12, H01Q 1/52

(54) **FOLDABLE ELECTRONIC DEVICE COMPRISING NFC ANTENNA**

(30) Priority: 27.02.2024 KR 20240027928; 07.05.2024 KR 20240060123
(71) Applicant: Samsung Electronics Co., Ltd., Suwon-si, Gyeonggi-do 16677 (KR)
(72) Inventor: NAM, Hojung, Suwon-si, Gyeonggi-do 16677 (KR); KIM, Seunghwan, Suwon-si, Gyeonggi-do 16677 (KR); KIM, Junwoo, Suwon-si, Gyeonggi-do 16677 (KR); PARK, Sungkoo, Suwon-si, Gyeonggi-do 16677 (KR); AN, Seongyong, Suwon-si, Gyeonggi-do 16677 (KR); LEE, Kyungjae, Suwon-si, Gyeonggi-do 16677 (KR); LEE, Kookjoo, Suwon-si, Gyeonggi-do 16677 (KR); HWANG, Soonho, Suwon-si, Gyeonggi-do 16677 (KR)
(74) Representative: HGF
(86) International application number: PCT/KR2025/002779
(87) International publication number: WO 2025/183486

(57) **Abstract**

According to embodiments of the disclosure, a foldable electronic device includes a first housing including a first rear cover and a first side member, a second housing including a second rear cover and a second side member, a hinge portion rotatably connecting the first housing and the second housing, a first wireless communication circuit configured to transmit and/or receive a first wireless signal of a first frequency band through a first conductive portion included in the first side member, and a second wireless communication circuit configured to transmit and/or receive a second wireless signal of a second frequency band through a second conductive portion included in the second side member. The first conductive portion includes a first contact portion electrically connected to the first wireless communication circuit. The second conductive portion includes a second contact portion electrically connected to the second wireless communication circuit. In a folded state of the foldable electronic device, the first conductive portion overlaps the second conductive portion in a direction orthogonal to the first rear cover. In the folded state of the foldable electronic device, the first contact portion and the second contact portion are not aligned with each other.

## Description

### [Technical Field]

The disclosure relates to a foldable electronic device including a near-field communication (NFC) antenna.

### [Background Art]

Electronic devices may not only make payments through NFC antennas, but may also be combined with various applications to provide users with a variety of experiences.

The above-described information may be provided as related art for the purpose of helping to understand the disclosure. No claim or determination is made as to whether any of the foregoing may be applied as prior art with respect to the disclosure.

### [Disclosure of Invention]

### [Technical Problem]

An NFC antenna may be located, for example, corresponding to the center of the rear surface of the electronic device. When a user wants to use a payment service, the user may experience an inconvenience of having to pay while taking his or her hands off from the electronic device or having to use the electronic device while holding the edges of the electronic device at the time of making a payment. In the case of a foldable electronic device, it may be difficult to make a payment smoothly due to the location of the NFC antenna as well as the folding characteristic of the foldable electronic device itself.

Embodiments of the disclosure provide a foldable electronic device including an NFC antenna to improve usability. Various embodiments of the disclosure are provided to address or at least alleviate the above-mentioned problems.

The technical problems to be addressed by this disclosure are not limited to those described above, and other technical problems not mentioned above may be understood by a person ordinarily skilled in the related art to which the disclosure pertains.

### [Solution to Problem]

Embodiments of the disclosure provide a foldable electronic device that includes a first housing, a second housing, a hinge portion, a first wireless communication circuit, and a second wireless communication circuit. The first housing includes a first rear cover and a first side member. The second housing includes a second rear cover and a second side member. The hinge portion rotatably interconnects the first housing and the second housing. The first wireless communication circuit is configured to transmit and/or receive a first wireless signal of a first frequency band via a first conductive portion included in the first side member. The second wireless communication circuit is configured to transmit and/or receive a second wireless signal of a second frequency band via a second conductive portion included in the second side member. The first conductive portion includes a first contact portion electrically connected to the first wireless communication circuit. The second conductive portion includes a second contact portion electrically connected to the second wireless communication circuit. The first conductive portion overlaps the second conductive portion in a direction orthogonal to the first rear cover based on the foldable electronic device being in a folded state. In the folded state of the foldable electronic device, the first contact portion and the second contact portion are not aligned with each other.

### [Advantageous Effects of invention]

A foldable electronic device including an NFC antenna according to various embodiments of the disclosure may ensure and/or expand a magnetic field distribution in the NFC band, thereby improving usability for an NFC service and/or user experience.

A foldable electronic device including an NFC antenna according to various embodiments of the disclosure may reduce electromagnetic interference between an NFC antenna and a non-NFC antenna in the folded state of the foldable electronic device.

In addition, effects that may be obtained or predicted by various embodiments of the disclosure will be directly or implicitly disclosed in the detailed description of the various embodiments of the disclosure.

### [Brief Description of Drawings]

The above and other aspects, features, and advantages of certain embodiments of the disclosure will be more apparent from the following detailed description taken in conjunction with the accompanying drawings.
FIG. 1 is a block diagram illustrating an example electronic device in a network environment according to various embodiments.
FIG. 2 is a diagram illustrating an example foldable electronic device in an unfolded state according to various embodiments.
FIG. 3 is a diagram illustrating an example foldable electronic device in a folded state according to various embodiments.
FIG. 4 is a cross-sectional view of an example foldable electronic device of the disclosure taken along line D-D' in FIG. 2 according to various embodiments.
FIG. 5 is a diagram illustrating an example foldable electronic device in an unfolded state according to various embodiments.
FIG. 6 is a diagram illustrating an example foldable electronic device in the folded state and illustrates a portion of the foldable electronic device in the unfolded state according to various embodiments.
FIG. 7 is a diagram illustrating an example foldable electronic device in the folded state and illustrates a portion of the foldable electronic device in the unfolded state according to various embodiments.
FIG. 8 is a diagram illustrating an example foldable electronic device in the folded state and illustrates a portion of the foldable electronic device in the unfolded state according to various embodiments.
FIG. 9 is a diagram illustrating an example foldable electronic device in the folded state and illustrates a portion of the foldable electronic device in the unfolded state according to various embodiments.
FIG. 10 is a diagram illustrating an example foldable electronic device in the folded state and illustrates a portion of the foldable electronic device in the unfolded state according to various embodiments.
FIG. 11 is a diagram illustrating an example foldable electronic device in the folded state and illustrates a portion of the foldable electronic device in the unfolded state according to various embodiments.
FIG. 12 is a table illustrating heat maps illustrating the magnetic field distribution of the NFC band during feeding in the folded state of the foldable electronic device, heat maps showing the magnetic field distribution of the NFC band during feeding in the folded state of a foldable electronic device according to a comparative example, and NFC performance according to various embodiments.
FIG. 13 is a diagram illustrating views of first and second example electronic devices in the folded state, and graphs each showing the antenna radiation performance of a non-NFC antenna depending on the component values of a matching circuit of a first NFC antenna in each of the first and second example electronic devices in the folded state according to various embodiments.
FIG. 14 is a diagram illustrating views of first, third, and fourth example electronic devices in the folded state, and graphs each showing the antenna radiation performance of a non-NFC antenna depending on the component values of a matching circuit of a first NFC antenna in each of the first, third, and fourth second example electronic devices in the folded state according to various embodiments.
FIG. 15 is a diagram illustrating views of first and second example foldable electronic devices in the folded state, and graphs each showing the antenna radiation performance of a non-NFC antenna depending on the component values of a matching circuit of a first NFC antenna in each of the first and second example foldable electronic devices in the folded state according to various embodiments.
FIG. 16 is a diagram illustrating graphs each showing the antenna radiation performance of a non-NFC antenna according to an element value of the fourth matching circuit in the folded state of the foldable electronic device according to various embodiments.
FIG. 17 is a diagram illustrating an example multi-foldable electronic device in the folded state according to various embodiments.
FIG. 18 is a diagram illustrating an example multi-foldable electronic device in the folded state according to various embodiments.

### [Mode for the Invention]

Hereinafter, various example embodiments of the disclosure disclosed herein will be described in greater detail with reference to the accompanying drawings.

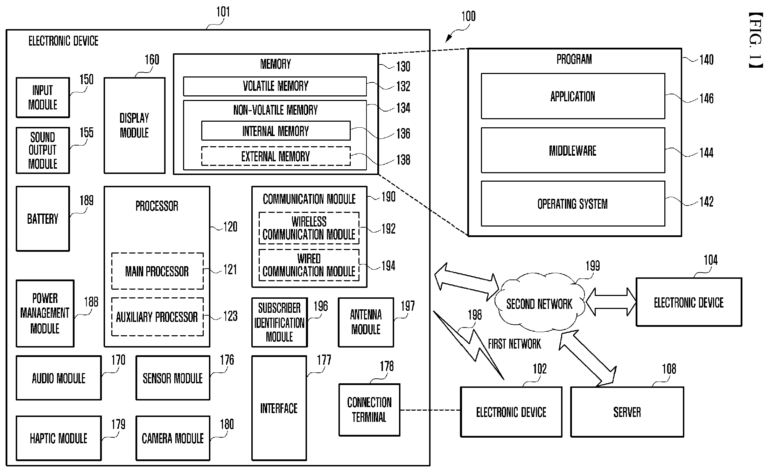

FIG. 1 is a block diagram illustrating an example electronic device 101 in a network environment 100 according to various embodiments of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to various embodiments of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5th generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4th generation (4G) network, and next-generation communication technology, e.g., new radio (NR) access technology. The NR access technology may support highspeed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to various embodiments of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to various embodiments of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In various embodiments of the disclosure, the external electronic device 104 may include an internet of things (IoT) device. The server 108 may be an intelligent server using machine learning and/or neural networks. According to various embodiments of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to various embodiments of the disclosure may be one of various types of electronic devices. The electronic devices may include a portable communication device (e.g., a smartphone), a computer device, a portable multimedia device, a portable medical device, a camera, a wearable device, or a home appliance, or the like. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to various embodiments of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORETM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

Herein, when the term "substantially" may refer to or limit a structural element, expressions including the term "substantially" are understood or interpreted as technical features produced within a technical tolerance allowable by the methods used for the structural element. In addition, the term "comprising" means that a specific effect or result may be achieved within a certain tolerance, and that a person ordinarily skilled in the art is aware of methods to achieve such tolerance.

Herein, the phrase "disposed on XX" may be understood as being disposed adjacent to XX, disposed substantially in contact with XX, or coupled to XX.

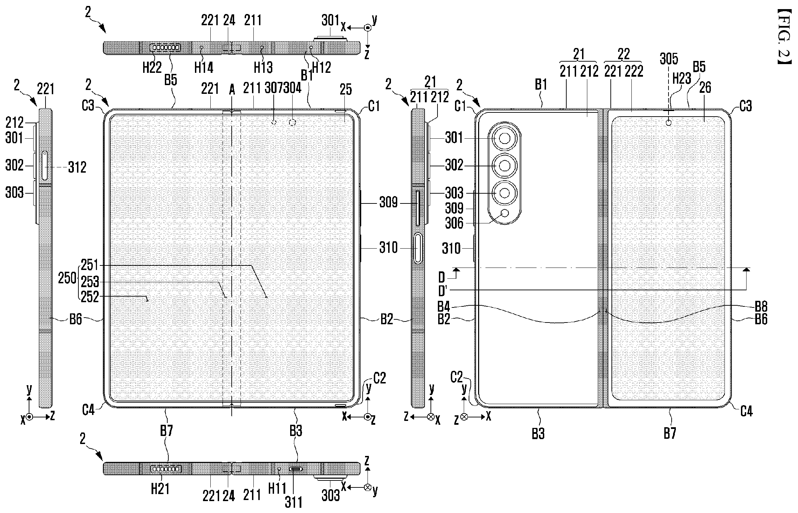

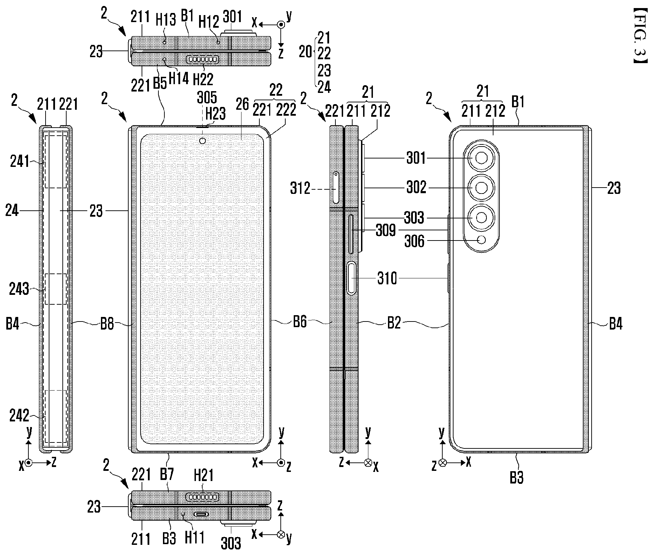

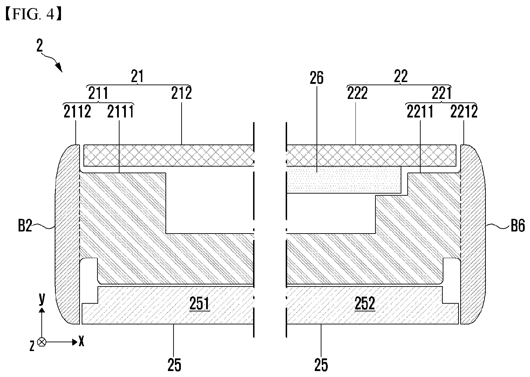

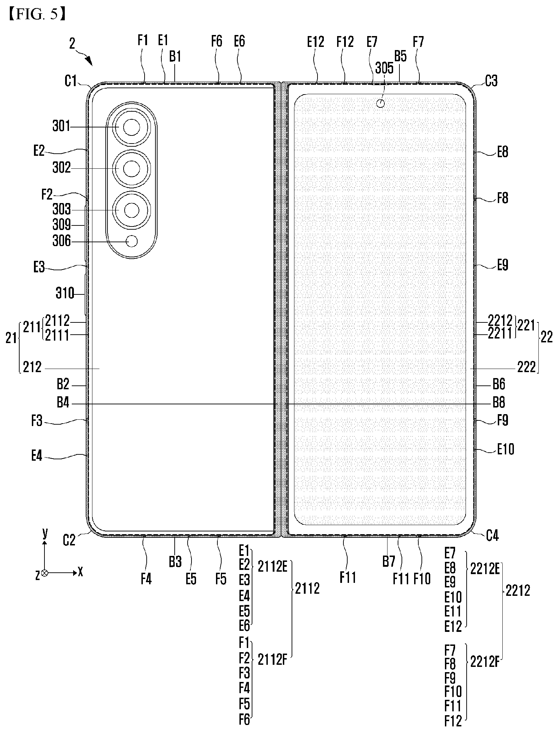

FIG. 2 is a diagram illustrating an example foldable electronic device 2 in an unfolded state (or a flat state) according to various embodiments. FIG. 3 is a diagram illustrating an example foldable electronic device 2 of the disclosure in a folded state (or a folding state) according to various embodiments. FIG. 4 is a cross-sectional view of an example foldable electronic device 2 taken along line D-D' in FIG. 2 according to various embodiments. FIG. 5 is a diagram illustrating an example foldable electronic device 2 in the unfolded state according to various embodiments.

Referring to FIGS. 2, 3, 4, and 5, the foldable electronic device 2 may include a foldable housing 20, a first display module (e.g., a flexible display module or a foldable display module) 25, a second display module 26, a first camera module 301, a second camera module 302, a third camera module 303, a fourth camera module 304, a fifth camera module 305, a light-emitting module 306, a sensor module 307, a first sound input module (not illustrated separately), a second sound input module (not illustrated separately), a third sound input module (not illustrated separately), a fourth sound input module (not illustrated separately), a first sound output module (not illustrated separately), a second sound output module (not illustrated separately), a third sound output module (not illustrated separately), a key input module, a first connection terminal 311, and/or a second connection terminal 312.

According to various embodiments, the foldable housing 20 may include a first housing (also referred to as a first housing portion or a first housing structure) 21, a second housing (also referred to as a second housing portion or a second housing structure) 22, a hinge housing 23, and/or a hinge portion 24. The first housing 21 and the second housing 22 may be connected through the hinge portion 24 and may be mutually rotatable with respect to the hinge portion 24. The hinge portion 24 may include one or more hinge modules (or hinge assemblies) (e.g., the first hinge module 241, the second hinge module 242, and/or the third hinge module 243 in FIG. 3).

According to various embodiments, the first display module 25 may include a display area 250. The display area 250 may include a first display area 251, a second display area 252, and a third display area 253 between the first display area 251 and the second display area 252. The third display area 253 may extend the first display area 251 and the second display area 253. A first screen area (also referred to as a first active area) capable of displaying an image may be provided through the first display area 251. A second screen area (also referred to as a second active area) capable of displaying an image may be provided through the second display area 252. A third screen area (also referred to as a third active area) capable of displaying an image may be provided through the third display area 253. The display area 250 may provide a single screen area including the first screen area, the second screen area, and the third screen area.

According to various embodiments, the first display area 251 may be located to correspond to the first housing 21. The second display area 252 may be located to correspond to the second housing 22. The third display area 253 may be located corresponding to the hinge portion 24. The first display area 251 may be disposed in the first housing 21, and the shape of the first display area 251 may be maintained by being supported by the first housing 21. The second display area 252 may be disposed in the second housing 22, and the shape of the second display area 252 may be maintained by being supported by the second housing 22. The first display area 251 and the second display area 252 may be provided, for example, to be substantially flat. The unfolded state of the foldable electronic device 2 may be the state in which the third display area 253 is arranged to be substantially flat. When the foldable electronic device 2 is in the unfolded state, the first display area 251 and the second display area 252 may form an angle of about 180 degrees therebetween, and the display area 250 may be provided (or arranged) in a substantially flat form. When the foldable electronic device 2 is in the unfolded state, due to the relative position between the first display area 251 disposed on the first housing 21 and the second display area 252 disposed on the second housing 22, the third display area 253 may be laid flat. When the foldable electronic device 2 is in the unfolded state, the third display area 253 may be pulled from opposite sides by the first display area 251 and the second display area 252, and the pulling force may be provided to reduce damage to the third display area 253 while allowing the third display area 253 to be laid flat. When the foldable electronic device 2 is in the unfolded state, the third display area 253 may be provided with an extended width that may be placed flat while reducing stress by being pulled by the first display area 251 and the second display area 252.

According to various embodiments, when the foldable electronic device 2 is in the unfolded state, the hinge portion 24 may support the third display area 253 of the first display module 25. When an external force (e.g., an external pressure such as a touch input using a user's finger or a touch input using an electronic pen) is applied to the third display area 253 in the unfolded state of the foldable electronic device 2, the hinge portion 24 may support the third display area 253 to be maintained flat by reducing the sagging of the third display area 253. The hinge portion 24 may be configured to reduce the effect of an external impact on the third display area 253 when the external impact is applied due to a reason such as a drop when the foldable electronic device 2 is in the unfolded state. For example, the hinge portion 24 may support the third display area 253 such that, when the foldable electronic device 2 is in the unfolded state, the third display area 253 can be arranged to be flat without sagging or with reduced sagging, thereby reducing a crease phenomenon.

According to various embodiments, the display area 250 of the first display module 25 may substantially provide the "front surface" in the exterior of the foldable electronic device 2. The front surface of the foldable electronic device 2 may include a first front surface area provided by the first display area 251, a second front surface area provided by the second display area 252, and a third surface area provided by the third display area 253. The illustrated coordinate axes are indicated based on the first housing 21, and the +z-axis direction may be defined or interpreted as a direction where the substantially flat first front surface area is oriented. When the foldable electronic device 2 is in the unfolded state, the front surface of the foldable electronic device 2 may be provided to be substantially flat.

According to various embodiments, the foldable electronic device 2 may be implemented in an infolding type in which the display area 250 of the first display module 25 (or the front surface of the foldable electronic device 2 where the display area 250 is visually visible) is foldable inward. FIG. 3 illustrates the fully folded state of the foldable electronic device 2 in which the first housing 21 and the second housing 22 are arranged such that the first and second housings cannot be folded any further. When the foldable electronic device 2 is in the fully folded state, the first display area 251 and the second display area 252 (or the first front surface area and the second front surface area) may face each other. When the foldable electronic device 2 is in the fully folded state, the third display area 253 may be arranged in a bent shape. In the fully folded state of the foldable electronic device 2, the angle between the first housing 21 and the second housing 22 (also referred to as the angle between the first display area 251 and the second display area 252 or the angle between the first front surface area and the second front surface area) may range from about 0 degrees to about 10 degrees, and the display area 250 may be substantially invisible. Although not illustrated separately, the intermediate state of the foldable electronic device 2 may be a state between the unfolded state and the fully folded state. In the intermediate state in which the angle between the first housing 21 and the second housing 22 is equal to or greater than a certain angle, a use environment in which a user does not have substantial difficulty in using the display area 250 may be provided. Hereinafter, the folded state of the foldable electronic device 2 refers to a completely folded state.

According to various embodiments, when the foldable electronic device 2 is viewed in the unfolded state, the display area 250 of the first display module 25 may be provided in a symmetrical shape with respect to the center line A of the foldable electronic device 2. The center line A of the foldable electronic device 2 may correspond to the center of the width of the third display area 253 extending from a first boundary between the first display area 251 and the third display area 253 to a second boundary between the second display area 251 and the third display area 253 when the foldable electronic device 2 is viewed in the unfolded state. The illustrated +x coordinate axis may be substantially perpendicular to the center line A, and the illustrated +y coordinate axis may be substantially parallel to the center line A. In the front surface of the foldable electronic device 2 provided by the first display area 251, the first front surface area provided by the first display area 251 may be substantially parallel to the x-y plane.

According to various embodiments, the center line A of the foldable electronic device 2 may be defined or interpreted as the "folding axis" of the foldable housing 20 or the foldable electronic device 2. The folding axis may be substantially provided (or formed) by the hinge unit 24.

According to various embodiments, the third display area 253 disposed in the bent form in the folded state of the foldable electronic device 2 may have a substantially symmetrical shape with respect to the center line A of the foldable electronic device 2. When viewing the foldable electronic device 2 in the unfolded state, the display area 25 of the first display module 25 may have a substantially rectangular shape.

According to various embodiments, the first housing 21 may include a first frame (also referred to as a first frame structure or a first framework) 211, and a first cover (also referred to as a first rear cover or a first back cover) 212 disposed on (or coupled to) the first frame 211. The combination of the first frame 211 and the first cover 212 may provide a first rear surface area and a first side surface area in the exterior of the foldable electronic device 2. The first frame 211 may provide at least a portion of the first side surface area of the foldable electronic device 2. The first cover 212 may provide at least a portion of the first rear surface area of the foldable electronic device 2. The first rear surface area may be oriented in a direction opposite to the first front surface area of the foldable electronic device 2 provided by the first display area 251 of the first display module 25.

According to various embodiments, the first frame 211 may include a first side part (also referred to as a first side surface portion, a first side member, a first side surface structure, or a first side surface bezel structure) 2112. The first side part 2112 may surround at least a portion of the space between the first display area 251 and the first cover 212, and may provide (or form) at least a portion of the first side surface area of the foldable electronic device 2.

According to various embodiments, the first frame 211 may include a first support portion 2111 extending from or connected to the first side part 2112. The first support portion 2111 is a structural element located inside the foldable electronic device 2 to correspond to the first housing 21 and may be referred to as various other terms, such as a "first bracket", a "first support plate", a "first supporter", a "first support member", or a "first support structure".

According to various embodiments, the first frame 211 may be provided as an integrated or single structure (e.g., a single continuous structure or complete structure) including the first support portion 2111 and the first side part 2112.

According to various embodiments, the first support portion 2111 may be at least partially located between the first display area 251 and the first cover 212. The first display area 251 may be disposed on the first support portion 2111, and the first support portion 2111 may support the first display area 251.

According to various embodiments, various electrical components (not illustrated separately), such as a printed circuit board or a battery, may be at least partially disposed on the first support portion 2111 of the first frame 211 between the first frame 211 and the first cover 212.

According to various embodiments, the second housing 22 may include a second frame (also referred to as a second frame structure or a second framework) 221, and/or a second cover (also referred to as a second rear cover or a second back cover) 222 disposed on the second frame 221. The combination of the second frame 221 and the second cover 222 may provide a second rear surface area and a second side surface area in the exterior of the foldable electronic device 2. The second frame 221 may provide at least a portion of the second side surface area of the foldable electronic device 2. The second cover 222 may provide at least a portion of the second rear surface area of the foldable electronic device 2. The second rear surface area may be oriented in a direction opposite to the second front surface area of the foldable electronic device 2 provided by the second display area 252.

According to various embodiments, the second frame 221 may include a second side part (also referred to as a second side surface portion, a second side member, a second side surface structure, or a second side surface bezel structure) 2212. The second side part 2212 may surround at least a portion of the space between the second display area 252 and the second cover 222, and may provide at least a portion of the second side surface area of the foldable electronic device 2.

According to various embodiments, the second frame 221 may include a second support portion 2211 extending from or connected to the second side part 2212. The second support portion 2211 is a structural element located inside the foldable electronic device 2 to correspond to the second housing 22 and may be referred to as various other terms, such as a "second bracket", a "second support plate", a "second supporter", a "second support member", or a "second support structure".

According to various embodiments, the second frame 221 may be provided as an integrated or single structure (e.g., a single continuous structure or complete structure) including the second support portion 2211 and the second side part 2212.

According to various embodiments, the second support portion 2211 may be at least partially located between the second display area 252 and the second cover 222. The second display area 252 may be disposed on the second support portion 2211, and the second support portion 2211 may support the second display area 252.

According to various embodiments, various electrical components (not illustrated separately), such as a printed circuit board or a battery, may be at least partially disposed on the second support portion 2211 of the second frame 221 between the second frame 221 and the second cover 222.

According to various embodiments, the first side part 2112 of the first frame 211 may include a first edge B1, a second edge B2, a third edge B3, and/or a fourth edge B4. The first edge B1 may extend in a direction perpendicular to the center line A of the foldable electronic device 2. The third edge B3 may be spaced apart from the first edge B1 in the direction of the center line A of the foldable electronic device 2, and may be substantially parallel to the first edge B1. The second edge B2 may connect or extend one end of the first edge B1 and one end of the third edge B3. The fourth edge B4 may connect or extend the other end of the first edge B1 and the other end of the third edge B3. The second edge B2 and the fourth edge B4 may be substantially parallel to each other. The fourth edge B4 may be located closer to the center line A of the foldable electronic device 2 than the second edge B2.

According to various embodiments, a first corner C1 where the first edge B1 and the second edge B2 are connected (or between the first edge B1 and the second edge B), and/or a second corner C2 where the second edge B2 and the third edge B3 are connected (or between the second edge B2 and the third edge B3) may be provided (or formed) in a smooth curved shape.

According to various embodiments, when viewed from above the first cover 212, the first edge B1, the second edge B2, the third edge B3, and the fourth edge B4 may surround the first cover 112.

According to various embodiments, the second side part 2212 of the second frame 221 may include a fifth edge B5, a sixth edge B6, a seventh edge B7, and/or an eighth edge B8. The fifth edge B5 may extend in a direction perpendicular to the center line A of the foldable electronic device 2. The seventh edge B7 may be spaced apart from the fifth edge B5 in the direction of the center line A of the foldable electronic device 2, and may be substantially parallel to the fifth edge B5. The sixth edge B6 may connect or extend one end of the fifth edge B5 and one end of the seventh edge B7. The eighth edge B8 may connect or extend the other end of the fifth edge B5 and the other end of the seventh edge B7. The sixth edge B6 and the eighth edge B8 may be substantially parallel to each other. The eighth edge B8 may be located closer to the center line A of the foldable electronic device 6 than the sixth edge B6.

According to various embodiments, a third corner C3 where the fifth edge B5 and the sixth edge B6 are connected (or between the fifth edge B5 and the sixth edge B6), and/or a fourth corner C4 where the sixth edge B6 and the seventh edge B7 are connected (or between the sixth edge B6 and the seventh edge B7) may be provided (or formed) in a smooth curved shape.

According to various embodiments, when viewed from above the second cover 222, the fifth edge B5, the sixth edge B6, the seventh edge B7, and the eighth edge B8 may surround the second cover 222.

According to various embodiments, in the folded state of the foldable electronic device 2, the first side part 2112 of the first frame 211 and the second side part 2212 of the second frame 221 may be aligned with each other. When viewed from above the first cover 212 or the second cover 222 (or in a direction orthogonal to the first cover 212 or the second cover 222) in the folded state of the foldable electronic device 2, the first side part 2112 and the second side part 2212 may extend to overlap each other. In the folded state of the foldable electronic device 2, the first edge B1 and the fifth edge B5 may be aligned with each other. When viewed from above the first cover 212 or the second cover 222 (or in a direction orthogonal to the first cover 212 or the second cover 222) in the folded state of the foldable electronic device 2, the first edge B1 and the fifth edge B5 may extend to overlap each other. In the folded state of the foldable electronic device 2, the second edge B2 and the sixth edge B6 may be aligned with each other. When viewed from above the first cover 212 or the second cover 222 (or in a direction orthogonal to the first cover 212 or the second cover 222) in the folded state of the foldable electronic device 2, the second edge B2 and the sixth edge B6 may extend to overlap each other. In the folded state of the foldable electronic device 2, the third edge B3 and the seventh edge B7 may be aligned with each other. When viewed from above the first cover 212 or the second cover 222 (or in a direction orthogonal to the first cover 212 or the second cover 222) in the folded state of the foldable electronic device 2, the third edge B3 and the seventh edge B7 may extend to overlap each other.

According to various embodiments, the fourth edge B4 and the eighth edge B8 may be located on opposite sides of the third display area 253. When viewed from above the front surface of the foldable electronic device 2 in the unfolded state, the fourth edge B4 and the eighth edge B8 may be invisible. For example, referring to the foldable electronic device 2 in the unfolded state, the surface area provided by the third display area 253, which is arranged to be substantially flat in the exterior of the foldable electronic device 2, may be oriented in the +z-axis direction, and the surface area provided by the fourth edge B4 and the eighth edge B8 in the exterior of the foldable electronic device 2 may be oriented in the -z-axis direction on the opposite side of the surface area provided by the third display area 253.

According to various embodiments, a hinge housing (or a hinge cover) 23 may include one or more hinge modules (e.g., a first hinge module 241, a second hinge module 242, and a third hinge module 243). The one or more hinge modules may connect the first support portion 2111 of the first frame 211 and the second support portion 2211 of the second frame 221.

According to various embodiments, when the foldable electronic device 2 is switched from the unfolded state to the folded state, the gap between the first frame 211 and the second frame 221 may open on the opposite side of the third display area 253 due to a change in the relative position between the first frame 211 and the second frame 221 connected to each other via the hinge portion 24 and a change in the state of the hinge portion 24 coupled with the hinge housing 23. The hinge housing 23 may be exposed to the outside through the open gap. In the folded state of the foldable electronic device 2, the hinge housing 23 may be exposed to the outside through an open gap between the fourth edge B4 and the eighth edge B8. The hinge housing 23 may be exposed to a greater extent in the folded state of the foldable electronic device 2 than in the intermediate state of the foldable electronic device 2. In the folded state of the foldable electronic device 2, the hinge housing 23 may be a portion of the exterior that covers the interior of the foldable electronic device 2. In the folded state of the foldable electronic device 2, the side surface of the foldable electronic device 2 may include a first side surface area provided by the first side part 2112 of the first frame 211, a second side surface area provided by the second side part 2212 of the second frame 221, and a third side surface area provided by the hinge housing 23.

According to various embodiments, when the foldable electronic device 2 is switched from the folded state to the unfolded state, the gap between the first frame 211 and the second frame 221 may be closed on the opposite side of the third display area 253 due to a change in the relative position between the first frame 211 and the second frame 221 connected to each other via the hinge portion 24 and a change in the state of the hinge portion 24 coupled with the hinge housing 23. The hinge housing 23 may not be exposed to the outside. In the unfolded state of the foldable electronic device 2, the gap between the fourth edge B4 and the eighth edge B8 may be closed, and the hinge housing 23 may not be exposed to the outside.

According to various embodiments, the first edge B1, the second edge B2, and the third edge B3 may be one side bezel (e.g., the first screen bezel) surrounding one side area of the first display module 25 with respect to the center line A of the foldable electronic device 2. The fifth edge B5, the sixth edge B6, and the seventh edge B7 may be the other side bezel (e.g., the second screen bezel) surrounding the other side area of the first display module 25 with respect to the center line A of the foldable electronic device 2.

According to various embodiments, the first frame 211 and/or the second frame 221 may be provided as a combination of a conductor (or a metal body) (not illustrated separately) including one or more conductive portions and a non-conductor (or a non-metal body) (not illustrated separately) including one or more non-conductive portions.

According to various embodiments, the first side part 2112 of the first frame 211 may include a first side metal part (also referred to as a first metal structure, a first side metal structure, a first side conductor, a first side conductive structure, a first outer metal structure, a first outer conductor, a first outer conductive structure, a first side surface metal part, a first side surface metal structure, a first side surface conductor, or a first side surface conductive structure) 2112E (see FIG. 5), and a first side non-metal part (also referred to as a first side non-metal structure, a first side non-conductor, a first side non-conductive structure, a first outer non-conductor, a first outer non-conductive structure, a first side surface non-metal part, a first side surface non-metal structure, a first side surface non-conductor, or a first side surface non-conductive structure) 2112F (see FIG. 5).

According to various embodiments, the first side metal part 2112E of the first side part 2112 (see FIG. 5) may include a plurality of metal portions (also referred to as outer metal portions, conductive portions, outer conductive portions, or side conductive portions) E1, E2, E3, E4, E5, or E6. The plurality of metal portions E1, E2, E3, E4, E5, or E6 of the first side metal part 2112E may include, for example, a first metal portion E1, a second metal portion E2, a third metal portion E3, a fourth metal portion E4, a fifth metal portion E5, and/or a sixth metal portion E6.

According to various embodiments, the first metal portion E1 may be located between the second metal portion E2 and the sixth metal portion E6. The first metal portion E1 may extend from one end adjacent to the second metal portion E2 to the other end adjacent to the sixth metal portion E6. The first metal portion E1 may provide (or form) a portion of the first edge B1.

According to various embodiments, the second metal portion E2 may be located between the first metal portion E1 and the third metal portion E3. The second metal portion E2 may extend from one end adjacent to the first metal portion E1 to the other end adjacent to the third metal portion E3. The second metal portion E2 may provide (or form) a first corner C1, a portion of the first edge B1 extending from the first corner C1, and a portion of the second edge B2 extending from the first corner C1.

According to various embodiments, the third metal portion E3 may be located between the second metal portion E2 and the fourth metal portion E4. The third metal portion E3 may extend from one end adjacent to the second metal portion E2 to the other end adjacent to the fourth metal portion E4. The third metal portion E3 may provide (or form) a portion of the second edge B2.

According to various embodiments, the fourth metal portion E4 may be located between the third metal portion E3 and the fifth metal portion E5. The fourth metal portion E4 may extend from one end adjacent to the third metal portion E3 to the other end adjacent to the fifth metal portion E5. The fourth metal portion E4 may provide (or form) a second corner C2, a portion of the second edge B2 extending from the second corner C2, and a portion of the third edge B3 extending from the second corner C2.

According to various embodiments, the fifth metal portion E5 may be located between the fourth metal portion E4 and the sixth metal portion E6. The fifth metal portion E5 may extend from one end adjacent to the fourth metal portion E4 to the other end adjacent to the sixth metal portion E6. The fifth metal portion E5 may provide (or form) a portion of the third edge B3.

According to various embodiments, the sixth metal portion E6 may be located between the fifth metal portion E5 and the first metal portion E1. The sixth metal portion E6 may extend from one end adjacent to the fifth metal portion E5 to the other end adjacent to the first metal portion E1. The sixth metal portion E6 may provide (or form) a fourth edge B4, a portion of the first edge B1 extending from one end of the fourth corner B4, and a portion of the third edge B3 extending from the other end of the fourth corner B4.

According to various embodiments, the first side metal part 2112F of the first side part 2112 (see FIG. 5) may include a plurality of non-metal portions (also referred to as outer non-metal portions, non-conductive portions, outer non-conductive portions, or side surface non-conductive portions, or insulating portions) F1, F2, F3, F4, F5, or F6. The plurality of non-metal portions F1, F2, F3, F4, F5, or F6 of the first side non-metal part 2112F may include, for example, a first non-metal portion F1, a second non-metal portion F2, a third non-metal portion F3, a fourth non-metal portion F4, a fifth non-metal portion F5, and/or a sixth non-metal portion F6.

According to various embodiments, the first non-metal portion F1 may be disposed in a first split portion (e.g., a first gap) between the first metal portion E1 and the second metal portion E2. The first metal portion E1 and the second metal portion E2 may be physically separated from each other with the first non-metal portion F1 interposed therebetween. The first non-metal portion F1 may provide (or form) a portion of the first edge B1.

According to various embodiments, the second non-metal portion F2 may be disposed in a second split portion (e.g., a second gap) between the second metal portion E2 and the second metal portion E3. The second metal portion E2 and the third metal portion E3 may be physically separated from each other with the second non-metal portion F2 interposed therebetween. The second non-metal portion F2 may provide (or form) a portion of the second edge B2.

According to various embodiments, the third non-metal portion F3 may be disposed in a third split portion (e.g., a third gap) between the third metal portion E3 and the fourth metal portion E4. The third metal portion E3 and the fourth metal portion E4 may be physically separated from each other with the third non-metal portion F3 interposed therebetween. The third non-metal portion F3 may provide (or form) a portion of the second edge B2.

According to various embodiments, the fourth non-metal portion F4 may be disposed in a fourth split portion (e.g., a fourth gap) between the fourth metal portion E4 and the fifth metal portion E5. The fourth metal portion E4 and the fifth metal portion E5 may be physically separated from each other with the fourth non-metal portion F4 interposed therebetween. The fourth non-metal portion F4 may provide (or form) a portion of the second edge B3.

According to various embodiments, the fifth non-metal portion F5 may be disposed in a fifth split portion (e.g., a fourth gap) between the fifth metal portion E5 and the sixth metal portion E6. The fifth metal portion E5 and the sixth metal portion E6 may be physically separated from each other with the fifth non-metal portion F5 interposed therebetween. The fifth non-metal portion F5 may provide (or form) a portion of the third edge B3.

According to various embodiments, the sixth non-metal portion F6 may be disposed in a sixth split portion (e.g., a sixth gap) between the sixth metal portion E6 and the first metal portion E1. The sixth metal portion E6 and the first metal portion E1 may be physically separated from each other with the sixth non-metal portion F6 interposed therebetween. The sixth non-metal portion F6 may provide (or form) a portion of the first edge B1.

According to various embodiments, although not illustrated separately, the number, locations, and/or shapes of the plurality of metal portions and/or the plurality of non-metal portions included in the first side part 2112 are not limited to the illustrated examples and may vary.

According to various embodiments, the first support portion 2111 of the first frame 211 may be provided (or formed) by a combination of a first inner metal part (not illustrated separately) and a first inner non-metal part (not illustrated separately). The first inner metal part may include a combination of one or more conductive portions. The first inner non-metal part may include a combination of one or more non-conductive portions. Some surface areas of first support portion 2111 may include a conductive surface area provided by the first inner metal part, and other partial surface areas of the first support portion 2111 may include a non-conductive surface area provided by the first inner non-metal part.

According to various embodiments, the first inner metal (not illustrated separately) of the first support portion 2111 may be connected to the first side metal part 2112E of the first side part 2112. For example, the first metal material included in the first inner metal part of the first support portion 2111 may be the same as or different from the second metal material included in the first side metal part 2112E.

According to various embodiments, an integrated or single metal part (or metal structure) (e.g., a single continuous structure or complete structure) including a first inner metal part (not illustrated separately) of the first support portion 2111 and a first side metal part 2112E of the first side part 2112 may be provided (or formed).

According to various embodiments, the first inner non-metal part (not illustrated separately) of the first support portion 2111 may be connected to the first side non-metal part 2112F of the first side part 2112. For example, the first non-metal material included in the first inner non-metal part may be the same as or different from the second non-metal material included in the first side non-metal part F.

According to various embodiments, an integrated or single non-metal part (or non-metal structure) (e.g., a single continuous structure or complete structure) including a first inner non-metal part (not illustrated separately) of the first support portion 2111 and a first side non-metal part 2112F of the first side part 2112 may be provided (or formed).

According to various embodiments, the second side part 2212 of the second frame 221 may include a second side metal part (also referred to as a second metal structure, a second side metal structure, a second side conductor, a second side conductive structure, a second outer metal structure, a second outer conductor, a second outer conductive structure, a second side surface metal part, a second side surface metal structure, a first second surface conductor, or a second side surface conductive structure) 2212E (see FIG. 5), and a second side non-metal part (also referred to as a second side non-metal structure, a second side non-conductor, a second side non-conductive structure, a second outer non-metal structure, a second outer non-conductor, a second outer non-conductive structure, a second side surface non-metal part, a second side surface non-metal structure, a second side surface non-conductor, or a second side surface non-conductive structure) 2212F. The second side metal part 2212E may include a plurality of metal portions (also referred to as outer metal portions, conductive portions, outer conductive portions, or side conductive portions) E7, E8, E9, E10, E11, and E12. The second side non-metal part 2212F may include a plurality of non-metal portions (also referred to as outer non-metal portions, non-conductive portions, outer non-conductive portions, side surface non-conductive portions, or insulating portions) F7, F8, F9, F10, F11, and F12. The plurality of metal portions E7, E8, E9, E10, E11, and E12 of the second side metal part 2212E may include, for example, a seventh metal portion E7, an eighth metal portion E8, a ninth metal portion E9, a tenth metal portion E10, an eleventh metal portion E11, and/or a twelfth metal portion E12. The plurality of non-metal portions F7, F8, F9, F10, F11, and F12 of the second side non-metal part 2212F may include, for example, a seventh non-metal portion F7, an eighth non-metal portion F8, a ninth non-metal portion F9, a tenth non-metal portion F10, an eleventh non-metal portion F11, and/or a twelfth non-metal portion F12.

According to various embodiments, in the folded state of the foldable electronic device 2, the first side metal part 2112E included in the first side part 2112 of the first frame 211 and the second side metal part 2212E included in the second side part 2212 of the second frame 221 may be aligned with each other. When viewed from above the first cover 212 or the second cover 222 (or in a direction orthogonal to the first cover 212 or the second cover 222) in the folded state of the foldable electronic device 2, the first side metal part 2112E and the second side metal part 2212E may extend to overlap each other. In various embodiments, in the folded state of the foldable electronic device 2, the plurality of metal portions E1, E2, E3, E4, E5, and E6 included in the first side part 2112 and the plurality of metal portions E7, E8, E9, E10, E11, and E12 included in the second side part 2212 may be aligned with each other. When viewed from above the first cover 212 or the second cover 222 (or in a direction orthogonal to the first cover 212 or the second cover 222) in the folded state of the foldable electronic device 2, the first metal portion E1 and the seventh metal portion E7 may extend to overlap each other. When viewed from above the first cover 212 or the second cover 222 (or in a direction orthogonal to the first cover 212 or the second cover 222) in the folded state of the foldable electronic device 2, the second metal portion E2 and the eighth metal portion E8 may extend to overlap each other. When viewed from above the first cover 212 or the second cover 222 (or in a direction orthogonal to the first cover 212 or the second cover 222) in the folded state of the foldable electronic device 2, the third metal portion E3 and the ninth metal portion E9 may extend to overlap each other. When viewed from above the first cover 212 or the second cover 222 (or in a direction orthogonal to the first cover 212 or the second cover 222) in the folded state of the foldable electronic device 2, the fourth metal portion E4 and the tenth metal portion E10 may extend to overlap each other. When viewed from above the first cover 212 or the second cover 222 (or in a direction orthogonal to the first cover 212 or the second cover 222) in the folded state of the foldable electronic device 2, the fifth metal portion E5 and the eleventh metal portion E11 may extend to overlap each other. When viewed from above the first cover 212 or the second cover 222 (or in a direction orthogonal to the first cover 212 or the second cover 222) in the folded state of the foldable electronic device 2, the sixth metal portion E6 and the twelfth metal portion E12 may extend to overlap each other. According to various embodiments, in the folded state of the foldable electronic device 2, the first side non-metal part 2112F included in the first side part 2112 of the first frame 211 and the second side non-metal part 2212F included in the second side part 2212 of the second frame 221 may be aligned with each other. In the folded state of the foldable electronic device 2, the plurality of non-metal portions F1, F2, F3, F4, F5, and F6 included in the first side part 2112 and the plurality of non-metal portions F7, F8, F9, F10, F11, and F12 included in the second side part 2212 may be aligned with each other, respectively. When viewed from above the first cover 212 or the second cover 222 (or in a direction orthogonal to the first cover 212 or the second cover 222) in the folded state of the foldable electronic device 2, the plurality of non-metal portions F1, F2, F3, F4, F5, and F6 included in the first side part 2112 and the plurality of non-metal portions F7, F8, F9, F10, F11, and F12 included in the second side part 2212 may overlap each other, respectively.

According to various embodiments, the second support portion 2211 of the second frame 221 may be implemented to be at least partially the same as or similar to the first support portion 2111 of the first frame 211. The second support portion 2211 may be provided (or formed) by a combination of a second inner metal part (not illustrated separately) and a second inner non-mental part (not illustrated separately).

According to various embodiments, the foldable electronic device 2 may include a ground structure (e.g., not illustrated separately). The ground structure may reduce or prevent electromagnetic interference (EMI) to a plurality of electrical elements included in the foldable electronic device 2. The ground structure of the foldable electronic device 2 may reduce or prevent the electromagnetic influence of noise from outside the foldable electronic device 2 on a plurality of electric components included in the foldable electronic device 2. The ground structure of the foldable electronic device 2 may reduce or prevent electromagnetic interference between the electric components included in the foldable electronic device 2. The ground structure of the foldable electronic device 2 may include, for example, a combination of a plurality of conductors electrically and/or physically connected to each other.

According to various embodiments, the ground structure of the foldable electronic device 2 may include a first inner metal part (not illustrated separately) of the first support portion 2111 and a second inner metal part (not illustrated separately) of the second support portion 2211.

According to various embodiments, the ground structure of the foldable electronic device 2 may include at least one ground plane included in at least one printed circuit board (not illustrated separately) disposed on the first support portion 2111. Through at least one flexible conductor (also referred to as a flexible conductive portion or flexible conductive member) (not illustrated separately) located between a first inner metal part (not illustrated separately) of the first support portion 2111 and the at least one printed circuit board (not illustrated separately) disposed on the first support portion 2111, the first inner metal part may be electrically connected to the at least one ground plane included in the at least one printed circuit board. The flexible conductor may include, for example, a conductive clip (e.g., a conductive structure including an elastic structure), a pogo-pin, a spring, conductive Poron, conductive sponge, conductive rubber, conductive tape, or a conductive connector.

According to various embodiments, the ground structure of the foldable electronic device 2 may include at least one ground plane included in at least one printed circuit board (not illustrated separately) disposed on the second support portion 2211. Through at least one flexible conductor located between a second inner metal part (not illustrated separately) of the second support portion 2211 and the at least one printed circuit board (not illustrated separately) disposed on the second support portion 2211, the second inner metal part may be electrically connected to the at least one ground plane included in the at least one printed circuit board.

According to various embodiments, the ground structure of the foldable electronic device 2 may include at least a portion of the first side metal part 2122E of the first side part 2112. For example, a portion of the first side metal part 2112 may be physically connected to the first inner metal part (not illustrated separately) of the first support portion 2111. For example, through the at least one flexible conductor located between the first side metal part 2112E and the at least one printed circuit board (not illustrated separately) disposed on the first support portion 2111, a portion of the first side metal part 2112E may be electrically connected to the at least one ground plane included in the at least one printed circuit board.

According to various embodiments, the ground structure of the foldable electronic device 2 may include at least a portion of the second side metal part 2122E of the second side part 2212. For example, a portion of the second side metal part 2112 may be physically connected to the second inner metal part (not illustrated separately) of the first support portion 2211. For example, through the at least one flexible conductor located between the second side metal part 2212E and the at least one printed circuit board (not illustrated separately) disposed on the second support portion 2211, a portion of the second side metal part 2212E may be electrically connected to the at least one ground plane included in the at least one printed circuit board.

According to various embodiments, the ground structure of the foldable electronic device 2 may include at least one conductive layer (e.g., a metal sheet for electromagnetic shielding such as a copper sheet) (not illustrated separately) included in the first display module 25. For example, through the first conductive member located between the first display module 25 and the first support portion 2111, at least one conductive layer included in the first display module 25 may be electrically connected to the first inner metal part (not illustrated separately) of the first support portion 2111. For example, through the second conductive member located between the first display module 25 and the second support portion 2211, at least one conductive layer included in the first display module 25 may be electrically connected to the second inner metal part (not illustrated separately) of the second support portion 2211. The first conductive member and/or the second conductive member may include a conductive adhesive material (or a conductive bonding material) or a flexible conductor (also referred to as a flexible conductive portion or a flexible conductive member).

According to various embodiments, the ground structure of the foldable electronic device 2 may include at least one conductive layer (e.g., a metal sheet for electromagnetic shielding such as a copper sheet) (not illustrated separately) included in the second display module 26. For example, through the third conductive member located between the second display module 26 and the second support portion 2211, at least one conductive layer included in the second display module 26 may be electrically connected to the second inner metal part (not illustrated separately) of the second support portion 2211. The third conductive member may include a conductive adhesive material (or a conductive bonding material) or a flexible conductor (also referred to as a flexible conductive portion or a flexible conductive member).

According to various embodiments, the ground structure of the foldable electronic device 2 may further include various other conductors or metal bodies (not illustrated separately).

According to various embodiments, at least one metal portion included in the first side part 2112 and/or at least one metal portion included in the second side part 2212 may be electrically connected to a wireless communication circuit (e.g., the wireless communication module 192 in FIG. 1) included in the foldable electronic device 2 and may operate as an antenna radiator. At least one metal portion included in the first side part 2112 and/or at least one metal portion included in the second side part 2212 may receive a signal (e.g., a feeding signal, an electromagnetic signal, a wireless signal, an RF signal, or a radiation current) from the wireless communication circuit and may emit electromagnetic waves.

According to various embodiments, the wireless communication circuit (e.g., the wireless communication module 192 in FIG. 1) of the foldable electronic device 2 may be configured to transmit a signal of at least one selected or predetermined frequency band to the outside of the foldable electronic device 2 through at least one metal portion included in the first side part 2111 and/or the at least one metal portion included in the second side part 2112. The wireless communication circuit may be configured to receive a signal of at least one selected or predetermined frequency band from the outside of the foldable electronic device 2 through at least one metal portion included in the first side part 2112 and/or at least one metal portion included in the second side part 2212.

According to various embodiments, the at least one selected or predetermined frequency band in which the wireless communication circuit (e.g., wireless communication module 192 of FIG. 1) of the foldable electronic device 2 processes the transmitted signal and/or the received signal may include at least one of a low band (LB) (about 600 megahertz (MHz) to about 1 gigahertz (GHz)), a middle band (MB) (about 1 GHz to about 2.3 GHz), a high band (HB) (about 2.3 GHz to about 2.7 GHz), or an ultra-high band (UHB) (about 2.7 GHz to about 6 GHz). The selected or predetermined frequency band may include various other frequency bands.

According to various embodiments, in the folded state of the foldable electronic device 2, when the plurality of non-metal portions F1, F2, F3, F4, F5, F6, and F7 included in the first side part 2112 and the plurality of non-metal portions included in the second side part 2212 are respectively aligned with each other, the degradation of antenna radiation performance may be reduced when the at least one metal portion included in the first side part 2112 and/or the at least one metal portion included in the second side 2212 is used as an antenna radiator.

According to various embodiments, the foldable electronic device 2 may include a first conductive area (not illustrated separately) and a second conductive area (not illustrated separately). The first conductive area and the second conductive area may be electrically connected to each other, or may be electrically and/or physically connected to each other. According to various embodiments of the disclosure, when the first conductive area is configured to substantially radiate electromagnetic waves, the first conductive area of the combination of the first conductive area and the second conductive area may be defined or interpreted as an antenna radiator, and the second conductive area of the combination of the first conductive area and the second conductive area may be defined or interpreted as a ground structure of the foldable electronic device 2 that is distinct from the antenna radiator. According to various embodiments of the disclosure, when the first conductive area is configured to substantially radiate electromagnetic waves, the combination of the first conductive area and the second conductive area may be defined or interpreted as a ground structure of the foldable electronic device 2, and the first conductive area may be defined or interpreted as an antenna radiator implemented through a portion of the ground structure of the foldable electronic device 2. According to various embodiments of the disclosure, when the first conductive area is configured to substantially radiate electromagnetic waves, the second conductive area may be configured as an antenna ground that electromagnetically affects the first conductive area (e.g., an antenna radiator). The antenna ground may contribute to securing antenna radiation performance (also referred to as radio wave transmission/reception performance or communication performance) and/or coverage relative to the antenna radiator. The antenna ground may reduce electromagnetic interference (EMI) or signal loss relative to the antenna radiator.

According to various embodiments, a portion of the ground structure (not illustrated separately) of the foldable electronic device 2 may be configured as antenna radiators. A portion of the ground structure of the foldable electronic device 2 may be electrically connected to a wireless communication circuit (e.g., the wireless communication module 192 of FIG. 1) of the foldable electronic device 2. A portion of the ground structure of the foldable electronic device 2 may receive (or may be fed with) a signal (e.g., a feeding signal, an electromagnetic signal, a wireless signal, an RF signal, or a radiation current) from the wireless communication circuit and may be operated as an antenna radiator (also referred to as a radiator, a radiating portion, or a resonator). Various conductive portions (also referred to as conductors, conductive areas, or conductive patterns) configured to radiate electromagnetic waves may be defined or interpreted as excluded from the ground structure of the foldable electronic device 2.

According to an embodiment, a portion of the ground structure (not illustrated separately) of the electronic device 2 may form an antenna ground that has an electromagnetic influence on at least one antenna radiator (not illustrated separately).

According to various embodiments, the second display module 26 may be located between the second cover 222 and the second support portion 2211 of the second frame 221. The second display module 26 may be disposed on or coupled to the second cover 222 and/or the second support portion 2211. The display area of the second display module 26 may be visually visible through the second cover 222.

According to various embodiments, the first camera module 301, the second camera module 302, the third camera module 303, the fourth camera module 304, and/or the fifth camera module 305 may include at least one lens, image sensor, and/or image signal processor (ISP).

According to various embodiments, the first camera module 301, the second camera module 302, and the third camera module 303 may be accommodated in the first housing 21 to correspond to the first cover 212 (or the first rear surface area of the foldable electronic device 2). For example, the first cover 212 may include a first camera hole (or a first light transmission area) corresponding to the first camera module 301, a second camera hole (or a second light transmission area) corresponding to the second camera module 302, and/or a third camera hole (or a third light transmission area) corresponding to the third camera module 303. The positions or number of camera modules accommodated in the first housing 21 to correspond to the first cover 212 may vary without being limited to the illustrated example.

According to various embodiments, the first camera module 301, the second camera module 302, or the third camera module 303 may include a wide-angle camera module, a telephoto camera module, a color camera module, a monochrome camera, or an IR camera (e.g., a time-of-flight (TOF) camera or a structured light camera module).

According to various embodiments, the first camera module 301, the second camera module 302, and the third camera module 303 may have different properties (e.g., angles of view) or functions.

According to various embodiments, the first camera module 301, the second camera module 302, or the third camera module 303 may provide different angles of view (or lenses with different angles of view). The foldable electronic device 2 may selectively use the angle of view of the first camera module 301, the second camera module 302, or the third camera module 303 based on a user's selection regarding the angle of view.

According to various embodiments, the fourth camera module 304 may be accommodated in the first housing 21 to correspond to the first front surface area of the foldable electronic device 2.

According to various embodiments, the fourth camera module 304 may overlap the first display area 251 of the first display module 25 when viewed from above the first front surface area of the foldable electronic device 2 (or in a direction orthogonal to the first front surface area). The fourth camera module 304 may be located on the rear surface of the first display area 351 or below the first display area 351. When viewed from the outside of the foldable electronic device 2, the fourth camera module 304 or the position of the fourth camera module 304 may not be substantially visually distinguished (or exposed). The fourth camera module 304 may include, for example, a hidden behind-display camera (e.g., an under-display camera (UDC)). External light may pass through the first display module 25 and reach the fourth camera module 304.

According to various embodiments, the illustrated embodiment may be modified such that the fourth camera module 304 is accommodated in the second housing 12 to correspond to the second front surface area of the foldable electronic device 2. In various embodiments, an additional camera module (not illustrated separately) may be accommodated in the second housing 22 to correspond to the second front surface area of the foldable electronic device 2.

According to various embodiments, the fifth camera module 305 may be accommodated in the second housing 22 to correspond to the second cover 222 (or the second rear surface area of the foldable electronic device 2).

According to various embodiments, the fifth camera module 305 may be located in alignment with an opening provided in the second display module 26 or may be at least partially inserted into the opening. External light may pass through the second cover 222 and the opening provided in the second display module 26 and reach the fifth camera module 305. The opening of the second display module 26 aligned with or overlapping the fifth camera module 305 may be a through hole. In various embodiments, an opening in the second display module 26 aligned with or overlapping the fifth camera module 305 may be provided as a notch (not illustrated separately).

According to various embodiments, the fifth camera module 305 may overlap the second display area 26 when viewed from above the second rear surface area of the foldable electronic device 2 (or in a direction orthogonal to the second rear surface area). The fifth camera module 305 may be located on the rear surface of the second display area 26 or below the second display area 26. When viewed from the outside of the foldable electronic device 2, the fifth camera module 305 or the position of the fifth camera module 305 may not be substantially visually distinguished (or exposed). The fifth camera module 305 may include, for example, a hidden behind-display rear camera (e.g., a UDC). External light may pass through the second cover 222 and the second display module 26 and reach the fifth camera module 305.

According to various embodiments, the first camera module 301, the second camera module 302, the third camera module 303, the fourth camera module 304, or the fifth camera module 305 may operate as at least a portion of a sensor module. For example, an IR camera module may operate as at least portion of a sensor module.

According to various embodiments, the light-emitting module 306 may be accommodated in the first housing 21 to correspond to the first cover 212 (or the first rear surface area of the foldable electronic device 2). The first cover 212 may include a flash hole (or a fourth light transmission area) corresponding to the light-emitting module 306. The light-emitting module 306 may include, for example, an LED or a xenon lamp. The light-emitting module 306 may include a light source for the first camera module 301, the second camera module 302, and/or the third camera module 303.

According to various embodiments, the foldable electronic device 2 may further include another light-emitting module (not illustrated separately) accommodated in the foldable housing 20 to correspond to the front surface of the foldable electronic device 2. The light-emitting module may provide, for example, the state information of the foldable electronic device 2 in an optical form. In various embodiments, the light-emitting module may provide a light source that operates in conjunction with the operation of the fourth camera module 304.

According to various embodiments, the sensor module 307 may be accommodated in the foldable housing 20 to correspond to the front surface of the foldable electronic device 2.

According to various embodiments, the sensor module 307 may include an optical sensor module. The optical sensor module may include, for example, a proximity sensor module or an illuminance sensor module.

According to various embodiments, the sensor module 307 may overlap the first display area 251 of the first display module 25 when viewed from above the first front surface area of the foldable electronic device 2 (or in a direction orthogonal to the first front surface area). The sensor module 307 may be located on the rear surface of the first display area 251 or below the first display area 251. When viewed from the outside of the foldable electronic device 2, the sensor module 307 or the position of the sensor module 307 may not be substantially visually distinguished (or exposed). External light may pass through the first display module 25 and reach the sensor module 307.

According to various embodiments, the foldable electronic device 2 may further include various other sensor modules (e.g., a biometric sensor modules) (not illustrated separately).

According to various embodiments, the first sound input module may include a first microphone (or a first mic) (not illustrated separately). The second sound input module may include a second microphone (or a second mic) (not illustrated separately). The third sound input module may include a third microphone (or a third mic) (not illustrated separately). The fourth sound input module may include a fourth microphone (or a fourth mic) (not illustrated separately). The first microphone may be accommodated in the first housing 21 to correspond to the first microphone hole H11 included in the first edge B1 of the first side part 2112. The second microphone may be accommodated in the second housing 21 to correspond to the second microphone hole H12 included in the third edge B3 of the first side part 2112. The third microphone may be accommodated in the first housing 21 to correspond to the third microphone hole H13 included in the third edge B3 of the first side part 2112. The fourth microphone may be accommodated in the second housing 22 to correspond to the fourth microphone hole H14 included in the seventh edge B7 of the second side part 2212. The positions or numbers of microphones and microphone holes corresponding to the microphones may vary without being limited to the illustrated example.

According to various embodiments, the first sound output module may include a first speaker (not illustrated separately). The second sound output module may include a second speaker (not illustrated separately). The first speaker or the second speaker may be a speaker for multimedia playback or recording playback. The first speaker may be accommodated in the second housing 22 to correspond to the first speaker hole H21 included in the second side part 2212. The second speaker may be accommodated in the second housing 22 to correspond to the second speaker hole H22 provided in the second side part 2212. The positions or numbers of speakers for multimedia playback or recording playback and speaker holes corresponding to the speakers may vary without being limited to the illustrated example.

According to an embodiment, the third sound output module may include a third speaker (not illustrated separately). The third speaker may include a call receiver. The third speaker may be accommodated in the first housing 21 to correspond to the third speaker hole H23 provided between the second cover 222 and the seventh edge B7 of the second side part 2212. The positions or numbers of call speakers and speaker holes corresponding to the speakers may vary without being limited to the illustrated example.

According to various embodiments, the key input module may include a first key (also referred to as a first side key) 309, a second key (also referred to as a second side key) 310, and/or a key signal generator (not illustrated separately). The first key 309 may be located in the first key hole included in the second edge B2 of the first side part 2112. The second key 310 may be located in the second key hole included in the second edge B2 of the first side part 2112. The key signal generator may be configured to generate a first key signal in response to a press or touch on the first key 309 and a second key signal in response to a press or touch on the second key 310. The positions or number of key input modules may vary without being limited to the illustrated example.

According to various embodiments, the first connection terminal 311 (also referred to as a first connector or a first interface terminal) may be accommodated in the first housing 21 to correspond to a first connection terminal hole (e.g., a first connector hole) included in the first edge B1 of the first side part 2112. The foldable electronic device 2 may transmit and/or receive power and/or data to/from an external electronic device electrically connected to the first connection terminal 311. The first connection terminal 311 may include, for example, a USB connector or an HDMI connector. The positions of the first connection terminal 311 and the first connection terminal hole corresponding to the first connection terminal 311 may vary without being limited to the illustrated example.

According to various embodiments, the second connection terminal 312 (also referred to as a second connector or a second interface terminal) may be accommodated in the second housing 22 to correspond to a second connection terminal hole (e.g., a second connector hole) included in the sixth edge B6 of the second side part 2112. An external storage medium such as a secure digital memory (SD) card, a SIM card, or a universal SIM (USIM) may be connected to the second connection terminal 312. The positions of the second connection terminal 312 and the second connection terminal hole corresponding to the second connection terminal 312 may vary without being limited to the illustrated example.

The foldable electronic device 2 may further include various components depending on its provided form. Although all of these components cannot be listed since the components are modified diversely depending on the convergence trend of foldable electronic devices 2, components equivalent to the above-mentioned components may be further included in the foldable electronic device 2. In various embodiments, certain components may be excluded from the above-described components or replaced with other components depending on the provided form of the electronic device. It is to be understood that all combinations of the features and/or embodiments mentioned above are conceived and included in the disclosure. That is, all of the combinations of the above-described features are to be considered as being included in the disclosure as specific examples.

Referring to the views below, various example circuit diagrams of the foldable electronic device 2 related to an antenna will be described. Any example circuit diagram may be interpreted as being included in the scope of various embodiments of the disclosure by changing or modifying at least some of the components of another example circuit diagram. Regarding the description of any one example circuit diagram, the same terms and/or the same reference numerals may be used for components that are at least partially identical or similar to or related to components of the other example circuit diagram. In any two example circuit diagrams, it may be understood that two components that have the same term but different reference numerals are substantially the same or have been changed or modified in their forms.

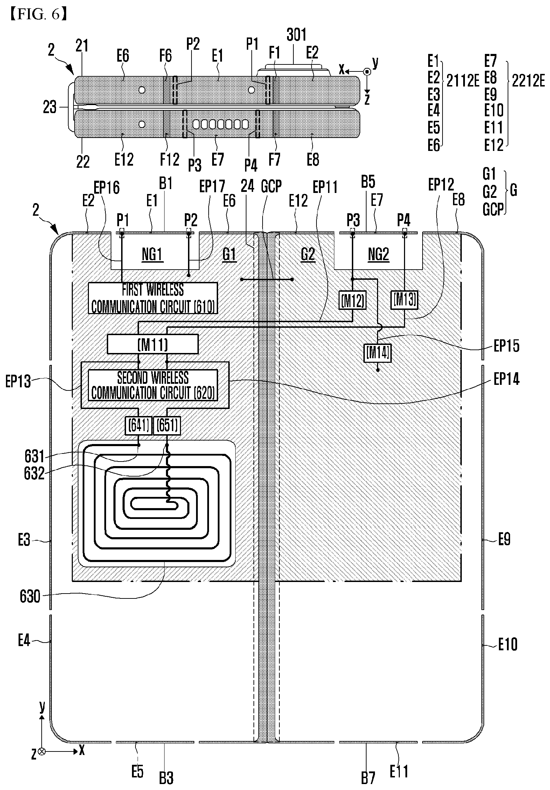

FIG. 6 is a diagram illustrating a example foldable electronic device 2 in the folded state and illustrates a portion of the foldable electronic device 2 in the unfolded state according to various embodiments. It is to be understood in the disclosure that all the combinations of features and/or embodiments disclosed with reference to FIG. 6 are conceived and included. For example, all of the combinations of features described below with reference to FIG. 6 are to be considered as being included in the disclosure as specific examples.

Referring to FIG. 6, the foldable electronic device 2 may include a first side metal part 2112E, a second side metal part 2212E, a first ground area G1, a second ground area G2, a first wireless communication circuit 610, a second wireless communication circuit 620, a first electrical path EP11, a second electrical path EP12, a third electrical path EP13, a fourth electrical path EP14, a fifth electrical path EP15, a sixth electrical path EP16, and/or a seventh electrical path EP17. Descriptions of some components of FIG. 6 that are indicated by the same reference numerals as those illustrated in FIGS. 2 to 5 may not be repeated here.

According to various embodiments, the first side metal part 2112E may include first to sixth metal portions E1, E2, E3, E4, E5, and E6. The second side metal part 2212E may include seventh to twelfth metal portions E7, E8, E9, E10, E11, and E12. For example, in the folded state of the foldable electronic device 2, the first to sixth metal portions E1, E2, E3, E4, E5, and E6 of the first side metal part 2112E and the seventh to twelfth metal portions E7, E8, E9, E10, E11, and E12 of the second side metal part 2212E may be aligned with each other, respectively.

According to various embodiments, in the folded state of the foldable electronic device 2, at least some of the first to sixth metal portions E1, E2, E3, E4, E5, and E6 of the first side metal part 2112E and at least some of the seventh to twelfth metal portions E7, E8, E9, E10, E11, and E12 of the second side metal part 2212E may be misaligned with each other.

According to various embodiments, when viewed from above the first cover 212 (see FIG. 3) (or in a direction orthogonal to the first cover 212) in the folded state of the foldable electronic device 2, at least some of the first to sixth metal portions E1, E2, E3, E4, E5, and E6 of the first side metal part 2112E and at least some of the seventh to twelfth metal portions E7, E8, E9, E10, E11, and E12 of the second side metal part 2212E may partially overlap each other.

According to various embodiments, the first ground area G1 may be a portion of the ground structure (not illustrated separately) of the foldable electronic device 2 located to correspond to the first housing 21. The first ground area G1 may include, for example, at least one ground plane included in the at least one printed circuit board (not illustrated separately) disposed on the first support portion 2111 (see FIG. 4), the first inner metal part (not illustrated separately) of the first support portion 2111 (see FIG. 4), and/or a combination of one or more other conductors (also referred to as conductive areas or conductive structures).

According to various embodiments, when viewed from above the first cover 212 (see FIG. 3) (or in a direction orthogonal to the first cover 212), the first ground area G1 may overlap the first cover 212 (or the first rear surface area of the foldable electronic device 2 or the first display area 251 in FIG. 2). When viewed from above the first cover 212 (see FIG. 3), the first ground area G1 may be located to be at least partially surrounded by the first side metal part 2112E.

According to various embodiments, at least one of the plurality of metal portions E1, E2, E3, E4, E5, and E6 included in the first side metal part 2112E may be electrically and/or physically connected to the first ground area G1.

According to various embodiments, at least one of the plurality of metal portions E1, E2, E3, E4, E5, and E6 included in the first side metal part 2112E may be physically separated from to the first ground area G1.

According to various embodiments, the second ground area G2 may be a portion of the ground structure (not illustrated separately) of the foldable electronic device 2 located to correspond to the second housing 22. The second ground area G2 may include, for example, at least one ground plane included in the at least one printed circuit board (not illustrated separately) disposed on the second support portion 2211 (see FIG. 4), the second inner metal part (not illustrated separately) of the second support portion 2211 (see FIG. 4), and/or a combination of one or more other conductors (also referred to as conductive areas or conductive structures).

According to various embodiments, when viewed from above the second cover 222 (see FIG. 3) (or in a direction orthogonal to the second cover 222), the second ground area G2 may overlap the second cover 222 (or the second rear surface area of the foldable electronic device 2 or the second display area 252 in FIG. 2). When viewed from above the second cover 222 (see FIG. 3), the second ground area G2 may be located to be at least partially surrounded by the second side metal part 2212E.

According to various embodiments, at least one of the plurality of metal portions E7, E8, E9, E10, E11, and E12 included in the second side metal part 2212E may be electrically and/or physically connected to the second ground area G2.

According to various embodiments, at least one of the plurality of metal portions E7, E8, E9, E10, E11, and E12 included in the second side metal part 2212E may be physically separated from to the second ground area G2.

According to various embodiments, when viewed from above the first cover 212 (see FIG. 3) or the second cover 222 (see FIG. 3) (or in a direction orthogonal to the first cover 212 or the second cover 222) in the folded state of the foldable electronic device 2, the first ground area and the second ground area may at least partially overlap each other.

According to various embodiments, the first ground area G1 and the second ground area G2 may be electrically connected through a ground connection path GCP. The ground connection path GCP may be disposed across the hinge portion 24. The ground connection path GCP may be a portion that electrically connects the first ground area G1 and the second ground area G2 of the ground structure of the foldable electronic device 2 (e.g., a connecting member, a connecting member, or a connecting structure). The ground connection path GCP may include a combination (not illustrated separately) of one or more conductive paths (or conductors or conductive structures) between the first ground area G1 and the second ground area G2.

According to various embodiments, at least a portion of the ground connection path GCP may be included in a flexible printed circuit board (not illustrated separately) disposed across the hinge portion 24.

According to various embodiments, the ground connection path GCP may include at least one hinge module (e.g., the first hinge module 241, the second hinge module 242, and /or the third hinge module 243 in FIG. 3) included in the hinge portion 24. For example, a first inner metal part (not illustrated separately) included in the first ground area G1 of the first support portion 2111 (see FIG. 4) and a second inner metal part (not illustrated separately) included in the second ground area G2 of the second support portion 2211 (see FIG. 4) may be electrically connected to each other through the at least one hinge module.

According to various embodiments, a combination of the first ground area G1, the second ground area G2, and the ground connection path GCP may operate as an antenna ground G.

According to various embodiments, the foldable electronic device 2 may include one or more first non-ground areas (also referred to as first non-conductive areas) where the first ground area G1 and the first side metal part 2112E are at least partially physically separated. The illustrated first non-ground area NG1 may be located to correspond to the first metal portion E1 as, for example, one of the first non-ground areas located in the first housing 21.

According to various embodiments, the one or more first non-ground areas located in the first housing 21 may include one or more first openings formed in the first ground area G1. In various embodiments, the one or more first non-ground areas may include a non-conductive material (not separately illustrated) disposed (e.g., filled) in the one or more openings. The non-conductive material disposed in the one or more first openings may, for example, be included in the first inner non-metal part (not separately illustrated) included in the first support portion 2111 (see FIG. 4).

According to various embodiments, the first non-ground area NG1 may be located corresponding to the first edge B1. For example, the first metal portion E1 may be physically separated from the first ground area G1 with the first non-ground area NG1 interposed therebetween. For example, the first non-ground area NG1 may include a first opening in the form of a notch formed in the first non-ground area NG1 to correspond to the first metal portion E1. The first non-ground area NG1 may include, for example, a non-conductive material disposed in the first opening.

According to various embodiments, the foldable electronic device 2 may include one or more second non-ground areas (also referred to as second non-conductive areas) where the second ground area G2 and the second side metal part 2212E are at least partially physically separated. The illustrated second non-ground area NG2 may be located to correspond to the seventh metal portion E7 as, for example, one of the second non-ground areas located in the second housing 22.

According to various embodiments, the one or more second non-ground areas located in the second housing 22 (see FIG. 2) may include one or more second openings formed in the second ground area G2. In various embodiments, the one or more second non-ground areas may include a non-conductive material (not illustrated separately) disposed (e.g., filled) in the one or more openings. The non-conductive material disposed in the one or more second openings may, for example, be included in the second inner non-metal part (not illustrated separately) included in the second support portion 2211 (see FIG. 4).

According to various embodiments, the second non-ground area NG2 may be located corresponding to the fifth edge B5. For example, the seventh metal portion E7 may be physically separated from the second ground area G2 with the second non-ground area NG2 interposed therebetween. For example, the second non-ground area NG2 may include a second opening in the form of a notch formed in the second non-ground area NG2 to correspond to the seventh metal portion E7. The second non-ground area NG2 may include, for example, a non-conductive material disposed in the second opening.

According to various embodiments, in the folded state of the foldable electronic device 2, the first non-ground area NG1 and the second non-ground area NG2 may be aligned with each other. For example, when viewed from above the first cover 212 (see FIG. 3) or the second cover 222 (see FIG. 3) (or in a direction orthogonal to the first cover 212 or the second cover 222) in the folded state of the foldable electronic device 2, the first non-ground area NG1 and the second non-ground area NG2 may overlap each other.

According to various embodiments, at least one of the first to sixth metal portions E1, E2, E3, E4, E5, and E6 of the first side metal part 2112E may be operated as an antenna radiator for transmitting and/or receiving a signal (also referred to as a wireless signal) of a frequency band (hereinafter, referred to as a non-NFC band) different from the NFC band.

According to various embodiments, the first to sixth metal portions E1, E2, E3, E4, E5, and E6 of the first side metal part 2112E may not be utilized as an NFC band antenna radiator.

According to various embodiments, among the first to sixth metal portions E1, E2, E3, E4, E5, and E6 of the first side metal part 2112E, those utilized as non-NFC band antenna radiators may overlap those utilized as NFC band antenna radiators among the seventh to twelfth metal portions E7, E8, E9, E10, E11, and E12 of the second side metal part 2212E when viewed from above the first cover 212 (see FIG. 3) or the second cover 222 (see FIG. 3) (or in a direction orthogonal to the first cover 212 or the second cover 222) in the folded state of the foldable electronic device 2.

According to various embodiments, the first wireless communication circuit 610 may be accommodated in the first housing 21. The first wireless communication circuit 610 may be disposed, for example, on a printed circuit board (not illustrated separately) disposed on the first support portion 2111 (see FIG. 4). The first wireless communication circuit 610 may be configured to transmit and/or receive a non-NFC band signal via at least one of the first to sixth metal portions E1, E2, E3, E4, E5, and E6 of the first side metal part 2112E. For example, the first wireless communication circuit 610 may be referred to as a "non-NFC wireless communication circuit".

According to various embodiments, the first wireless communication circuit 610 may be configured to transmit and/or receive an NFC band signal via the first metal portion E1.

According to various embodiments, the first contact portion P1 of the first metal portion E1 may be electrically connected to the first wireless communication circuit 610. The first contact portion P1 may be electrically connected to the first wireless communication circuit 610 through the sixth electrical path EP16. The sixth electrical path EP16 may be accommodated in the first housing 21. For example, the sixth electrical path EP16 may include a combination (not illustrated separately) of one or more conductive paths (also referred to as conductors or conductive structures) between the first contact portion P1 and the first wireless communication circuit 610.

According to various embodiments, the second contact portion P2 of the first metal portion E1 may be electrically connected to the first ground area G1. The second contact portion P2 may be electrically connected to the first ground area G1 via the seventh electrical path EP17. The second electrical path EP12 may be accommodated in the first housing 21. For example, the seventh electrical path EP17 may include a combination (not illustrated separately) of one or more conductive paths (or conductors or conductive structures) between the second contact portion P2 and the first ground area G1.

According to various embodiments, the first contact portion P1 of the first metal portion E1 may be located between the first non-metal portion F1 and the second contact portion P1. For example, the second contact portion P2 of the first metal portion E1 may be located between the sixth non-metal portion F6 and the first contact portion P1. For example, the second contact portion P2 may be located closer to the hinge portion 24 than the first contact portion P1.

According to various embodiments, although not illustrated separately, the first contact portion P1 may be located closer to the hinge portion 24 than the second contact portion P2.

According to various embodiments, the relative positions of the first contact portion P1 and/or the second contact portion P2 with respect to the first non-metal portion F1 and/or the sixth non-metal portion F6 are not limited to the illustrated example.

According to various embodiments, when the first wireless communication circuit 610 provides (or feeds) an electromagnetic signal (or a feeding signal, a wireless signal, an RF signal, or a radiated current) to the sixth electrical path EP16, a signal path may be formed through which the electromagnetic signal flows between the sixth electrical path EP16 and the seventh electrical path EP17 via the first metal portion E1.

According to various embodiments, a combination of the first metal portion E1 (e.g., a non-NFC antenna radiator), the sixth electrical path EP16, and the seventh electrical path EP17 may be defined or interpreted as a non-NFC antenna (also referred to as a non-NFC antenna structure) configured to radiate an electromagnetic field of a non-NFC band through the first metal portion E1 when fed with power from the first wireless communication circuit 610. In various embodiments, the non-NFC antenna may include at least one matching circuit for frequency tuning and/or impedance matching, or at least one filter, or a combination thereof.

According to various embodiments, at least one of the seventh to twelfth metal portions E7, E8, E9, E10, E11, and E12 of the second side metal part 2212E may be configured to operate as an antenna radiator configured to transmit and/or receive an NFC band signal (also referred to as a wireless signal).

According to various embodiments, among the seventh to twelfth metal portions E7, E8, E9, E10, E11, and E12 of the second side metal part 2212E, those utilized as an NFC band antenna radiator may overlap those utilized as a non-NFC band antenna radiator among the first to sixth metal portions E1, E2, E3, E4, E5, and E6 of the first side metal part 2112E in the folded state of the foldable electronic device 2.

According to various embodiments, the second wireless communication circuit 620 may be accommodated in the first housing 21. The second wireless communication circuit 620 may be disposed, for example, on the printed circuit board (not illustrated separately) disposed on the first support portion 2111 (see FIG. 4). The second wireless communication circuit 620 may be configured to transmit and/or receive a non-NFC band signal via at least one of the seventh to twelfth metal portions E7, E8, E9, E10, E11, and E12 of the second side metal part 2212E. For example, the second wireless communication circuit 620 may be referred to as an "NFC wireless communication circuit".

According to various embodiments, the second wireless communication circuit 620 may be configured to transmit and/or receive an NFC band signal via the seventh metal portion E7.

According to various embodiments, in the folded state of the foldable electronic device 2, the seventh metal portion E7 operating as an NFC band antenna radiator may overlap the first metal portion E1 operating as a non-NFC band antenna radiator.

According to various embodiments, the third contact portion P3 and the fourth contact portion P4 of the seventh metal portion E7 may be electrically connected to the second wireless communication circuit 620. For example, the third contact portion P3 may be located between the twelfth non-metal portion F12 and the fourth contact portion P4. For example, the fourth contact portion P4 may be located between the seventh non-metal portion F7 and the third contact portion P3. For example, the third contact portion P3 may be located closer to the hinge portion 24 than the fourth contact portion P4.

According to various embodiments, the relative positions of the third contact portion P3 and/or the fourth contact portion P4 with respect to the seventh non-metal portion F7 and/or the twelfth non-metal portion F12 are not limited to the illustrated example.

According to various embodiments, the third contact portion P3 may be electrically connected to the second wireless communication circuit 620 via the first electrical path EP11. The first electrical path EP11 may be disposed across the hinge portion 24. For example, the first electrical path EP11 may include a combination (not illustrated separately) of one or more conductive paths (also referred to as conductors or conductive structures) between the third contact portion P3 and the second wireless communication circuit 620.

According to various embodiments, the fourth contact portion P4 may be electrically connected to the second wireless communication circuit 620 via the second electrical path EP12. The second electrical path EP12 may be disposed across the hinge portion 24. The second electrical path EP12 may include a combination (not illustrated separately) of one or more conductive paths (also referred to as conductors or conductive structures) between the fourth contact portion P4 and the second wireless communication circuit 620.

According to various embodiments, the foldable electronic device 2 may include a flexible printed circuit board (not illustrated separately) extending from the first housing 21 to the second housing 22 across the hinge portion 24. The flexible printed circuit board may include, for example, a conductive line included in the first electrical path EP11 and a conductive line included in the second electrical path EP12.

According to various embodiments, the second wireless communication circuit 620 may provide first feeding and second feeding to the seventh metal portion E7. The second wireless communication circuit 620 may provide the first feeding through the first electrical path EP11 and the second feeding through the second electrical path EP12. Voltages (also called feeding voltages) of opposite polarities (+ voltage (e.g., positive voltage) and - voltage (e.g., negative voltage)) may be provided to the seventh metal portion E7 through the first feeding and the second feeding. For example, the + voltage (also called a first feeding voltage or a first feeding signal) may be provided to the third contact portion P3 of the seventh metal portion E7 through the first electrical path EP11 by the first feeding, and the - voltage (also called a second feeding voltage or a second feeding signal) may be provided to the fourth contact portion P4 of the seventh metal portion E7 through the second electrical path EP12 by the second feeding. For example, the - voltage may be provided to the third contact portion P3 of the seventh metal portion E7 through the first electrical path EP11 by the first feeding, and the + voltage may be provided to the fourth contact portion P4 of the seventh metal portion E7 through the second electrical path EP12 by the second feeding. The feeding of + voltage and - voltage from the second wireless communication circuit 620 can be interpreted as "differential feeding".

According to various embodiments, during feeding from the second wireless communication circuit 620, a first current path (also referred to as a first signal path or a first loop) may be formed through which a current (also referred to as a radiated current) flows between the first electrical path EP11 and the second electrical path EP12 through the seventh metal portion E7 due to a potential difference between the third contact portion P3 and the fourth contact portion P4 of the seventh metal portion E7. The distribution of current along the first current path may form a first electromagnetic field (or a first magnetic field distribution) through the seventh metal portion E7. The second wireless communication circuit 620 may be configured to transmit and/or receive an NFC band signal via the first electromagnetic field radiated (or formed or generated) through the seventh metal portion E7.

According to various embodiments, a combination of the seventh metal portion (e.g., the first NFC antenna radiator) E7, the first electrical path EP11, and the second electrical path EP12 may be interpreted as a first NFC antenna (also referred to as a first NFC antenna structure) configured to radiate a first electromagnetic field of an NFC band through the seventh metal portion E7 during feeding from the second wireless communication circuit 620. For example, the first NFC antenna may include at least one matching circuit for frequency tuning, inductance value tuning, and/or impedance matching, or at least one filter, or a combination thereof.

According to various embodiments, during feeding from the second wireless communication circuit 620 in the unfolded state of the foldable electronic device 2, the electromagnetic force of the first electromagnetic field radiated through the seventh metal portion E7 may pass through the second non-ground area NG2 between the seventh metal portion E7 and the second ground area G2. In the unfolded state of the foldable electronic device 2, the second non-ground area NG2 may suppress the magnetic flux of the first electromagnetic field radiated through the seventh metal portion E7 from being reduced by the second ground area G2, thereby suppressing the deterioration of the antenna radiation performance for the NFC band. When the magnetic flux reduction by the second non-ground area NG2 is suppressed is in the folded state of the foldable electronic device 2, the energy of the first electromagnetic field increases due to the increase in inductance value, so that the antenna radiation performance for the NFC band may be ensured and/or improved.

According to various embodiments, during feeding from the second wireless communication circuit 620 in the folded state of the foldable electronic device 2, the electromagnetic force of the first electromagnetic field radiated through the seventh metal portion E7 may pass through the first non-ground area NG1 and the second non-ground area NG2, which are aligned with each other. Since the electromagnetic force of the first electromagnetic field radiated through the seventh metal portion E7 passes through the first non-ground area NG1 and the second non-ground area NG2, which are aligned with each other, the reduction in magnetic flux by the first non-ground area NG1 and the second non-ground area NG2 may be suppressed. When the reduction in magnetic flux by the first non-ground area NG1 and the second non-ground area NG2 is suppressed, the energy of the first electromagnetic field may increase due to the increase in inductance value, so that the antenna radiation performance for the NFC band can be ensured and/or improved.

According to various embodiments, since the first metal portion E1 and the seventh metal portion E7 are brought close to each other and aligned in the folded state of the foldable electronic device 2, in order to suppress or prevent the deterioration in the antenna radiation performance of the non-NFC antenna, which is configured to radiate an electromagnetic field in the non-NFC band through the first metal portion E1, and/or the antenna radiation performance of the first NFC antenna, which is configured to radiate a first electromagnetic field in the NFC band through the seventh metal portion E7, the first contact portion P1 of the first metal portion E1 may be misaligned with the fourth contact portion P4 of the seventh metal portion E7. In various embodiments, when viewed from above the first cover 212 (see FIG. 3) or the second cover 222 (see FIG. 3) (or in a direction orthogonal to the first cover 212 or the second cover 222) in the folded state of the foldable electronic device 2, the first contact portion P1 and the fourth contact portion P4 may not overlap each other. In various embodiments, when viewed from above the first cover 212 (see FIG. 3) or the second cover 222 (see FIG. 3) (or in a direction orthogonal to the first cover 212 or the second cover 222) in the folded state of the foldable electronic device 2, the first contact portion P1 and/or the second contact portion P2 may not overlap the third contact portion P3 and/or the fourth contact portion P4.

According to various embodiments, during feeding from the first wireless communication circuit 610, the density of the radiation current in the first metal portion E1 may be relatively high in the first contact portion P1 and the second contact portion P2. During feeding from the second wireless communication circuit 620, the density of the radiation current in the seventh metal portion E7 may be relatively high in the third contact portion P3 and the fourth contact portion P4. In order to reduce the electromagnetic influence between at least a portion of the first metal portion E1 having a relatively high density of radiation current during feeding from the first wireless communication circuit 610 and at least a portion of the seventh metal portion E7 having a relatively high density of radiation current during feeding from the second wireless communication circuit 620, the first contact portion P1 and/or the second contact portion P2 of the first metal portion E1 may be misaligned with the third contact portion P3 and/or the fourth contact portion P4 of the seventh metal portion E7 in the folded state of the foldable electronic device 2.

According to various embodiments, the foldable electronic device 2 may include a coil-shaped conductive pattern (also referred to as a spiral conductive pattern) 630 accommodated in the first housing 21. For example, the coil-shaped conductive pattern 630 may include a flat coil (e.g., a flat coil or a pattern coil) extending from a first end 631 to a second end 632 and including a plurality of turns.

According to various embodiments, the foldable electronic device 2 may include a flexible printed circuit board (not illustrated separately) having the coil-shaped conductive pattern 630.

According to various embodiments, the coil-shaped conductive pattern 630 may be accommodated in the first housing 21 to correspond to the first rear surface area of the foldable electronic device 2. The coil-shaped conductive pattern 630 may be located between the first cover (e.g., the first rear cover or the first back cover) 212 (see FIG. 2) and the first support portion 2111 (see FIG. 4). For example, when viewed from above the first cover 212 (see FIG. 2) (or in a direction orthogonal to the first cover 212), the coil-shaped conductive pattern 630 may overlap the first cover 212 and a battery (not illustrated separately) disposed on the first support portion 2111 (FIG. 4).

According to various embodiments, the second wireless communication circuit 620 may be configured to transmit and/or receive an NFC band signal via the coil-shaped conductive pattern 630.

According to various embodiments, the seventh metal portion E7 and the coil-shaped conductive pattern 630 may be fed with power in parallel from the second wireless communication circuit 620.

According to various embodiments, the first end (also referred to as a first terminal) 631 of the coil-shaped conductive pattern 630 may be electrically connected to the first electrical path EP11 via the third electrical path EP13. The third electrical path EP13 may be accommodated in the first housing 21. For example, the third electrical path EP13 may include a combination (not illustrated separately) of one or more conductive paths (or conductors or conductive structures) between the first end 631 of the coil-shaped conductive pattern 630 and a point on the first electrical path EP11.

According to various embodiments, the second end (also referred to as a second terminal) 632 of the coil-shaped conductive pattern 630 may be electrically connected to the second electrical path EP12 via the fourth electrical path EP14. The fourth electrical path EP14 may be accommodated in the first housing 21. For example, the fourth electrical path EP14 may include a combination (not illustrated) of one or more conductive paths (or conductors or conductive structures) between the second end 632 of the coil-shaped conductive pattern 630 and a point on the fourth electrical path EP14.

According to various embodiments, the first feeding (e.g., + voltage feeding) from the second wireless communication circuit 620 may be provided to the third contact portion P3 of the seventh metal portion E7 via the first electrical path EP11 and provided to the first end 631 of the coil-shaped conductive pattern 630 via the third electrical path EP13. The second feeding (e.g., + voltage feeding) from the second wireless communication circuit 620 may be provided to the fourth contact portion P4 of the seventh metal portion E7 via the second electrical path EP12 and provided to the second end 632 of the coil-shaped conductive pattern 630 via the fourth electrical path EP14.

According to various embodiments, during feeding from the second wireless communication circuit 620, a second current path (also referred to as a second signal path or a second loop) may be formed in which a current (also referred to as a radiated current) flows between the third electrical path EP13 and the fourth electrical path EP14 through the coil-shaped conductive pattern 630 due to a potential difference between the first end 631 and the second end 632 of the coil-shaped conductive pattern 630. The current distribution along the second current path may form a second electromagnetic field (or a second magnetic field distribution) through the coil-shaped conductive pattern 630. The second wireless communication circuit 620 may be configured to transmit and/or receive an NFC band signal via the second electromagnetic field radiated (or formed or generated) through the coil-shaped conductive pattern 630.

According to various embodiments, a combination of the coil-shaped conductive pattern (e.g., the second NFC antenna radiator) 630, the third electrical path EP13, and the fourth electrical path EP14 may be interpreted as a second NFC antenna (also referred to as a second NFC antenna structure) configured to radiate a second electromagnetic field of the NFC band through the coil-shaped conductive pattern 630 during feeding from the second wireless communication circuit 620. For example, the second NFC antenna may include at least one matching circuit for frequency tuning, inductance value tuning, and/or impedance matching, or at least one filter, or a combination thereof.

According to various embodiments, during feeding from the second wireless communication circuit 620, the first electromagnetic field radiated from the seventh metal portion E7 may be less likely to be included in the grip position of the user's hand for the foldable electronic device 2 in the unfolded or folded state, compared to the second electromagnetic field radiated from the coil-shaped conductive pattern 630. The first electromagnetic field radiated from the seventh metal portion E7 may reduce restrictions on the grip position of the user's hand for the foldable electronic device 2 in the unfolded or folded state, and may reduce the possibility that the radiation performance is deteriorated by the user's hand (e.g., dielectric). The foldable electronic device 2 according to the disclosure not only provides the second electromagnetic field of the NFC band through the coil-shaped conductive pattern 630, but also further provides the first electromagnetic field of the NFC band through the seventh metal part E7, thereby allowing the NFC recognition area for an external electronic device to be expanded through a relatively further expanded electromagnetic field distribution.

According to various embodiments, the foldable electronic device 2 may include a first matching circuit M11 accommodated in the first housing 21. For example, the first matching circuit M11 may be disposed on a printed circuit board (not illustrated separately) accommodated in the first housing 21. The first matching circuit M11 may be disposed on the first electrical path EP11 and/or the second electrical path EP12 or electrically connected to the first electrical path EP11 and/or the second electrical path EP12.

According to various embodiments, the foldable electronic device 2 may include a second matching circuit M12 and/or a third matching circuit M13 accommodated in the second housing 22. For example, the second matching circuit M12 and/or the third matching circuit M13 may be disposed on a printed circuit board (not illustrated separately) accommodated in the second housing 22. The second matching circuit M12 may be disposed on the first electrical path EP11 or electrically connected to the first electrical path EP11. The third matching circuit M13 may be disposed on the second electrical path EP12 or electrically connected to the second electrical path EP12.

According to various embodiments, the first matching circuit M11, the second matching circuit M12, and/or the third matching circuit M13 may be configured to perform frequency tuning. The first matching circuit M11, the second matching circuit M12, and/or the third matching circuit M13 may shift the resonance frequency of the seventh metal portion E7 to a predetermined frequency, or shift the resonance frequency by a predetermined amount. Due to the frequency tuning by the first matching circuit M11, the second matching circuit M12, and/or the third matching circuit M13, the first electromagnetic field radiated from the seventh metal portion E7 may have a resonance frequency of about 13.56 MHz for NFC during feeding from the second wireless communication circuit 620.

According to various embodiments, the first matching circuit M11, the second matching circuit M12, and/or the third matching circuit M13 may be configured to tune an inductance value. For example, due to the inductance value tuning by the first matching circuit M11, the second matching circuit M12, and/or the third matching circuit M13, the first electromagnetic field radiated from the seventh metal portion E7 may have an inductance value of about 8 to about 10 microhenry for about 13.56 MHz for NFC during feeding from the second wireless communication circuit 620.

According to various embodiments, the first matching circuit M11, the second matching circuit M12, and/or the third matching circuit M13 may provide (or form) impedance matching. Due to the impedance matching by the first matching circuit M11, the second matching circuit M12, and/or the third matching circuit M13, transmission loss for the first NFC antenna configured to radiate a first electromagnetic field of the NFC band through the seventh metal portion E7 may be reduced during feeding from the second wireless communication circuit 620.

According to various embodiments, the first matching circuit M11, the second matching circuit M12, and/or the third matching circuit M13 may include electrical elements having a component such as inductance, capacitance, or conductance. The first matching circuit M11, the second matching circuit M12, and/or the third matching circuit M13 may include various elements, such as a lumped element or a passive element.

According to various embodiments, the second matching circuit M12 may include a first inductor.

According to various embodiments, the third matching circuit M13 may include a second inductor.

According to various embodiments, the positions or number of matching circuits included in the first NFC antenna configured to radiate the first electromagnetic field of the NFC band through the seventh metal portion E7 are not limited to the illustrated example.

According to various embodiments, the foldable electronic device 2 may include a first filter (also referred to as a first filter circuit) 641 and/or a second filter (also referred to as a second filter circuit) 651 accommodated in the first housing 21. For example, the first filter 641 and/or the second filter 651 may be disposed on a printed circuit board (not illustrated separately) accommodated in the first housing 21. The first filter 641 may be disposed on the third electrical path EP13 or electrically connected to the third electrical path EP13. The second filter 651 may be disposed on the fourth electrical path EP14 or electrically connected to the fourth electrical path EP14. In the folded state of the foldable electronic device 2, the first filter 641 and/or the second filter 651 may suppress or block the transmission of a frequency of the non-NFC band, or a frequency of a higher frequency band than the NFC band, to the second NFC antenna configured to radiate the second electromagnetic field of the NFC band through the coil-shaped conductive pattern 630. In various embodiments, in the folded state of the foldable electronic device 2, the first filter 641 and/or the second filter 651 may reduce or prevent the second NFC antenna, which is configured to radiate the second electromagnetic field of the NFC band through the coil-shaped conductive pattern 630, from being electromagnetically affected by the non-NFC antenna, which is configured to radiate an electromagnetic field of the non-NFC band through the first metal portion E1. The first filter 641 and/or the second filter 651 may separate the non-NFC band of the non-NFC antenna and the NFC band of the second NFC antenna. For example, the first filter 641 may be referred to as a "first RF choke", and the second filter 651 may be referred to as a "second RF choke".

According to various embodiments, the first NFC antenna configured to radiate the first electromagnetic field of the NFC band through the seventh metal portion E7 may further include at least one third filter (not illustrated separately) to reduce or prevent the first NFC antenna from being electromagnetically affected by the non-NFC antenna configured to radiate an electromagnetic field of the non-NFC band through the first metal portion E1.

According to various embodiments, the second matching circuit M12 (e.g., the first inductor) and/or the third matching circuit M13 (e.g., the second inductor) may at least influence separating the NFC band of the first NFC antenna from the non-NFC band of the Non-NFC antenna.

According to various embodiments, the foldable electronic device 2 may further include at least one EMI filter (not illustrated separately). At least one EMI filter may be disposed, for example, on a printed circuit board (not illustrated separately) accommodated in the first housing 21 or the second housing 22. The at least one EMI filter may be disposed, for example, on the first electrical path EP11 and/or the second electrical path EP12 or electrically connected to the first electrical path EP11 and/or the second electrical path EP12. The EMI filter may reduce or block noise affecting an NFC band signal.

According to various embodiments, the foldable electronic device 2 may further include a fourth matching circuit M14 accommodated in the second housing 22. The fourth matching circuit M14 may be disposed on a printed circuit board (not illustrated separately) accommodated in the second housing 22. The fourth matching circuit M14 may reduce or prevent the first NFC antenna, which is configured to radiate the first electromagnetic field in the NFC band through the seventh metal portion E7, having an electromagnetic influence (e.g., EMI) on the non-NFC antenna, which is configured to radiate the electromagnetic field of the non-NFC band through the first metal portion E1. The fourth matching circuit M14 may reduce or prevent a shift in resonance frequency and/or impedance mismatching for the non-NFC antenna from occurring due to the alignment of the first metal portion E1 and the seventh metal portion E7 with each other in the folded state of the foldable electronic device 2.

According to various embodiments, the fourth matching circuit M14 may be electrically connected to the first NFC antenna, which is configured to radiate the first electromagnetic field of the NFC band through the seventh metal portion E7, such that, in the folded state of the foldable electronic device 2, the fourth matching circuit M14 has an electromagnetic influence on the non-NFC antenna, which is configured to radiate the electromagnetic field of the Non-NFC band through the first metal portion E1. The fourth matching circuit M14 may be interpreted separately from the first NFC antenna.

According to various embodiments, the foldable electronic device 2 may include a fifth electrical path EP15 electrically connecting the first electrical path EP11 and the second ground area G2. For example, the fourth matching circuit M14 may be disposed on the fifth electrical path EP15 or electrically connected to the fifth electrical path EP15.

According to various embodiments, although not illustrated separately, the fourth matching circuit M14 may be disposed on the eighth electrical path electrically connecting the second electrical path EP12 and the second ground area G2 or electrically connected to the eighth electrical path.

According to various embodiments, the fourth matching circuit M14 may be provided as a switch circuit including at least one switch, a tuner, or a combination thereof. The fourth matching circuit M14 may be controlled depending on whether the foldable electronic device 2 is in the unfolded state or the folded state. In various embodiments, under the control of a processor (e.g., the processor 120 in FIG. 1) included in the foldable electronic device 2, the fourth matching circuit M14 may tune a time constant value. In various embodiments, under the control of the processor included in the foldable electronic device 2, the fourth matching circuit M14 may electrically connect or disconnect the first electrical path EP11 and the second ground area G2.

According to various embodiments, the fourth matching circuit M14 may reduce the difference between the antenna radiation performance of the non-NFC antenna configured to radiate the electromagnetic field of the non-NFC band through the first metal portion E1 in the unfolded state of the foldable electronic device 2 and the antenna radiation performance of the non-NFC antenna in the unfolded state of the foldable electronic device 2.

According to various embodiments, the foldable electronic device 2 may further include a fifth matching circuit (not illustrated separately) accommodated in the first housing 21 to perform at least partially the same role as the fourth matching circuit M14. For example, the fifth matching circuit may be disposed on the sixth electrical path EP16 and/or the seventh electrical path EP17 or electrically connected to the sixth electrical path EP16 and/or the seventh electrical path EP17, but is not limited thereto.

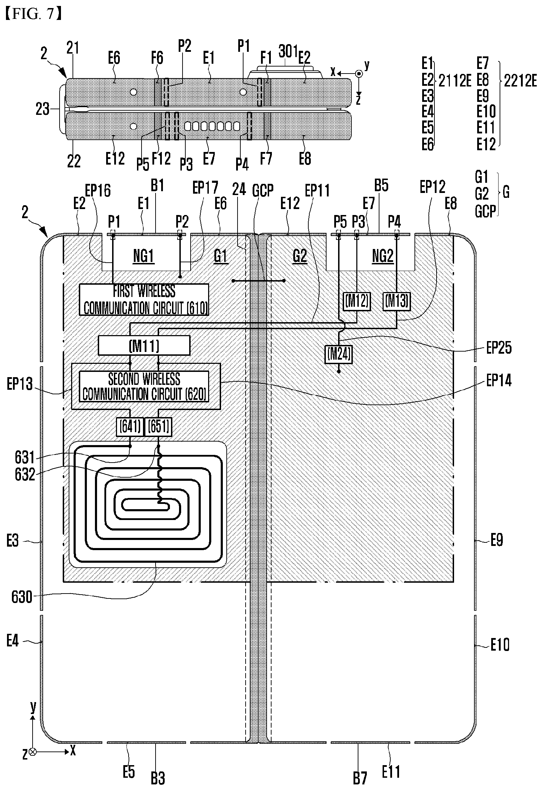

FIG. 7 is a diagram illustrating a foldable electronic device 2 in the folded state and illustrates a portion of the foldable electronic device 2 in the unfolded state according to various embodiments. It is to be understood that the disclosure conceives and includes all of the combinations of features and/or embodiments disclosed with reference to FIG. 7. For example, all of the combinations of features described below with reference to FIG. 7 are to be considered as being included in the disclosure as specific examples.

Referring to FIG. 7, the foldable electronic device 2 may include a first side metal part 2112E, a second side metal part 2212E, a coil-shaped conductive pattern 630, a first ground area G1, a second ground area G2, a first wireless communication circuit 610, a second wireless communication circuit 620, a first electrical path EP11, a second electrical path EP12, a third electrical path EP13, a fourth electrical path EP14, a fifth electrical path EP25, a sixth electrical path EP16, a seventh electrical path EP17, a first matching circuit M11, a second matching circuit M12, a third matching circuit M13, a fourth matching circuit M24, a first filter 641, and/or a second filter 651. Descriptions of some components of FIG. 7 that are indicated by the same reference numerals as those illustrated in FIGS. 2 to 6 may not be repeated here.

According to various embodiments, the fifth electrical path EP25 may electrically connect the fifth contact portion P5 of the seventh metal portion E7 and the second ground area G2. The fourth matching circuit M24 may be disposed on the fifth electrical path EP25 or electrically connected to the fifth electrical path EP25.

According to various embodiments, the fourth matching circuit M24 may reduce or prevent the first NFC antenna, which is configured to radiate the first electromagnetic field in the NFC band through the seventh metal portion E7, from having an electromagnetic influence (e.g., EMI) on the non-NFC antenna, which is configured to radiate the electromagnetic field of the non-NFC band through the first metal portion E1. The fourth matching circuit M24 may reduce or prevent a shift in resonance frequency and/or impedance mismatching for the non-NFC antenna from occurring due to the alignment of the first metal portion E1 and the seventh metal portion E7 with each other in the folded state of the foldable electronic device 2.

According to various embodiments, the fourth matching circuit M24 may be provided as a switch circuit including at least one switch, a tuner, or a combination thereof. For example, the fourth matching circuit M24 may be controlled depending on whether the foldable electronic device 2 is in the unfolded state or the folded state. In various embodiments, under the control of a processor (e.g., the processor 120 in FIG. 1) included in the foldable electronic device 2, the fourth matching circuit M24 may tune a time constant value. In various embodiments, under the control of the processor included in the foldable electronic device 2, the fourth matching circuit M24 may electrically connect or disconnect the fifth contact portion P5 of the seventh metal portion E7 and the second ground area G2.

According to various embodiments, the fourth matching circuit M24 may reduce the difference between the antenna radiation performance of the non-NFC antenna configured to radiate the electromagnetic field of the non-NFC band through the first metal portion E1 in the folded state of the foldable electronic device 2 and the antenna radiation performance of the non-NFC antenna in the unfolded state of the foldable electronic device 2.

According to various embodiments, the fifth contact portion P5 may be located between the contact portion P3 and the twelfth non-metal portion F12. The fifth contact portion P5 is not limited to the illustrated example.

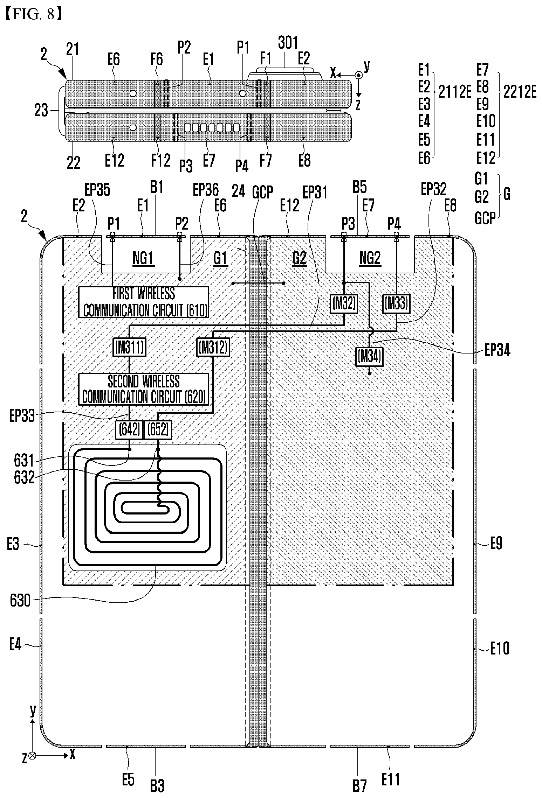

FIG. 8 is a diagram illustrating a foldable electronic device 2 in the folded state and illustrates a portion of the foldable electronic device 2 in the unfolded state according to various embodiments. It is to be understood that the disclosure conceives and includes all of the combinations of features and/or embodiments disclosed with reference to FIG. 8. For example, all of the combinations of features described below with reference to FIG. 8 are to be considered as being included in the disclosure as specific examples.

Referring to FIG. 8, the foldable electronic device 2 may include a first side metal part 2112E, a second side metal part 2212E, a coiled conductive pattern 630, a first ground area G1, a second ground area G2, a first wireless communication circuit 610, a second wireless communication circuit 620, a first electrical path EP31, a second electrical path EP32, a third electrical path EP33, a fourth electrical path EP34, a fifth electrical path EP35, and/or a sixth electrical path EP36. Descriptions of some components of FIG. 8 that are indicated by the same reference numerals as those illustrated in FIG. 6 may not repeated here.

According to various embodiments, the first wireless communication circuit 610 may be configured to transmit and/or receive a non-NFC band signal via the first metal portion E1.

According to various embodiments, the first contact portion P1 of the first metal portion E1 may be electrically connected to the first wireless communication circuit 610. The first contact portion P1 may be electrically connected to the first wireless communication circuit 610 via the fifth electrical path EP35 (e.g., the sixth electrical path EP16 in FIG. 6). For example, the second contact portion P2 of the first metal portion E1 may be electrically connected to the first ground area G1. The second contact portion P2 may be electrically connected to the first ground area G1 via the sixth electrical path EP36 (e.g., the seventh electrical path EP17 in FIG. 6). When the first wireless communication circuit 610 provides (or feeds) an electromagnetic signal (or a feeding signal, a wireless signal, an RF signal, or a radiated current) to the fifth electrical path EP35, a signal path may be formed through which the electromagnetic signal flows between the fifth electrical path EP35 and the sixth electrical path EP36 via the first metal portion E1.

According to various embodiments, the second wireless communication circuit 620 may be configured to transmit and/or receive a signal in the NFC band through the seventh metal portion E7 and the coil-shaped conductive pattern 630.

According to various embodiments, the seventh metal portion E7 and the coil-shaped conductive pattern 630 may be fed with power in series from the second wireless communication circuit 620.

According to various embodiments, the third contact portion P3 of the seventh metal portion E7 may be electrically connected to the second wireless communication circuit 620 via the first electrical path EP31. The first electrical path EP31 may be disposed across the hinge portion 24. For example, the first electrical path EP31 may include a combination (not illustrated separately) of one or more conductive paths (also referred to as conductors or conductive structures) between the third contact portion P3 of the seventh metal portion E7 and the second wireless communication circuit 620.

According to various embodiments, the fourth contact portion P4 of the seventh metal portion E7 may be electrically connected to a second end 632 of the coil-shaped conductive pattern 630 via the second electrical path EP32. The second electrical path EP34 may be disposed across the hinge portion 24. For example, the second electrical path EP32 may include a combination (not illustrated separately) of one or more conductive paths (also referred to as conductors or conductive structures) between the fourth contact portion P4 of the seventh metal portion E7 and the second end 632 of the coil-shaped conductive pattern 630.

According to various embodiments, the first end 631 of the coil-shaped conductive pattern 630 may be electrically connected to the second wireless communication circuit 620 via the third electrical path EP33. The third electrical path EP3 may be accommodated in the first housing 21. For example, the third electrical path EP33 may include a combination (not illustrated separately) of one or more conductive paths (or conductors or conductive structures) between the first end 631 of the coil-shaped conductive pattern 630 and the second wireless communication circuit 620.

According to various embodiments, the second wireless communication circuit 620 may provide first feeding to the third contact portion P3 of the seventh metal portion E1 via the first electrical path EP31. The second wireless communication circuit 620 may provide second feeding to the first end (631) of the coil-shaped conductive pattern 630 via the third electrical path EP33. The second wireless communication circuit 620 may provide, for example, a + voltage as the first feeding to the first electrical path EP31 and a - voltage as the second feeding to the third electrical path EP33. The second wireless communication circuit 620 may provide, for example, a - voltage as the first feeding to the first electrical path EP31 and a + voltage as the second feeding to the third electrical path EP33. The second feeding may be provided to the fourth contact portion P4 of the first metal portion E1 via the second electrical path EP2.

According to various embodiments, during feeding from the second wireless communication circuit 620, due to a potential difference, a first current path (e.g., a first signal path) through which a radiated current flows may be formed on the seventh metal portion E7, and a second current path (e.g., a second signal path) through which a radiated current flows may be formed on the coil-shaped conductive pattern 630. The distribution of current along the first current path may form a first electromagnetic field (or a first magnetic field distribution) through the seventh metal portion E7. The current distribution along the second current path may form a second electromagnetic field (or a second magnetic field distribution) through the coil-shaped conductive pattern 630. The second wireless communication circuit 620 may be configured to transmit and/or receive an NFC band signal via the first electromagnetic field and/or the second electromagnetic field.

According to various embodiments, a combination of the seventh metal portion E7, the coil-shaped conductive pattern 630, the first electrical path EP31, the second electrical path EP32, and the third electrical path EP33 may be interpreted as an NFC antenna configured to radiate an electromagnetic field in the NFC band via the seventh metal portion E7 and the coil-shaped conductive pattern 630 during feeding from the second wireless communication circuit 620. During the feeding from the second wireless communication circuit 620 via the NFC antenna, a first electromagnetic field may be radiated from the seventh metal portion E7, and a second electromagnetic field may be radiated via the coil-shaped conductive pattern 630.

According to various embodiments, since the first metal portion E1 and the seventh metal portion E7 are brought close to each other and the aligned in the folded state of the foldable electronic device 2, in order to suppress or prevent the deterioration in the antenna radiation performance of the non-NFC antenna, which is configured to radiate an electromagnetic field in the non-NFC band through the first metal portion E1, and/or the antenna radiation performance of the NFC antenna, which is configured to radiate an electromagnetic field in the NFC band through the seventh metal portion E7 and the coil-shaped conductive pattern 630, the first contact portion P1 and/or the second contact portion P2 of the first metal portion E1 may be misaligned with the third contact portion P3 and/or the fourth contact portion P4 of the seventh metal portion E7. For example, when viewed from above the first cover 212 (see FIG. 3) or the second cover 222 (see FIG. 3) (or in a direction orthogonal to the first cover 212 or the second cover 222) in the folded state of the foldable electronic device 2, the first contact portion P1 and/or the second contact portion P2 may not overlap the third contact portion P3 and/or the fourth contact portion P4.

According to various embodiments, during feeding from the first wireless communication circuit 610, the density of the radiation current in the first metal portion E1 may be relatively high in the first contact portion P1 and the second contact portion P2. During feeding from the second wireless communication circuit 620, the density of the radiation current in the seventh metal portion E7 may be relatively high in the third contact portion P3 and the fourth contact portion P4. In order to reduce the electromagnetic influence between at least a portion of the first metal portion E1 having a relatively high density of radiation current during feeding from the first wireless communication circuit 610 and at least a portion of the seventh metal portion E7 having a relatively high density of radiation current during feeding from the second wireless communication circuit 620, the first contact portion P1 and/or the second contact portion P2 of the first metal portion E1 may be misaligned with the third contact portion P3 and/or the fourth contact portion P4 of the seventh metal portion E7 in the folded state of the foldable electronic device 2.

According to various embodiments, the foldable electronic device 2 may include one or more first matching circuits M311 and M312 accommodated in the first housing 21. For example, the one or more first matching circuits M311 and M312 may be disposed on a printed circuit board (not illustrated separately) accommodated in the first housing 21. For example, one first matching circuit M311 may be disposed on the first electrical path EP31 or electrically connected to the first electrical path EP31. For example, the other first matching circuit M312 may be disposed on the second electrical path EP32 or electrically connected to the second electrical path EP32.

According to various embodiments, the foldable electronic device 2 may include a second matching circuit M32 (e.g., the second matching circuit M12 in FIG. 6) and/or a third matching circuit M33 (e.g., the third matching circuit M13 in FIG. 6) accommodated in the second housing 22. For example, the second matching circuit M32 and/or the third matching circuit M33 may be disposed on a printed circuit board (not illustrated separately) accommodated in the second housing 22. For example, the second matching circuit M32 may be disposed on the first electrical path EP31 or electrically connected to the first electrical path EP31. For example, the third matching circuit M33 may be disposed on the second electrical path EP32 or electrically connected to the second electrical path EP32.

According to various embodiments, the one or more first matching circuits M311 and M312, the second matching circuit M32, and/or the third matching circuit M33 may provide frequency tuning, inductance value tuning, and/or impedance matching for an NFC antenna configured to radiate an electromagnetic field in an NFC band through the seventh metal portion E7 and the coil-shaped conductive pattern 630. For example, the one or more first matching circuits M311 and M312, the second matching circuit M32, and/or the third matching circuit M33 may include electrical elements having a component such as inductance, capacitance, or conductance. For example, the one or more first matching circuits M311 and M312, the second matching circuit M32, and/or the third matching circuit M33 may include various components, such as lumped elements or passive elements.

According to various embodiments, the foldable electronic device 2 may include a first filter (also referred to as a first filter circuit or a first RF choke) 642 (e.g., the first filter 641 in FIG. 6) and/or a second filter (also referred to as a second filter circuit or a second RF choke) 652 (e.g., the second filter 652 in FIG. 6) accommodated in the first housing 21. For example, the first filter 642 and/or the second filter 652 may be disposed on a printed circuit board (not illustrated separately) accommodated in the first housing 21. The first filter 642 may be disposed on the third electrical path EP33 or electrically connected to the third electrical path EP33. The second filter 652 may be disposed on the second electrical path EP32 or electrically connected to the second electrical path EP32. In the folded state of the foldable electronic device 2, the first filter 642 and/or the second filter 652 may suppress or block the transmission of a frequency of the non-NFC band, or a frequency of a higher frequency band than the NFC band, to the second NFC antenna configured to radiate the second electromagnetic field of the NFC band through the coil-shaped conductive pattern 630. In various embodiments, in the folded state of the foldable electronic device 2, the first filter 642 and/or the second filter 652 may reduce or prevent the NFC antenna, which is configured to radiate an electromagnetic field of the NFC band through the seventh metal portion E7 and the coil-shaped conductive pattern 630, from being electrically affected by the non-NFC antenna, which is configured to radiate an electromagnetic field of the non-NFC band through the first metal portion E1. The first filter 642 and/or the second filter 652 may separate the non-NFC band of the non-NFC antenna and the NFC band of the NFC antenna.

According to various embodiments, the one or more first matching circuits M311 and M312, the second matching circuit M32, and/or the third matching circuit M33 may at least influence separating the NFC band of the NFC antenna to the non-NFC band of the non-NFC antenna.

According to various embodiments, the foldable electronic device 2 may further include at least one EMI filter (not illustrated separately). At least one EMI filter may be disposed, for example, on a printed circuit board (not illustrated separately) accommodated in the first housing 21 or the second housing 22. The at least one EMI filter may be disposed, for example, on the first electrical path EP31, the second electrical path EP32, and/or the third electrical path EP33 or electrically connected to the first electrical path EP31, the second electrical path EP32, and/or the third electrical path EP33. The EMI filter may reduce or block noise affecting an NFC band signal.

According to various embodiments, the foldable electronic device 2 may further include a fourth matching circuit M34 accommodated in the second housing 22. For example, the fourth matching circuit M34 may be disposed on a printed circuit board (not illustrated separately) accommodated in the second housing 22. The fourth matching circuit M34 may reduce or prevent an NFC antenna, which is configured to radiate an electromagnetic field of an NFC band through the seventh metal portion E7 and the coil-shaped conductive pattern 630, from having electromagnetic influence (e.g., EMI) on a non-NFC antenna. The fourth matching circuit M34 may reduce or prevent a shift in resonance frequency and/or impedance mismatching for the non-NFC antenna from occurring due to the alignment of the first metal portion E1 and the seventh metal portion E7 with each other in the folded state of the foldable electronic device 2.

According to various embodiments, the fourth matching circuit M34 may be electrically connected to the NFC antenna, which is configured to radiate the electromagnetic field of the NFC band through the seventh metal portion E7 and the coil-shaped conductive pattern 630, so that the fourth matching circuit M34 has an electromagnetic influence on the non-NFC antenna, which is configured to radiate the electromagnetic field of the non-NFC band through the first metal portion E1. The fourth matching circuit M34 may be interpreted separately from the NFC antenna.

According to various embodiments, the foldable electronic device 2 may include a fourth electrical path EP34 electrically connecting the first electrical path EP31 and the second ground area G2. The fourth matching circuit M34 may be disposed on the third electrical path EP34 or electrically connected to the fourth electrical path EP34.

According to various embodiments, although not illustrated separately, the fourth matching circuit M34 may be disposed on the fifth electrical path electrically connecting the second electrical path EP32 and the second ground area G2 or electrically connected to the fifth electrical path.

According to various embodiments, the fourth matching circuit M34 may be provided as a switch circuit including at least one switch, a tuner, or a combination thereof. The fourth matching circuit M34 may be controlled depending on whether the foldable electronic device 2 is in the unfolded state or the folded state. In various embodiments, under the control of a processor (e.g., the processor 120 in FIG. 1) included in the foldable electronic device 2, the fourth matching circuit M34 may tune a time constant value. In various embodiments, under the control of the processor included in the foldable electronic device 2, the fourth matching circuit M34 may electrically connect or disconnect the first electrical path EP31 and the second ground area G2.

According to various embodiments, the fourth matching circuit M34 may reduce the difference between the antenna radiation performance of the non-NFC antenna configured to radiate the electromagnetic field of the non-NFC band through the first metal portion E1 in the folded state of the foldable electronic device 2 and the antenna radiation performance of the non-NFC antenna in the unfolded state of the foldable electronic device 2.

According to various embodiments, the foldable electronic device 2 may further include a fifth matching circuit (not illustrated separately) accommodated in the first housing 21 to perform at least partially the same role as the fourth matching circuit M34. The fifth matching circuit may be disposed on the fifth electrical path EP35 and/or the sixth electrical path EP36 or electrically connected to the fifth electrical path EP35 and/or the sixth electrical path EP36, but is not limited thereto.

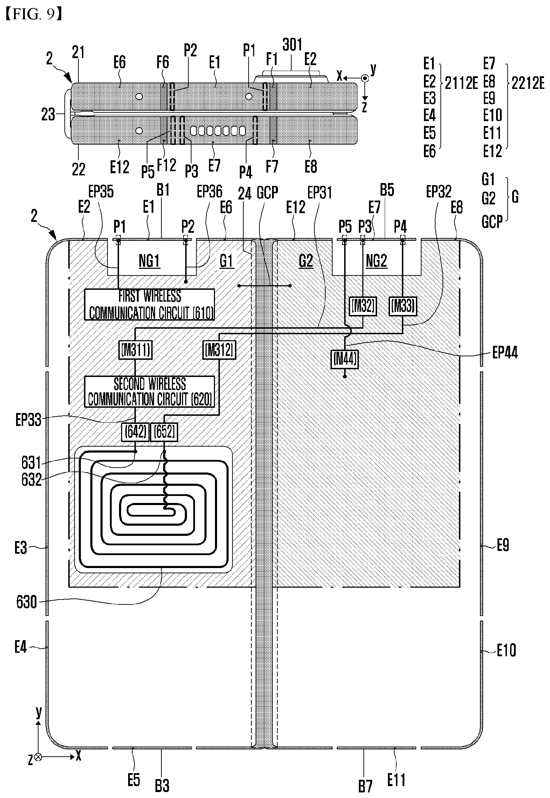

FIG. 9 is a diagram illustrating a foldable electronic device 2 in the folded state and illustrates a portion of the foldable electronic device 2 in the unfolded state according to various embodiments. It is to be understood that the disclosure conceives and includes all of the combinations of features and/or embodiments disclosed with reference to FIG. 9. That is, all of the combinations of features described below with reference to FIG. 9 are to be considered as being included in the disclosure as specific examples.

Referring to FIG. 9, the foldable electronic device 2 may include a first side metal part 2112E, a second side metal part 2212E, a coil-shaped conductive pattern 630, a first ground area G1, a second ground area G2, a first wireless communication circuit 610, a second wireless communication circuit 620, a first electrical path EP31, a second electrical path EP32, a third electrical path EP33, a fourth electrical path EP44, a fifth electrical path EP35, a sixth electrical path M36, one or more first matching circuits M311 and M312, a second matching circuit M32, a third matching circuit M33, a fourth matching circuit M44, a first filter 642, and/or a second filter 652. Descriptions of some components of FIG. 9 that are indicated by the same reference numerals as those illustrated in FIG. 8 may not be repeated here.

According to various embodiments, the fourth electrical path EP44 may electrically connect the fifth contact portion P5 of the seventh metal portion E7 and the second ground area G2. For example, the fourth matching circuit M44 may be disposed on the fourth electrical path EP44 or electrically connected to the fourth electrical path EP44.

According to various embodiments, the fourth matching circuit M44 may reduce or prevent the NFC antenna, which is configured to radiate the first electromagnetic field in the NFC band through the seventh metal portion E7 and the coil-shaped conductive pattern 630, from having an electromagnetic influence (e.g., EMI) on the non-NFC antenna, which is configured to radiate the electromagnetic field of the non-NFC band through the first metal portion E1. The fourth matching circuit M44 may reduce or prevent a shift in resonance frequency and/or impedance mismatching for the non-NFC antenna from occurring due to the alignment of the first metal portion E1 and the seventh metal portion E7 with each other in the folded state of the foldable electronic device 2.

According to various embodiments, the fourth matching circuit M44 may be provided as a switch circuit including at least one switch, a tuner, or a combination thereof. For example, the fourth matching circuit M44 may be controlled depending on whether the foldable electronic device 2 is in the unfolded state or the folded state. In various embodiments, under the control of a processor (e.g., the processor 120 in FIG. 1) included in the foldable electronic device 2, the fourth matching circuit M44 may tune a time constant value. In various embodiments, under the control of the processor included in the foldable electronic device 2, the fourth matching circuit M44 may electrically connect or disconnect the fifth contact portion P5 of the seventh metal portion E7 and the second ground area G2.

According to various embodiments, the fourth matching circuit M24 may reduce the difference between the antenna radiation performance of the non-NFC antenna configured to radiate the electromagnetic field of the non-NFC band through the first metal portion E1 in the folded state of the foldable electronic device 2 and the antenna radiation performance of the non-NFC antenna in the unfolded state of the foldable electronic device 2.

According to various embodiments, the fifth contact portion P5 may be located between the contact portion P3 and the twelfth non-metal portion F12. The fifth contact portion P5 is not limited to the illustrated example.

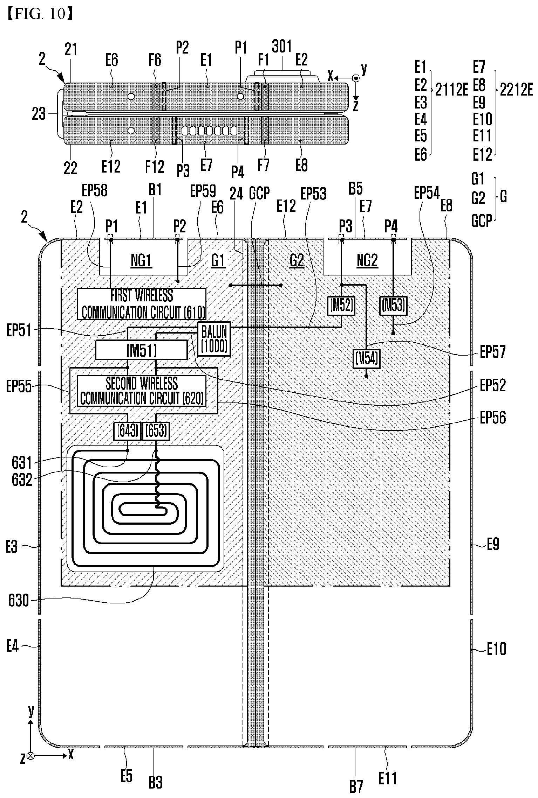

FIG. 10 is a diagram illustrating a foldable electronic device 2 in the folded state and illustrates a portion of the foldable electronic device 2 in the unfolded state according various embodiments. It is to be understood that the disclosure conceives and includes all of the combinations of features and/or embodiments disclosed with reference to FIG. 10. That is, all of the combinations of features described below with reference to FIG. 10 are to be considered as being included in the disclosure as specific examples.

Referring to FIG. 10, the foldable electronic device 2 may include a first side metal part 2112E, a second side metal part 2212E, a coiled conductive pattern 630, a first ground area G1, a second ground area G2, a first wireless communication circuit 610, a second wireless communication circuit 620, a first electrical path EP51, a second electrical path EP52, a third electrical path EP53, a fourth electrical path EP54, a fifth electrical path EP55, a sixth electrical path EP56, a seventh electrical path EP57, an eighth electrical path EP58, a ninth electrical path EP59, and/or a balun 1000. Descriptions of some components of FIG. 10 that are indicated by the same reference numerals as those illustrated in FIG. 6 may not be repeated here.

According to various embodiments, the first wireless communication circuit 610 may be configured to transmit and/or receive a non-NFC band signal via the first metal portion E1.

According to various embodiments, the first contact portion P1 of the first metal portion E1 may be electrically connected to the first wireless communication circuit 610. The first contact portion P1 may be electrically connected to the first wireless communication circuit 610 via the eighth electrical path EP58 (e.g., the sixth electrical path EP16 in FIG. 6). For example, the second contact portion P2 of the first metal portion E1 may be electrically connected to the first ground area G1. The second contact portion P2 may be electrically connected to the first ground area G1 via the ninth electrical path EP59 (e.g., the seventh electrical path EP17 in FIG. 9). When the first wireless communication circuit 610 provides (or feeds) an electromagnetic signal (or a feeding signal, a wireless signal, an RF signal, or a radiated current) to the eighth electrical path EP58, a signal path may be formed through which the electromagnetic signal flows between the eighth electrical path EP58 and the ninth electrical path EP59 via the first metal portion E1.

According to various embodiments, the second wireless communication circuit 620 may be configured to transmit and/or receive a signal in the NFC band through the seventh metal portion E7 and the coil-shaped conductive pattern 630.

According to various embodiments, the seventh metal portion E7 and the coil-shaped conductive pattern 630 may be fed with power in parallel from the second wireless communication circuit 620.

According to various embodiments, the third contact portion P3 of the seventh metal portion E7 may be electrically connected to the balun 1000 via the third electrical path EP53. For example, the balun 1000 may be accommodated in the first housing 21. The balun 1000 may be disposed on a printed circuit board (not illustrated separately) accommodated in the first housing 21. The third electrical path EP53 may be disposed across the hinge portion 24. For example, the third electrical path EP53 may include a combination (not separately illustrated) of one or more conductive paths (also referred to as conductors or conductive structures) between the balun 1000 and the third contact portion P3 of the seventh metal portion E7.

According to various embodiments, the fourth contact portion P4 of the seventh metal portion E7 may be electrically connected to the second ground area G2 via the fourth electrical path EP54. The fourth electrical path EP54 may be accommodated in the second housing 22. For example, the fourth electrical path EP54 may include a combination (not separately illustrated) of one or more conductive paths (also referred to as conductors or conductive structures) between the second ground area G2 and the fourth contact portion P4 of the seventh metal portion E7.

According to various embodiments, the balun 1000 may be electrically connected to the second wireless communication circuit 620 via the first electrical path EP51. The balun 1000 may be electrically connected to the second wireless communication circuit 620 via the second electrical path EP52. For example, the first electrical path EP51 or and the second electrical path EP52 may be accommodated in the first housing 21. For example, the first electrical path EP51 or the second electrical path EP52 may include a combination (not illustrated separately) of one or more conductive paths (also referred to as conductors or conductive structures) between the balun 1000 and the second wireless communication circuit 620.

According to various embodiments, the first end 631 of the coil-shaped conductive pattern 630 may be electrically connected to the first electrical path EP51 via the fifth electrical path EP55 (e.g., the third electrical path EP13 in FIG. 6). The second end 632 of the coil-shaped conductive pattern 630 may be electrically connected to the second electrical path EP52 via the sixth electrical path EP56 (e.g., the fourth electrical path EP14 in FIG. 6). The fifth electrical path EP55 or and the sixth electrical path EP56 may be accommodated in the first housing 21.

According to various embodiments, the second wireless communication circuit 620 may provide the first feeding to the first electrical path EP51 and the second feeding to the second electrical path EP52. The second wireless communication circuit 620 may provide, for example, a + voltage as the first feeding to the first electrical path EP51 and a - voltage as the second feeding to the second electrical path EP52. The second wireless communication circuit 620 may provide, for example, a - voltage as the first feeding to the first electrical path EP51 and a + voltage as the second feeding to the second electrical path EP52. The balun 1000 may transmit one of the first feeding through the first electrical path EP51 and the second feeding through the second electrical path EP52 to the third electrical path EP53. One of the first feeing and the second feeding that has passed through the balun 1000 may be provided to the third contact portion P3 of the seventh metal portion E7 via the third electrical path EP53.

According to various embodiments, although not illustrated separately, the second display area 1000 may be accommodated in the second housing 22. The balun 1000 may be disposed on a printed circuit board (not illustrated separately) accommodated in the second housing 22. The first electrical path EP51 and the second electrical path EP52 may be disposed across the hinge portion 24. The third electrical path EP53 may be accommodated in the second housing 22.

According to various embodiments, during feeding from the second wireless communication circuit 620, a first current path (also referred to as a first signal path or a first loop) may be formed through which a current (also referred to as a radiated current) flows between the third electrical path EP53 and the fourth electrical path EP54 through the seventh metal portion E7 due to a potential difference between the third contact portion P3 and the fourth contact portion P4 of the seventh metal portion E7. The distribution of current along the first current path may form a first electromagnetic field (or a first magnetic field distribution) through the seventh metal portion E7. The second wireless communication circuit 620 may be configured to transmit and/or receive an NFC band signal via the first electromagnetic field radiated (or formed or generated) through the seventh metal portion E7.

According to various embodiments, a combination of the seventh metal portion (e.g., the first NFC antenna radiator) E7, the first electrical path EP51, the second electrical path EP52, the third electrical path EP53, and the fourth electrical path EP54 may be interpreted as a first NFC antenna (also referred to as a first NFC antenna structure) configured to radiate a first electromagnetic field of an NFC band through the seventh metal portion E7 during feeding from the second wireless communication circuit 620. For example, the first NFC antenna may include at least one matching circuit for frequency tuning, inductance value tuning, and/or impedance matching, or at least one filter, or a combination thereof.

According to various embodiments, during feeding from the second wireless communication circuit 620, a second current path (also referred to as a second signal path or a second loop) may be formed in which a current (also referred to as a radiated current) flows between the fifth electrical path EP55 and the sixth electrical path EP56 through the coil-shaped conductive pattern 630 due to a potential difference between the first end 631 and the second end 632 of the coil-shaped conductive pattern 630. The current distribution along the second current path may form a second electromagnetic field (or a second magnetic field distribution) through the coil-shaped conductive pattern 630. The second wireless communication circuit 620 may be configured to transmit and/or receive an NFC band signal via the second electromagnetic field radiated (or formed or generated) through the coil-shaped conductive pattern 630.

According to various embodiments, a combination of the coil-shaped conductive pattern (e.g., the second NFC antenna radiator) 630, the fifth electrical path EP55, and the sixth electrical path EP56 may be interpreted as a second NFC antenna (also referred to as a second NFC antenna structure) configured to radiate a second electromagnetic field of the NFC band through the coil-shaped conductive pattern 630 during feeding from the second wireless communication circuit 620. For example, the second NFC antenna may include at least one matching circuit for frequency tuning, inductance value tuning, and/or impedance matching, or at least one filter, or a combination thereof.

According to various embodiments, the foldable electronic device 2 may include a first matching circuit M51 (e.g., the first matching circuit M11 in FIG. 6) accommodated in the first housing 21. The first matching circuit M51 may be disposed on the first electrical path EP51 and/or the second electrical path EP52 or electrically connected to the first electrical path EP51 and/or the second electrical path EP52.

According to various embodiments, the foldable electronic device 2 may include a second matching circuit M52 and/or a third matching circuit M53 accommodated in the second housing 22. The second matching circuit M52 may be disposed on the third electrical path EP53 or electrically connected to the third electrical path EP53. The third matching circuit M53 may be disposed on the fourth electrical path EP54 or electrically connected to the fourth electrical path EP54.

According to various embodiments, the first matching circuit M51, the second matching circuit M52, and/or the third matching circuit M53 may provide frequency tuning, inductance value tuning, and/or impedance matching for the first NFC antenna configured to radiate an electromagnetic field in the NFC band through the seventh metal portion E7. For example, the first matching circuit M51, the second matching circuit M52, and/or the third matching circuit M53 may include electrical elements having a component such as inductance, capacitance, or conductance. For example, the first matching circuit M51, the second matching circuit M52, and/or the third matching circuit M53 may include various components, such as lumped elements or passive elements.

According to various embodiments, the foldable electronic device 2 may include a first filter 643 (e.g., the first filter 641 in FIG. 6) and/or a second filter 653 (e.g., the second filter 651 in FIG. 6) accommodated in the first housing 21. For example, the first filter 643 and/or the second filter 653 may be disposed on a printed circuit board (not illustrated separately) accommodated in the first housing 21. The first filter 643 may be disposed on the fifth electrical path EP55 or electrically connected to the fifth electrical path EP55. The second filter 653 may be disposed on the sixth electrical path EP56 or electrically connected to the sixth electrical path EP56. In the folded state of the foldable electronic device 2, the first filter 643 and/or the second filter 653 may suppress or block the transmission of a frequency of the non-NFC band, or a frequency of a higher frequency band than the NFC band, to the second NFC antenna configured to radiate the second electromagnetic field of the NFC band through the coil-shaped conductive pattern 630. In various embodiments, in the folded state of the foldable electronic device 2, the first filter 643 and/or the second filter 653 may reduce or prevent the second NFC antenna, which is configured to radiate the second electromagnetic field of the NFC band through the coil-shaped conductive pattern 630, from being electromagnetically affected by the non-NFC antenna, which is configured to radiate an electromagnetic field of the non-NFC band through the first metal portion E1. The first filter 643 and/or the second filter 653 may separate the non-NFC band of the non-NFC antenna and the NFC band of the second NFC antenna.

According to various embodiments, the first NFC antenna configured to radiate the first electromagnetic field of the NFC band through the seventh metal portion E7 may further include at least one third filter (not illustrated separately) to reduce or prevent the first NFC antenna from being electromagnetically affected by the non-NFC antenna configured to radiate an electromagnetic field of the non-NFC band through the first metal portion E1.

According to various embodiments, the second matching circuit M52 (e.g., the first inductor) and/or the third matching circuit M53 (e.g., the second inductor) may at least influence separating the NFC band of the first NFC antenna from the non-NFC band of the Non-NFC antenna.

According to various embodiments, the foldable electronic device 2 may further include at least one EMI filter (not illustrated separately). At least one EMI filter may be disposed, for example, on a printed circuit board (not illustrated separately) accommodated in the first housing 21 or the second housing 22. At least one EMI filter may be disposed on, for example, the first electrical path EP51, the second electrical path EP52, the third electrical path EP53, the fifth electrical path EP55, and/or the sixth electrical path EP56, or electrically connected to the first electrical path EP51, the second electrical path EP52, the third electrical path EP53, the fifth electrical path EP55, and/or the sixth electrical path EP56. The EMI filter may reduce or block noise affecting an NFC band signal.

According to various embodiments, the foldable electronic device 2 may further include a fourth matching circuit M54 accommodated in the second housing 22. For example, the fourth matching circuit M54 may be disposed on a printed circuit board (not illustrated separately) accommodated in the second housing 22. The fourth matching circuit M54 may reduce or prevent the first NFC antenna, which is configured to radiate the first electromagnetic field in the NFC band through the seventh metal portion E7, having an electromagnetic influence (e.g., EMI) on the non-NFC antenna, which is configured to radiate the electromagnetic field of the non-NFC band through the first metal portion E1. The fourth matching circuit M54 may reduce or prevent a shift in resonance frequency and/or impedance mismatching for the non-NFC antenna from occurring due to the alignment of the first metal portion E1 and the seventh metal portion E7 with each other in the folded state of the foldable electronic device 2.

According to various embodiments, the fourth matching circuit M54 may be electrically connected to the first NFC antenna, which is configured to radiate the first electromagnetic field of the NFC band through the seventh metal portion E7, such that, in the folded state of the foldable electronic device 2, the fourth matching circuit M54 has an electromagnetic influence on the non-NFC antenna, which is configured to radiate the electromagnetic field of the Non-NFC band through the first metal portion E1. The fourth matching circuit M54 may be interpreted separately from the first NFC antenna.

According to various embodiments, the foldable electronic device 2 may include a seventh electrical path EP57 electrically connecting the third electrical path EP53 and the second ground area G2. The fourth matching circuit M54 may be disposed on the seventh electrical path EP57 or electrically connected to the seventh electrical path EP57.

According to various embodiments, although not illustrated separately, the fourth matching circuit M54 may be disposed on the tenth electrical path electrically connecting the fourth electrical path EP54 and the second ground area G2.

According to various embodiments, the fourth matching circuit M54 may be provided as a switch circuit including at least one switch, a tuner, or a combination thereof. For example, the fourth matching circuit M54 may be controlled depending on whether the foldable electronic device 2 is in the unfolded state or the folded state. In various embodiments, under the control of a processor (e.g., the processor 120 in FIG. 1) included in the foldable electronic device 2, the fourth matching circuit M54 may tune a time constant value. In various embodiments, under the control of the processor included in the foldable electronic device 2, the fourth matching circuit M54 may electrically connect or disconnect the third electrical path EP53 and the second ground area G2.

According to various embodiments, the fourth matching circuit M54 may reduce the difference between the antenna radiation performance of the non-NFC antenna configured to radiate the electromagnetic field of the non-NFC band through the first metal portion E1 in the folded state of the foldable electronic device 2 and the antenna radiation performance of the non-NFC antenna in unfolded state of the foldable electronic device 2.

According to various embodiments, the foldable electronic device 2 may further include a fifth matching circuit (not illustrated separately) accommodated in the first housing 21 to perform at least partially the same role as the fourth matching circuit M54. The fifth matching circuit may be disposed on the eighth electrical path EP58 and/or the ninth electrical path EP59 or electrically connected to the eighth electrical path EP58 and/or the ninth electrical path EP59, but is not limited thereto.

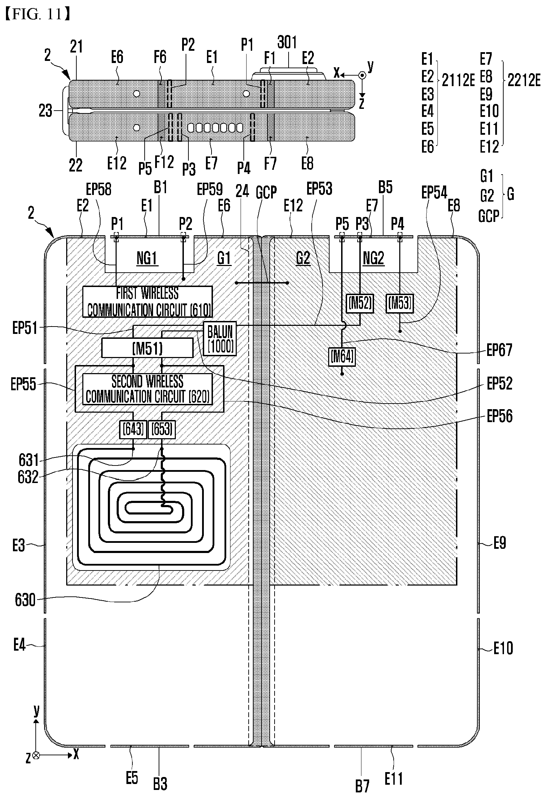

FIG. 11 is a diagram illustrating a foldable electronic device 2 in the folded state and illustrates a portion of the foldable electronic device 2 in the unfolded state according to various embodiments. It is to be understood that the disclosure conceives and includes all of the combinations of features and/or embodiments disclosed with reference to FIG. 11. For example, all of the combinations of features described below with reference to FIG. 11 are to be considered as being included in the disclosure as specific examples.

Referring to FIG. 11, the foldable electronic device 2 may include a first side metal part 2112E, a second side metal part 2212E, a coil-shaped conductive pattern 630, a first ground area G1, a second ground area G2, a first wireless communication circuit 610, a second wireless communication circuit 620, a first electrical path EP51, a second electrical path EP52, a third electrical path EP53, a fourth electrical path EP54, a fifth electrical path EP55, a sixth electrical path EP56, a seventh electrical path EP67, an eighth electrical path EP58, a ninth path EP59, a balun 1000, a first matching circuit M51, a second matching circuit M52, a third matching circuit M53, a fourth matching circuit M64, a first filter 643, and/or a second filter 653. Descriptions of some components of FIG. 11 that are indicated by the same reference numerals as those illustrated in FIG. 10 may not be repeated here.

According to various embodiments, the seventh electrical path EP67 may electrically connect the fifth contact portion P5 of the seventh metal portion E7 and the second ground area G2. For example, the fourth matching circuit M64 may be disposed on the seventh electrical path EP67 or electrically connected to the seventh electrical path EP67.

According to various embodiments, the fourth matching circuit M64 may reduce or prevent the first NFC antenna, which is configured to radiate the first electromagnetic field in the NFC band through the seventh metal portion E7, from having an electromagnetic influence (e.g., EMI) on the non-NFC antenna, which is configured to radiate the electromagnetic field of the non-NFC band through the first metal portion E1. The fourth matching circuit M64 may reduce or prevent a shift in resonance frequency and/or impedance mismatching for the non-NFC antenna from occurring due to the alignment of the first metal portion E1 and the seventh metal portion E7 with each other in the folded state of the foldable electronic device 2.

According to various embodiments, the fourth matching circuit M64 may be provided as a switch circuit including at least one switch, a tuner, or a combination thereof. For example, the fourth matching circuit M64 may be controlled depending on whether the foldable electronic device 2 is in the unfolded state or the folded state. In various embodiments, under the control of a processor (e.g., the processor 120 in FIG. 1) included in the foldable electronic device 2, the fourth matching circuit M64 may tune a time constant value. In various embodiments, under the control of the processor included in the foldable electronic device 2, the fourth matching circuit M64 may electrically connect or disconnect the fifth contact portion P5 of the seventh metal portion E7 and the second ground area G2.

According to various embodiments, the fourth matching circuit M64 may reduce the difference between the antenna radiation performance of the non-NFC antenna configured to radiate the electromagnetic field of the non-NFC band through the first metal portion E1 in the folded state of the foldable electronic device 2 and the antenna radiation performance of the non-NFC antenna in the unfolded state of the foldable electronic device 2.

According to various embodiments, the fifth contact portion P5 may be located between the contact portion P3 and the twelfth non-metal portion F12. The position of the fifth contact portion P5 is not limited to the illustrated example.

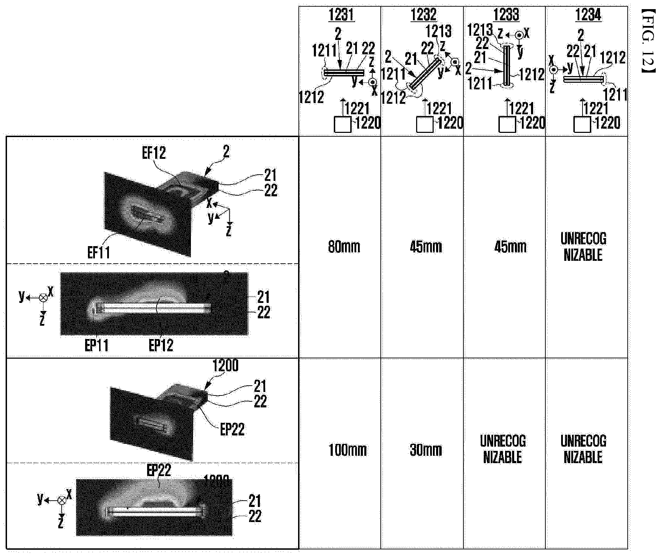

FIG. 12 is a table illustrating heat maps illustrating the magnetic field distribution of the NFC band during feeding in the folded state the foldable electronic device 2, heat maps showing the magnetic field distribution of the NFC band during feeding when a foldable electronic device 1200 according to a comparative example is in the folded state, and NFC performance according to various embodiments.

Referring to FIG. 12, the foldable electronic device 2 according to various embodiments of the disclosure may radiate (or form) a first electromagnetic field EF11 of the NFC band through the seventh metal portion E7 (see FIG. 6, 7, 8, 9, 10, or 11) and radiate (or form) a second electromagnetic field EF12 of the NFC band through the coil-shaped conductive pattern 630 (see FIG. 6, 7, 8, 9, 10, or 11). A foldable electronic device 2 in the folded state may include an upper area 1211, a lower area 1213, and an intermediate area between the upper area 1211 and the lower area 1213. The upper area 1211 may be one side area of the foldable electronic device 2 including the first edge B1 (see FIG. 3) and the fifth edge B5 (see FIG. 3) aligned with each other in the folded state of the foldable electronic device 2. The lower area 1213 may be the other side area of the foldable electronic device 2 including the third edge B3 (see FIG. 3) and the seventh edge B7 (see FIG. 3) aligned with each other in the folded state of the foldable electronic device 2. During feeding in the folded state of the foldable electronic device 2, the first electromagnetic field from the seventh metal portion E7 may be radiated through the upper area 1211 of the foldable electronic device 2. During feeding in the folded state of the foldable electronic device 2, the second electromagnetic field radiated from the coil-shaped conductive pattern 630 may be radiated in the direction in which the first rear surface area 1212 is oriented through the intermediate area of the foldable electronic device 2. The first electromagnetic field radiated from the seventh metal portion E7 may be less likely to be included in the grip position of the user's hand for the foldable electronic device 2 in the unfolded or folded state, compared to the second electromagnetic field radiated from the coil-shaped conductive pattern 630. The first electromagnetic field radiated from the seventh metal portion E7 may reduce restrictions on the grip position of the user's hand for the foldable electronic device 2 in the unfolded or folded state, and may reduce the possibility that the radiation performance is deteriorated by the user's hand (e.g., dielectric). The foldable electronic device 2 according to the disclosure not only provides the second electromagnetic field of the NFC band through the coil-shaped conductive pattern 630, but also further provides the first electromagnetic field of the NFC band through the seventh metal part E7, thereby allowing the NFC recognition area for an external electronic device to be expanded through a relatively further expanded electromagnetic field distribution.

Compared to the foldable electronic device 2 in a folded state according to various embodiments of the disclosure, the foldable electronic device 1200 according to the comparative example may not include the first NFC antenna configured to radiate an electromagnetic field of the NFC band through the seventh metal portion E7.

According to various embodiments, "1231" may indicate that the foldable electronic device 2 in a folded state, according to various embodiments of the disclosure, is disposed in a first orientation of about 0 degrees. In the first orientation, the second rear area 1212 may be oriented in a direction opposite to the direction 1221 in which an electromagnetic field is radiated from an external electronic device 1220. For example, the NFC recognition distance for the external electronic device 1220 in the first orientation of the foldable electronic device 2 according to various embodiments of the disclosure may be about 80 mm. For example, the NFC recognition distance for the external electronic device 1220 in the first orientation of the foldable electronic device 1200 according to the comparative example may be about 100 mm.

"1232" may indicate that the foldable electronic device 2 in the folded state, according to various embodiments of the disclosure, is disposed in a second orientation of about 45 degrees. In the second orientation, the second rear area 1212 may be disposed at an angle of about 45 degrees toward the external electronic device 1220. In the second orientation, the upper area 1211 may be located closer to the external electronic device 1220 than the lower area 1213. For example, the NFC recognition distance for the external electronic device 1220 in the second orientation of the foldable electronic device 2 according to various embodiments of the disclosure may be about 45 mm. For example, the NFC recognition distance for the external electronic device 1220 in the second orientation of the foldable electronic device 1200 according to the comparative example may be about 30 mm.

"1233" may indicate that the foldable electronic device 2 in the folded state, according to various embodiments of the disclosure, is disposed in a third orientation of about 90 degrees. In the third orientation, the second rear surface area 1212 may be perpendicular to a direction 1221 in which an electromagnetic field is radiated from the external electronic device 1220, and the upper area 1211 may be closer to the external electronic device 1220 than the lower area 1213. For example, the NFC recognition distance for the external electronic device 1220 in the third orientation of the foldable electronic device 2 according to various embodiments of the disclosure may be about 45 mm. For example, in the third orientation of the foldable electronic device 1200 according to the comparative example, NFC recognition for the external electronic device 1220 may be impossible.

"1234" may indicate that the foldable electronic device 2 in the folded state, according to various embodiments of the disclosure, is disposed in a fourth orientation of about 180 degrees. In the fourth orientation, the second rear area 1212 may be oriented in a direction 1221 in which an electromagnetic field is radiated from an external electronic device 1220. For example, in the fourth orientation of the foldable electronic device 2 according to the various embodiments of the disclosure, NFC recognition for the external electronic device 1220 may be impossible. For example, in the fourth orientation of the foldable electronic device 1200 according to the comparative example, NFC recognition for the external electronic device 1220 may be impossible.

Referring to "1231", "1232", "1233", and "1234", compared to the foldable electronic device 1200 of the comparative example, the foldable electronic device 2 according to the disclosure provides the first electromagnetic field EF11 of the NFC band through the seventh metal part E7. Thus, the NFC recognition area for the external electronic device 1220 may be expanded through a relatively expanded electromagnetic field distribution.

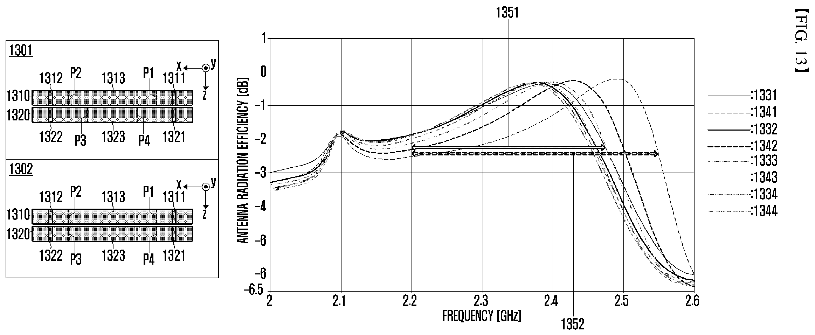

FIG. 13 is a diagram illustrating views of first and second example electronic devices 1301 and 1302 in the folded state, and graphs each showing the antenna radiation performance of a non-NFC antenna depending on the component values of a matching circuit of a first NFC antenna in each of the first and second example electronic devices 1301 and 1302 in the folded state according to various embodiments.

Referring to FIG. 13, a first side member 1310 of each of the first and second example foldable electronic devices 1301 and 1302 may include a first non-conductive portion 1311, a second non-conductive portion 1312, and a first conductive portion 1313 disposed between the first non-conductive portion 1311 and the second non-conductive portion 1312. The first side member 1310 may be the first side part 2112 of FIG. 5. The first non-conductive portion 1311 may be the first non-metal portion F1 of FIG. 5. The second non-conductive portion 1312 may be the sixth non-metal portion F6 of FIG. 5. The first conductive portion 1313 may be the first metal portion E1 of FIG. 5.

According to various embodiments, a second side member 1320 of each of the first and second example foldable electronic devices 1301 and 1302 may include a third non-conductive portion 1321, a fourth non-conductive portion 1322, and a second conductive portion 1323 disposed between the third non-conductive portion 1321 and the fourth non-conductive portion 1322. The second side member 1320 may be the first side part 2212 of FIG. 5. The third non-conductive portion 1321 may be the seventh non-metal portion F7 of FIG. 5. The fourth non-conductive portion 1322 may be the twelfth non-metal portion F12 of FIG. 5. The second conductive portion 1323 may be the seventh metal portion E7 of FIG. 5.

According to various embodiments, when each of the first and second example foldable electronic devices 1301 and 1302 is in the folded state, the first non-conductive portion 1311 of the first side member 1310 and the third non-conductive portion 1321 of the second side member 1320 may be aligned with each other. When each of the first and second example foldable electronic devices 1301 and 1302 is in the folded state, the second non-conductive portion 1312 of the first side member 1310 and the fourth non-conductive portion 1322 of the second side member 1320 may be aligned with each other. When each of the first and second example foldable electronic devices 1301 and 1302 is in the folded state, the first conductive portion 1313 of the first side member 1310 and the second conductive portion 1323 of the second side member 1320 may be aligned with each other.

According to various embodiments, the first wireless communication circuit 610 (see FIG. 6, 7, 8, 9, 10, or 11) included in each of the first and second example foldable electronic devices 1301 and 1302 may be configured to transmit and/or receive a non-NFC band signal via the first conductive portion 1313. The first wireless communication circuit 610 may provide (or feed) an electromagnetic signal (or, a feeding signal, a wireless signal, an RF signal, or a radiated current) to the first contact portion P1 of the first conductive portion 1313. The second contact portion P2 of the first conductive portion 1313 may be electrically connected to an antenna ground G (see FIG. 6, 7, 8, 9, 10, or 11).

According to various embodiments, the second wireless communication circuit 620 (see FIG. 6, 7, 8, 9, 10, or 11) included in each of the first and second example foldable electronic devices 1301 and 1302 may be configured to transmit and/or receive an NFC band signal via the second conductive portion 1323. Referring to FIG. 6, 7, 8, or 9, the second wireless communication circuit 620 may provide (or feed) voltages of opposite polarities to the third contact portion P3 and the fourth contact portion P4 of the second conductive portion 1323, respectively. Referring to the embodiment of FIG. 10 or 11, the second wireless communication circuit 620 may provide (or feed) a voltage to the third contact portion P3 of the second conductive portion 1323, and the fourth contact portion P4 of the second conductive portion 1323 may be electrically connected to the antenna ground G.

According to various embodiments, in the first example foldable electronic device 1301, the first contact portion P1 of the first conductive portion 1313 may be located between the first non-conductive portion 1311 and the second contact portion P2 of the first conductive portion 1313. In the first example foldable electronic device 1301, the first contact portion P2 of the first conductive portion 1313 may be located between the second non-conductive portion 1312 and the first contact portion P1 of the first conductive portion 1313. In the first example foldable electronic device 1301, the third contact portion P3 of the second conductive portion 1323 may be located between the fourth non-conductive portion 1322 and the fourth contact portion P4 of the second conductive portion 1323. In the first example foldable electronic device 1301, the fourth contact portion P4 of the second conductive portion 1323 may be located between the third non-conductive portion 1321 and the third contact portion P3 of the second conductive portion 1323.

According to various embodiments, in the folded state of the first example foldable electronic device 1301, the third contact portion P3 and the fourth contact portion P4 of the second conductive portion 1323 may be misaligned with the first contact portion P1 and the second contact portion P2 of the first conductive portion 1313.

According to various embodiments, when viewed from above the first cover 212 (see FIG. 3) or the second cover 222 (or when viewed in a direction orthogonal to the first cover 212 or the second cover 222), the third contact portion P3 and the fourth contact portion P4 may be located between the first contact portion P1 and the second contact portion P2. In the folded state of the first example foldable electronic device 1301, the distance by which the third contact portion P3 is spaced apart from the fourth non-conductive portion 1322 may be greater than the distance by which the second contact portion P2 is spaced apart from the second non-conductive portion 1312. The distance by which the fourth contact portion P4 is spaced apart from the third non-conductive portion 1321 may be greater than the distance by which the first contact portion P1 is spaced apart from the first non-conductive portion 1311.

According to various embodiments, in the folded state of the second example foldable electronic device 1302, the third contact portion P3 of the second conductive portion 1323 may be aligned with the second contact portion P2 of the first conductive portion 1313. In the folded state of the second example foldable electronic device 1302, the fourth contact portion P4 of the second conductive portion 1323 may be aligned with the first contact portion P1 of the first conductive portion 1313. In each of the first and second example foldable electronic devices 1301 and 1302, the relative positions of the first contact portion P1 and the second contact portion P2 of the first conductive portion 1313 with respect to the first non-conductive portion 1311 and the second non-conductive portion 1312 may be substantially the same.

According to various embodiments, in each of the first and second example foldable electronic devices 1301 and 1302, the first NFC antenna configured to radiate an electromagnetic field in the NFC band through the second conductive portion 1323 (e.g., the seventh metal portion E7 in FIG. 6, 7, 8, 9, 10, or 11) may include at least one matching circuit for frequency tuning, inductance value tuning, and/or impedance matching. At least one matching circuit of the first NFC antenna may be accommodated in the second housing 22 (see FIG. 2). The at least one matching circuit of the first NFC antenna may include, for example, the second matching circuit M12 of FIG. 6 or 7, the second matching circuit M32 of FIG. 8 or 9, or the second matching circuit M52 of FIG. 10 or 11. The at least one matching circuit of the first NFC antenna may include, for example, the third matching circuit M13 of FIG. 6 or 7, the third matching circuit M33 of FIG. 8 or 9, or the third matching circuit M53 of FIG. 10 or 11. In various embodiments, the at least one matching circuit of the first NFC antenna may include an inductor. Each of Graphs 1331, 1332, 1333, 1334, 1341, 1342, 1343, and 1344 illustrates antenna radiation performance (e.g., resonance characteristics) of a non-NFC antenna configured to radiate an electromagnetic field in a non-NFC band through the first conductive portion 1313 (e.g., the first metal portion E1 of FIG. 6, 7, 8, 9, 10, or 11) in the folded state of each of the first and second example foldable electronic devices 1301 and 1302, depending on an inductor value of at least one matching circuit of the first NFC antenna.

Each of Graphs 1331, 1332, 1333, and 1334 illustrates antenna radiation performance of a non-NFC antenna configured to radiate an electromagnetic field in a non-NFC band through the first conductive portion 1313 (e.g., the first metal portion E1 of FIG. 6, 7, 8, 9, 10, or 11) in the folded state of the first example foldable electronic device 1301, depending on an inductor value of at least one matching circuit of the first NFC antenna. Each of Graphs 1341, 1342, 1343, and 1344 illustrates antenna radiation performance of a non-NFC antenna configured to radiate an electromagnetic field in a non-NFC band through the first conductive portion 1313 in the folded state of the second example foldable electronic device 1302, depending on an inductor value of at least one matching circuit of the first NFC antenna. Each of Graphs 1331 and 1341 indicates a case where the inductor value of at least one matching circuit of the first NFC antenna is about 27 nH. Each of Graphs 1332 and 1342 indicates a case where the inductor value of at least one matching circuit of the first NFC antenna is about 56 nH. Each of Graphs 1333 and 1343 indicates a case where the inductor value of at least one matching circuit of the first NFC antenna is about 100 nH. Each of Graphs 1334 and 1344 indicates a case where the inductor value of at least one matching circuit of the first NFC antenna is about 200 nH.

"1351" indicates a variation range of antenna radiation performance of a non-NFC antenna configured to radiate an electromagnetic field in a non-NFC band through the first conductive portion 1313 (e.g., the first metal portion E1 of FIG. 6, 7, 8, 9, 10, or 11) in the folded state of the first example foldable electronic device 1301 when an inductor value of at least one matching circuit of the first NFC antenna is changed based on Graphs 1331, 1332, 1332, and 1332. "1352" indicates a variation range of antenna radiation performance of a non-NFC antenna configured to radiate an electromagnetic field in a non-NFC band through the first conductive portion 1313 in the folded state of the second example foldable electronic device 1302 when an inductor value of at least one matching circuit of the first NFC antenna is changed based on Graphs 1341, 1342, 1343, and 1344. According to various embodiments of the disclosure, in the folded state of the first example foldable electronic device 1301, the third contact portion P3 and the fourth contact portion P4 of the second conductive portion 1323 may be misaligned with the first contact portion P1 and the second contact portion P2 of the first conductive portion 1313. Due to this misalignment, the antenna radiation performance of the non-NFC antenna may be less affected or substantially unaffected by the inductance value of at least one matching circuit of the first NFC antenna in the first example foldable electronic device 1301 than in the second example foldable electronic device 1302.

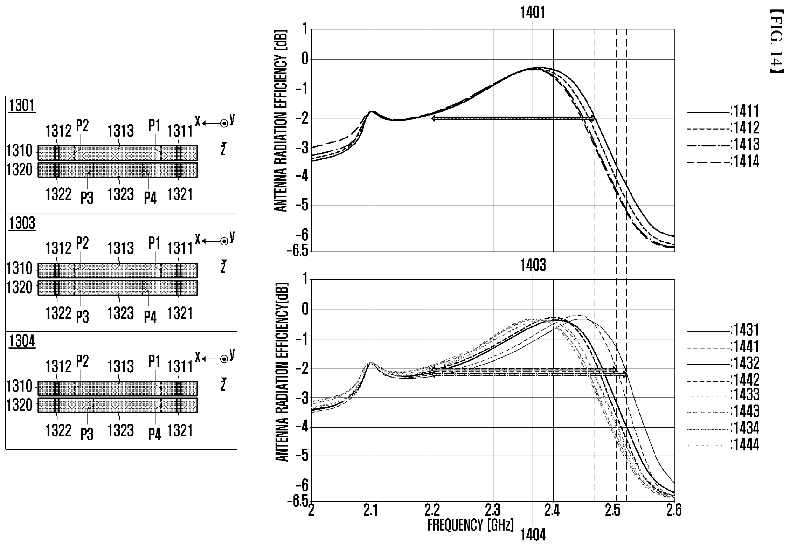

FIG. 14 is a diagram illustrating views of first, third, and fourth example electronic devices 1301, 1303, and 1304 in the folded state, and graphs each showing the antenna radiation performance of a non-NFC antenna depending on the component values of a matching circuit of a first NFC antenna in each of the first, third, and fourth example electronic devices 1301, 1303, and 1304 in the folded state according to various embodiments. Descriptions of some components of FIG. 14 that are indicated by the same reference numerals as those illustrated in FIG. 13 may not be repeated here.

According to various embodiments, in the folded state of the first example foldable electronic device 1301, the third contact portion P3 and the fourth contact portion P4 of the second conductive portion 1323 may be misaligned with the first contact portion P1 and the second contact portion P2 of the first conductive portion 1313.

According to various embodiments, in the folded state of the third example foldable electronic device 1303, the third contact portion P3 of the second conductive portion 1323 may be aligned with the second contact portion P2 of the first conductive portion 1313, which is electrically connected to the antenna ground G (see FIG. 6, 7, 8, 9, 10, or 11). In the folded state of the third example foldable electronic device 1303, the fourth contact portion P4 of the second conductive portion 1323 may be misaligned with the second contact portion P1 of the first conductive portion 1313, which is electrically connected to the first wireless communication circuit 610 (see FIG. 6, 7, 8, 9, 10, or 11).

According to various embodiments, in the folded state of the fourth example foldable electronic device 1304, the fourth contact portion P4 of the second conductive portion 1323 may be aligned with the first contact portion P1 of the first conductive portion 1313, which is electrically connected to the first wireless communication circuit 610 (see FIG. 6, 7, 8, 9, 10, or 11). In the folded state of the fourth example foldable electronic device 1304, the third contact portion P3 of the second conductive portion 1323 may be misaligned with the second contact portion P2 of the first conductive portion 1313, which is electrically connected to the antenna ground G (see FIG. 6, 7, 8, 9, 10, or 11).

According to various embodiments, in each of the first, third, and fourth example foldable electronic devices 1301, 1303, and 1304, the first NFC antenna configured to radiate an electromagnetic field in the NFC band through the second conductive portion 1323 (e.g., the seventh metal portion E7 in FIG. 6, 7, 8, 9, 10, or 11) may include at least one matching circuit for frequency tuning, inductance value tuning, and/or impedance matching. At least one matching circuit of the first NFC antenna may be accommodated in the second housing 22 (see FIG. 2). The at least one matching circuit of the first NFC antenna may include, for example, the second matching circuit M12 of FIG. 6 or 7, the second matching circuit M32 of FIG. 8 or 9, or the second matching circuit M52 of FIG. 10 or 11. The at least one matching circuit of the first NFC antenna may include, for example, the third matching circuit M13 of FIG. 6 or 7, the third matching circuit M33 of FIG. 8 or 9, or the third matching circuit M53 of FIG. 10 or 11. Each of Graphs 1411, 1412, 1413, 1414, 1431, 1432, 1433, 1434, 1441, 1442, 1443, and 1444 illustrates antenna radiation performance (e.g., resonance characteristics) of a non-NFC antenna configured to radiate an electromagnetic field in a non-NFC band through the first conductive portion 1313 (e.g., the first metal portion E1 of FIG. 6, 7, 8, 9, 10, or 11) in the folded state of each of the first, third, and fourth example foldable electronic devices 1301, 1303, and 1304, depending on an inductor value of at least one matching circuit of the first NFC antenna.

Each of Graphs 1411, 1412, 1413, and 1414 illustrates antenna radiation performance of a non-NFC antenna configured to radiate an electromagnetic field in a non-NFC band through the first conductive portion 1313 in the folded state of the first example foldable electronic device 1301, depending on an inductor value of at least one matching circuit of the first NFC antenna. Graph 1411 indicates a case where the inductor value of at least one matching circuit of the first NFC antenna is about 27 nH. Graph 1412 indicates a case where the inductor value of at least one matching circuit of the first NFC antenna is about 56 nH. Graph 1413 indicates a case where the inductor value of at least one matching circuit of the first NFC antenna is about 100 nH. Graph 1414 indicates a case where the inductor value of at least one matching circuit of the first NFC antenna is about 200 nH.

Each of Graphs 1431, 1432, 1433, and 1434 illustrates antenna radiation performance of a non-NFC antenna configured to radiate an electromagnetic field in a non-NFC band through the first conductive portion 1313 (e.g., the first metal portion E1 of FIG. 6, 7, 8, 9, 10, or 11) in the folded state of the third example foldable electronic device 1303, depending on an inductor value of at least one matching circuit of the first NFC antenna. Graph 1431 indicates a case where the inductor value of at least one matching circuit of the first NFC antenna is about 27 nH. Graph 1432 indicates a case where the inductor value of at least one matching circuit of the first NFC antenna is about 56 nH. Graph 1433 indicates a case where the inductor value of at least one matching circuit of the first NFC antenna is about 100 nH. Graph 1434 indicates a case where the inductor value of at least one matching circuit of the first NFC antenna is about 200 nH.

Each of Graphs 1441, 1442, 1443, and 1444 illustrates antenna radiation performance of a non-NFC antenna configured to radiate an electromagnetic field in a non-NFC band through the first conductive portion 1313 (e.g., the first metal portion E1 of FIG. 6, 7, 8, 9, 10, or 11) in the folded state of the fourth example foldable electronic device 1304, depending on an inductor value of at least one matching circuit of the first NFC antenna. Graph 1441 indicates a case where the inductor value of at least one matching circuit of the first NFC antenna is about 27 nH. Graph 1442 indicates a case where the inductor value of at least one matching circuit of the first NFC antenna is about 56 nH. Graph 1443 indicates a case where the inductor value of at least one matching circuit of the first NFC antenna is about 100 nH. Graph 1444 indicates a case where the inductor value of at least one matching circuit of the first NFC antenna is about 200 nH.

"1401" indicates a variation range of antenna radiation performance of a non-NFC antenna configured to radiate an electromagnetic field in a non-NFC band through the first conductive portion 1313 (e.g., the first metal portion E1 of FIG. 6, 7, 8, 9, 10, or 11) in the folded state of the first example foldable electronic device 1301 when an inductor value of at least one matching circuit of the first NFC antenna is changed based on Graphs 1411, 1412, 1413, and 1414. "1403" indicates a variation range of antenna radiation performance of a non-NFC antenna configured to radiate an electromagnetic field in a non-NFC band through the first conductive portion 1313 in the folded state of the third example foldable electronic device 1303 when an inductor value of at least one matching circuit of the first NFC antenna is changed based on Graphs 1431, 1432, 1433, and 1434. "1404" indicates a variation range of antenna radiation performance of a non-NFC antenna configured to radiate an electromagnetic field in a non-NFC band through the first conductive portion 1313 in the folded state of the fourth example foldable electronic device 1304 when an inductor value of at least one matching circuit of the first NFC antenna is changed based on Graphs 1441, 1442, 1443, and 1444. According to various embodiments, in the folded state, the third contact portion P3 and the fourth contact portion P4 of the second conductive portion 1323 may be misaligned with the first contact portion P1 and the second contact portion P2 of the first conductive portion 1313. Due to this misalignment, the antenna radiation performance of the non-NFC antenna may be less affected or substantially unaffected by the inductance value of at least one matching circuit of the first NFC antenna in the first example foldable electronic device 1301 than in the third example foldable electronic device 1303 and the fourth example foldable electronic device 1304.

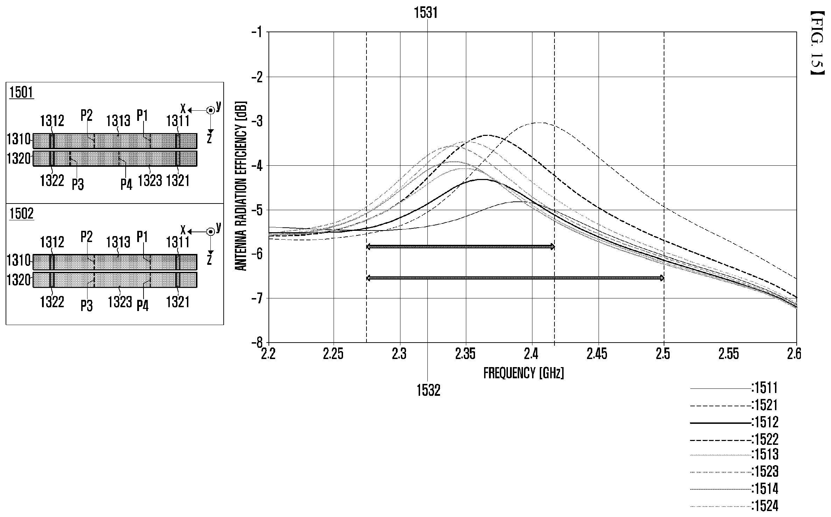

FIG. 15 is a diagram illustrating views of first and second example foldable electronic devices 1501 and 1502 in the folded state, and graphs each showing the antenna radiation performance of a non-NFC antenna depending on the component values of a matching circuit of a first NFC antenna in each of the first and second example foldable electronic devices 1501 and 1502 in the folded state according to various embodiments. Descriptions of some components of FIG. 15 that are indicated by the same reference numerals as those illustrated in FIG. 13 may not be repeated here.

According to various embodiments, in the folded state of the first example foldable electronic device 1501, the third contact portion P3 and the fourth contact portion P4 of the second conductive portion 1323 may be misaligned with the first contact portion P1 and the second contact portion P2 of the first conductive portion 1313.

According to various embodiments, in the first example foldable electronic device 1501, when viewed from above the first cover 212 (see FIG. 3) or the second cover 222 (see FIG. 3) (or when viewed in a direction orthogonal to the first cover 212 or the second cover 222), the third contact portion P3 of the second conductive portion 1323 (e.g., the seventh metal portion E7 of FIG. 6, 7, 8, 9, 10, or 11) may be located between the second non-conductive portion 1312 and the second contact portion P2 of the first conductive portion 1313 (the first metal portion E1 of FIG. 6, 7, 8, 9, 10, or 11). When viewed from above the first cover 212 (see FIG. 3) or the second cover 222 (or when viewed in a direction orthogonal to the first cover 212 or the second cover 222), the fourth contact portion P4 of the second conductive portion 1323 may be located between the first contact portion P1 and the second contact portion P2 of the first conductive portion 1313.

According to various embodiments, in the folded state of the second example foldable electronic device 1502, the third contact portion P3 of the second conductive portion 1323 may be aligned with the second contact portion P2 of the first conductive portion 1313. In the folded state of the second example foldable electronic device 1502, the fourth contact portion P4 of the second conductive portion 1323 may be aligned with the first contact portion P1 of the first conductive portion 1313. In each of the first and second example foldable electronic devices 1501 and 1502, the relative positions of the first contact portion P1 and the second contact portion P2 of the first conductive portion 1313 with respect to the first non-conductive portion 1311 and the second non-conductive portion 1312 may be the same.

According to various embodiments, in each of the first and second example foldable electronic devices 1501 and 1502, the first NFC antenna configured to radiate an electromagnetic field in the NFC band through the second conductive portion 1323 (e.g., the seventh metal portion E7 in FIG. 6, 7, 8, 9, 10, or 11) may include at least one matching circuit for frequency tuning, inductance value tuning, and/or impedance matching. At least one matching circuit of the first NFC antenna may be accommodated in the second housing 22 (see FIG. 2). The at least one matching circuit of the first NFC antenna may include, for example, the second matching circuit M12 of FIG. 6 or 7, the second matching circuit M32 of FIG. 8 or 9, or the second matching circuit M52 of FIG. 10 or 11. The at least one matching circuit of the first NFC antenna may include, for example, the third matching circuit M13 of FIG. 6 or 7, the third matching circuit M33 of FIG. 8 or 9, or the third matching circuit M53 of FIG. 10 or 11.

According to various embodiments, each of Graphs 1511, 1512, 1513, and 1514 illustrates antenna radiation performance (e.g., resonance characteristics) of a non-NFC antenna configured to radiate an electromagnetic field in a non-NFC band through the first conductive portion 1313 (e.g., the first metal portion E1 of FIG. 6, 7, 8, 9, 10, or 11) in the folded state of the first example foldable electronic device 1501, depending on an inductor value of at least one matching circuit of the first NFC antenna. Graph 1511 indicates a case where the inductor value of at least one matching circuit of the first NFC antenna is about 27 nH. Graph 1512 indicates a case where the inductor value of at least one matching circuit of the first NFC antenna is about 56 nH. Graph 1513 indicates a case where the inductor value of at least one matching circuit of the first NFC antenna is about 100 nH. Graph 1514 indicates a case where the inductor value of at least one matching circuit of the first NFC antenna is about 200 nH.

According to various embodiments, each of Graphs 1521, 1522, 1523, and 1524 illustrates antenna radiation performance of a non-NFC antenna configured to radiate an electromagnetic field in a non-NFC band through the first conductive portion 1313 (e.g., the first metal portion E1 of FIG. 6, 7, 8, 9, 10, or 11) in the folded state of the second example foldable electronic device 1502, depending on an inductor value of at least one matching circuit of the first NFC antenna. Graph 1521 indicates a case where the inductor value of at least one matching circuit of the first NFC antenna is about 27 nH. Graph 1522 indicates a case where the inductor value of at least one matching circuit of the first NFC antenna is about 56 nH. Graph 1523 indicates a case where the inductor value of at least one matching circuit of the first NFC antenna is about 100 nH. Graph 1524 indicates a case where the inductor value of at least one matching circuit of the first NFC antenna is about 200 nH.

"1531" indicates a variation range of antenna radiation performance of a non-NFC antenna configured to radiate an electromagnetic field in a non-NFC band through the first conductive portion 1313 (e.g., the first metal portion E1 of FIG. 6, 7, 8, 9, 10, or 11) in the folded state of the first example foldable electronic device 1501 when an inductor value of at least one matching circuit of the first NFC antenna is changed based on Graphs 1511, 1512, 1513, and 1514. "1532" indicates a variation range of antenna radiation performance of a non-NFC antenna configured to radiate an electromagnetic field in a non-NFC band through the first conductive portion 1313 (e.g., the first metal portion E1 of FIG. 6, 7, 8, 9, 10, or 11) in the folded state of the second example foldable electronic device 1502 when an inductor value of at least one matching circuit of the first NFC antenna is changed based on Graphs 1521, 1522, 1523, and 1524. In the folded state, the third contact portion P3 and the fourth contact portion P4 of the second conductive portion 1323 may be misaligned with the first contact portion P1 and the second contact portion P2 of the first conductive portion 1313. Due to this misalignment, the antenna radiation performance of the non-NFC antenna may be less affected or substantially unaffected by the inductance value of at least one matching circuit of the first NFC antenna in the first example foldable electronic device 1501 than in the second example foldable electronic device 1502.

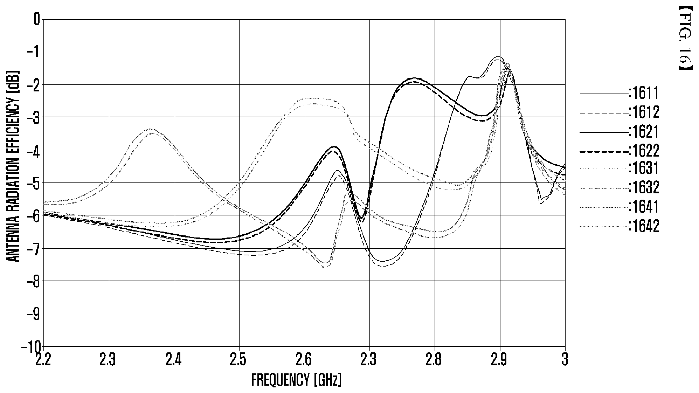

FIG. 16 is a diagram illustrating graphs each showing the antenna radiation performance of a non-NFC antenna according to an element value of the fourth matching circuit in the folded state of the foldable electronic device 2 according to various embodiments.

According to various embodiments, the fourth matching circuit may be the fourth matching circuit M14 accommodated in the second housing 22 to be electrically connected to the first NFC antenna configured to radiate an electromagnetic field of an NFC band through the seventh metal portion E7 in the foldable electronic device 2 according to the embodiment of FIG. 6.

According to various embodiments, the fourth matching circuit may be the fourth matching circuit M24 accommodated in the second housing 22 to be electrically connected to the first NFC antenna configured to radiate an electromagnetic field of an NFC band through the seventh metal portion E7 in the foldable electronic device 2 according to the embodiment of FIG. 7.

According to various embodiments, the fourth matching circuit may be the fourth matching circuit M34 accommodated in the second housing 22 to be electrically connected to the first NFC antenna configured to radiate an electromagnetic field of an NFC band through the seventh metal portion E7 in the foldable electronic device 2 according to the embodiment of FIG. 8.

According to various embodiments, the fourth matching circuit may be the fourth matching circuit M44 accommodated in the second housing 22 to be electrically connected to the first NFC antenna configured to radiate an electromagnetic field of an NFC band through the seventh metal portion E7 in the foldable electronic device 2 according to the embodiment of FIG. 9.

According to various embodiments, the fourth matching circuit may be the fourth matching circuit M54 accommodated in the second housing 22 to be electrically connected to the first NFC antenna configured to radiate an electromagnetic field of an NFC band through the seventh metal portion E7 in the foldable electronic device 2 according to the embodiment of FIG. 10.

According to various embodiments, the fourth matching circuit may be the fourth matching circuit M64 accommodated in the second housing 22 to be electrically connected to the first NFC antenna configured to radiate an electromagnetic field of an NFC band through the seventh metal portion E7 in the foldable electronic device 2 according to the embodiment of FIG. 11.

According to various embodiments, the fourth matching circuit may provide frequency tuning and/or impedance matching to reduce deterioration of antenna radiation performance of a non-NFC antenna configured to radiate an electromagnetic field in a non-NFC band through the first metal portion E1 (see FIG. 6, 7, 8, 9, 10, or 11) in a folded state of the foldable electronic device 2.

According to various embodiments, Graph 1611 shows antenna radiation performance (e.g., resonance characteristics) of a non-NFC antenna, configured to radiate an electromagnetic field of an NFC band through the first metal portion E1 (see FIG. 6, 7, 8, 9, 10, or 11) in the folded state of the foldable electronic device 2 when the inductor value of the fourth matching circuit is about 1 nH, and the first NFC antenna configured to radiate an electromagnetic field of an NFC band through the seventh metal portion E7 (see FIG. 6, 7, 8, 9, 10, or 11) is not implemented. In the embodiment of FIGS. 6, 8, and 10, when the first NFC antenna is not implemented, the fourth matching circuit may be electrically connected to, for example, the seventh metal portion E7. Graph 1612 shows antenna radiation performance (e.g., resonance characteristics) of a non-NFC antenna configured to radiate an electromagnetic field of a non-NFC band through the first metal portion E1 in the folded state of the foldable electronic device 2 when the inductor value of the fourth matching circuit is about 1 nH.

According to various embodiments, Graph 1621 shows antenna radiation performance (e.g., resonance characteristics) of a non-NFC antenna, configured to radiate an electromagnetic field of a non-NFC band through the first metal portion E1 in the folded state of the foldable electronic device 2 when the inductor value of the fourth matching circuit is about 2.7 nH, and the first NFC antenna configured to radiate an electromagnetic field of an NFC band through the seventh metal portion E7 is not implemented. In the embodiment of FIGS. 6, 8, and 10, when the first NFC antenna is not implemented, the fourth matching circuit may be electrically connected to, for example, the seventh metal portion E7. Graph 1622 shows antenna radiation performance (e.g., resonance characteristics) of a non-NFC antenna configured to radiate an electromagnetic field of a non-NFC band through the first metal portion E1 in the folded state of the foldable electronic device 2 when the inductor value of the fourth matching circuit is about 2.7 nH.

According to various embodiments, Graph 1631 shows antenna radiation performance (e.g., resonance characteristics) of a non-NFC antenna, configured to radiate an electromagnetic field of a non-NFC band through the first metal portion E1 in the folded state of the foldable electronic device 2 when the inductor value of the fourth matching circuit is about 5.6 nH, and the first NFC antenna configured to radiate an electromagnetic field of an NFC band through the seventh metal portion E7 is not implemented. In the embodiment of FIGS. 6, 8, and 10, when the first NFC antenna is not implemented, the fourth matching circuit may be electrically connected to, for example, the seventh metal portion E7. Graph 1632 shows antenna radiation performance (e.g., resonance characteristics) of a non-NFC antenna configured to radiate an electromagnetic field of a non-NFC band through the first metal portion E1 in the folded state of the foldable electronic device 2 when the inductor value of the fourth matching circuit is about 5.6 nH.

According to various embodiments, Graph 1641 shows antenna radiation performance (e.g., resonance characteristics) of a non-NFC antenna, configured to radiate an electromagnetic field of a non-NFC band through the first metal portion E1 in the folded state of the foldable electronic device 2 when the inductor value of the fourth matching circuit is about 56 nH, and the first NFC antenna configured to radiate an electromagnetic field of an NFC band through the seventh metal portion E7 is not implemented. In the embodiment of FIGS. 6, 8, and 10, when the first NFC antenna is not implemented, the fourth matching circuit may be electrically connected to, for example, the seventh metal portion E7. Graph 1642 shows antenna radiation performance (e.g., resonance characteristics) of a non-NFC antenna configured to radiate an electromagnetic field of a non-NFC band through the first metal portion E1 in the folded state of the foldable electronic device 2 when the inductor value of the fourth matching circuit is about 56 nH.

Comparing Graphs 1611 and 1612, Graphs 1621 and 1622, Graphs 1631 and 1632, and Graphs 1641 and 1642, even when the first NFC antenna configured to radiate an electromagnetic field of an NFC band through the seventh metal portion E7 is implemented to be electrically connected to the fourth matching circuit for a non-NFC antenna, the antenna radiation performance of the non-NFC antenna in the folded state of the foldable electronic device 2 may be ensured compared to the case where the first NFC antenna is not implemented. In the embodiment of FIG. 6, 7, 8, 9, 10, or 11, the misalignment between the first and second contact portions P1 and P2 of the first metal portion E1 and the third and fourth contact portions P3 and P4 of the seventh metal portion E7 in the folded state of the foldable electronic device 2 may reduce electromagnetic influence between the non-NFC antenna and the first NFC antenna, even when the first NFC antenna is implemented to be electrically connected to the fourth matching circuit for the non-NFC antenna while reducing deterioration of antenna radiation performance of the non-NFC antenna.

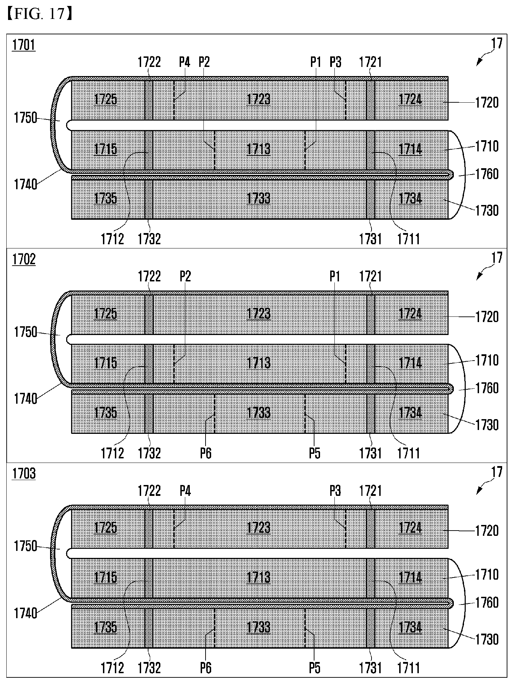

FIG. 17 is a diagram illustrating a multi-foldable electronic device 17 in the folded state according to various embodiments. It is to be understood that the disclosure conceives and includes all of the combinations of features and/or embodiments disclosed with reference to FIG. 17. That is, all of the combinations of features described below with reference to FIG. 17 are to be considered as being included in the disclosure as specific examples.

Referring to FIG. 17, a multi-foldable electronic device 17 may include a first housing 1710, a second housing 1720, a third housing 1730, and a flexible display 1740.

According to various embodiments, the multi-foldable electronic device 17 may be implemented to be foldable between the first housing 1710 and the second housing 1720. The first housing 1710 and the second housing 1720 may be rotatably connected via a first hinge portion 1750 including, for example, one or more hinges (or also referred to as hinge modules).

According to various embodiments, the multi-foldable electronic device 17 may be implemented to be foldable between the first housing 1710 and the third housing 1730. The first housing 1710 and the third housing 1730 may be rotatably connected via a second hinge portion 1760 including, for example, one or more hinges (or also referred to as hinge modules).

According to various embodiments, the flexible display 1740 may be disposed on the first housing 1710, the second housing 1720, and the third housing 1730. The flexible display 1740 may include a first display area disposed on the first housing 1710, a second display area extending from the first display area and disposed on the second housing 1720, and a third display area extending from the first display area and disposed on the third housing 1730.

According to various embodiments, in the folded state of the multi-foldable electronic device 2, the first housing 1710 may be disposed between the second housing 1720 and the third housing 1730. In the folded state of the multi-foldable electronic device 2, the first housing 1710 and the second housing 1720 may face each other while forming an angle of about 0 degrees to about 10 degrees. In the folded state of the multi-foldable electronic device 2, the first housing 1710 and the third housing 1730 may face each other while forming an angle of about 0 degrees to about 10 degrees therebetween. In the folded state of the multi-foldable electronic device 2, the first display area disposed on the first housing 1710 of the flexible display 1740, and the folding display area disposed across the first hinge portion 1750 and extending the first display area and the second display area disposed on the second housing 1720 may be exposed to the outside. In the folded state of the multi-foldable electronic device 2, the second display area disposed on the second housing 1720 and the third display area disposed on the third housing 1730 may face each other between the second housing 1720 and the third housing 1730, and may not be visible to the outside.

According to various embodiments, in the unfolded state of the multi-foldable electronic device 2, the flexible display 1740 may be disposed substantially flat, so that the first housing 1710 and the second housing 1720, and the first housing 1710 and the third housing 1730 may form an angle of about 180 degrees.

According to various embodiments, the first housing 1710 may include a first side member (also referred to as a first side part). The first side member may include a first non-conductive portion 1711, a second non-conductive portion 1712, and a first conductive portion 1713 between the first non-conductive portion 1711 and the second non-conductive portion 1712. The first non-conductive portion 1711 may be disposed between the first conductive portion 1713 and another conductive portion 1714 of the first side member. The second non-conductive portion 1712 may be disposed between the first conductive portion 1713 and still another conductive portion 1715 of the first side member.

According to various embodiments, the second housing 1720 may include a second side member (also referred to as a second side part). The second side member may include a third non-conductive portion 1721, a fourth non-conductive portion 1722, and a second conductive portion 1723 between the third non-conductive portion 1721 and the fourth non-conductive portion 1722. The third non-conductive portion 1721 may be disposed between the second conductive portion 1723 and another conductive portion 1724 of the second side member. The fourth non-conductive portion 1722 may be disposed between the second conductive portion 1723 and still another conductive portion 1725 of the second side member.

According to various embodiments, the third housing 1730 may include a third side member (also referred to as a third side part). The third side member may include a fifth non-conductive portion 1731, a sixth non-conductive portion 1732, and a third conductive portion 1733 between the fifth non-conductive portion 1731 and the sixth non-conductive portion 1732. The fifth non-conductive portion 1731 may be disposed between the third conductive portion 1733 and another conductive portion 1734 of the third side member. The sixth non-conductive portion 1732 may be disposed between the third conductive portion 1733 and still another conductive portion 1735 of the third side member.

According to various embodiments, in the folded state of the multi-foldable electronic device 17, the first side member of the first housing 1710 may be disposed between the second side member of the second housing 1720 and the third side member of the third housing 1730, and the first side member, the second side member, and the third side member may be aligned with each other. In the folded state of the multi-foldable electronic device 17, the first non-conductive portion 1711 of the first side member, the third non-conductive portion 1721 of the second side member, and the fifth non-conductive portion 1731 of the third side member may be aligned with each other. In the folded state of the multi-foldable electronic device 17, the second non-conductive portion 1712 of the first side member, the fourth non-conductive portion 1722 of the second side member, and the sixth non-conductive portion 1732 of the third side member may be aligned with each other. In the folded state of the multi-foldable electronic device 17, the first conductive portion 1713 of the first side member, the second conductive portion 1723 of the second side member, and the third non-conductive portion 1733 of the third side member may be aligned with each other.

According to an example of "1701", the multi-foldable electronic device 17 may be configured to transmit and/or receive a non-NFC band signal via the first conductive portion 1713 of the first side member. One of the first contact portion P1 and the second contact portion P2 of the first conductive portion 1713 may receive a feeding signal from a non-NFC wireless communication circuit, and the other contact portion may be electrically connected to an antenna ground of the multi-foldable electronic device 17. According to the example of "1701", the multi-foldable electronic device 17 may be configured to transmit and/or receive an NFC band signal via the second conductive portion 1723 of the second side member. For example, the third contact portion P3 and the fourth contact portion P4 of the second conductive portion 1723 may receive voltages of opposite polarities, respectively, from the NFC wireless communication circuit. For example, one of the third contact portion P3 and the fourth contact portion P4 of the second conductive portion 1723 may receive a feeding signal from the NFC wireless communication circuit, and the other contact portion may be electrically connected to the antenna ground of the multi-foldable electronic device 17.

According to the example of "1701", the multi-foldable electronic device 17 may be configured to transmit and/or receive a non-NFC band signal via the second conductive portion 1723 of the second side member. One of the third contact portion P3 and the fourth contact portion P4 of the second conductive portion 1723 may receive a feeding signal from a non-NFC wireless communication circuit, and the other contact portion may be electrically connected to an antenna ground of the multi-foldable electronic device 17. According to the example of "1701", the multi-foldable electronic device 17 may be configured to transmit and/or receive an NFC band signal via the first conductive portion 1713 of the first side member. For example, the first contact portion P1 and the second contact portion P2 of the first conductive portion 1713 may receive voltages of opposite polarities, respectively, from the NFC wireless communication circuit. For example, one of the first contact portion P1 and the second contact portion P2 of the first conductive portion 1713 may receive a feeding signal from the NFC wireless communication circuit, and the other contact portion may be electrically connected to the antenna ground of the multi-foldable electronic device 17.

According to various embodiments, in the example of "1701", when the multi-foldable electronic device 17 is in the folded state, the first and second contact portions P1 and P2 of the first conductive portion 1713 and the third and fourth contact portions P3 and P4 of the second conductive portion 1723 may be misaligned. This misalignment may reduce the electromagnetic influence between the first and second contact portions P1 and P2 of the first conductive portion 1713 having a relatively high density of radiated current and the third and fourth contact portions P3 and P4 of the second conductive portion 1723 having a relatively high density of radiated current during feeding in the folded state of the multi-foldable electronic device 17, thereby ensuring and/or improving antenna radiation performance for the NFC band and the non-NFC band.

According to an example of "1702", the multi-foldable electronic device 17 may be configured to transmit and/or receive a non-NFC band signal via the first conductive portion 1713 of the first side member. One of the first contact portion P1 and the second contact portion P2 of the first conductive portion 1713 may receive a feeding signal from a non-NFC wireless communication circuit, and the other contact portion may be electrically connected to an antenna ground of the multi-foldable electronic device 17. According to the example of "1702", the multi-foldable electronic device 17 may be configured to transmit and/or receive an NFC band signal via the third conductive portion 1733 of the third side member. For example, the fifth contact portion P5 and the six contact portion P6 of the third conductive portion 1733 may receive voltages of opposite polarities, respectively, from the NFC wireless communication circuit. For example, one of the fifth contact portion P5 and the sixth contact portion P6 of the third conductive portion 1733 may receive a feeding signal from the NFC wireless communication circuit, and the other contact portion may be electrically connected to the antenna ground of the multi-foldable electronic device 17.

According to an example of "1702", the multi-foldable electronic device 17 may be configured to transmit and/or receive a non-NFC band signal via the third conductive portion 1733 of the third side member. One of the fifth contact portion P5 and the sixth contact portion P6 of the third conductive portion 1733 may receive a feeding signal from a non-NFC wireless communication circuit, and the other contact portion may be electrically connected to an antenna ground of the multi-foldable electronic device 17. According to the example of "1702", the multi-foldable electronic device 17 may be configured to transmit and/or receive an NFC band signal via the first conductive portion 1713 of the first side member. For example, the first contact portion P1 and the second contact portion P2 of the first conductive portion 1713 may receive voltages of opposite polarities, respectively, from the NFC wireless communication circuit. For example, one of the first contact portion P1 and the second contact portion P2 of the first conductive portion 1713 may receive a feeding signal from the NFC wireless communication circuit, and the other contact portion may be electrically connected to the antenna ground of the multi-foldable electronic device 17.

According to various embodiments, in the example of "1702", when the multi-foldable electronic device 17 is in the folded state, the first and second contact portions P1 and P2 of the first conductive portion 1713 and the fifth and sixth contact portions P5 and P6 of the third conductive portion 1733 may be misaligned. This misalignment may reduce the electromagnetic influence between the first and second contact portions P1 and P2 of the first conductive portion 1713 having a relatively high density of radiated current and the fifth and sixth contact portions P5 and P6 of the third conductive portion 1733 having a relatively high density of radiated current during feeding in the folded state of the multi-foldable electronic device 17, thereby ensuring and/or improving antenna radiation performance for the NFC band and the non-NFC band.

According to an example of "1703", the multi-foldable electronic device 17 may be configured to transmit and/or receive a non-NFC band signal via the second conductive portion 1723 of the second side member. One of the third contact portion P3 and the fourth contact portion P4 of the second conductive portion 1723 may receive a feeding signal from a non-NFC wireless communication circuit, and the other contact portion may be electrically connected to an antenna ground of the multi-foldable electronic device 17. According to the example of "1703", the multi-foldable electronic device 17 may be configured to transmit and/or receive an NFC band signal via the third conductive portion 1733 of the third side member. For example, the fifth contact portion P5 and the six contact portion P6 of the third conductive portion 1733 may receive voltages of opposite polarities, respectively, from the NFC wireless communication circuit. For example, one of the fifth contact portion P5 and the sixth contact portion P6 of the third conductive portion 1733 may receive a feeding signal from the NFC wireless communication circuit, and the other contact portion may be electrically connected to the antenna ground of the multi-foldable electronic device 17.

According to an example of "1703", the multi-foldable electronic device 17 may be configured to transmit and/or receive a non-NFC band signal via the third conductive portion 1733 of the third side member. One of the fifth contact portion P5 and the sixth contact portion P6 of the third conductive portion 1733 may receive a feeding signal from a non-NFC wireless communication circuit, and the other contact portion may be electrically connected to an antenna ground of the multi-foldable electronic device 17. According to the example of "1703", the multi-foldable electronic device 17 may be configured to transmit and/or receive an NFC band signal via the second conductive portion 1723 of the second side member. For example, the third contact portion P3 and the fourth contact portion P4 of the second conductive portion 1723 may receive voltages of opposite polarities, respectively, from the NFC wireless communication circuit. For example, one of the third contact portion P3 and the fourth contact portion P4 of the second conductive portion 1723 may receive a feeding signal from the NFC wireless communication circuit, and the other contact portion may be electrically connected to the antenna ground of the multi-foldable electronic device 17.

According to various embodiments, in the example of "1703", when the multi-foldable electronic device 17 is in the folded state, the third and fourth contact portions P3 and P4 of the second conductive portion 1723 and the fifth and sixth contact portions P5 and P6 of the third conductive portion 1733 may be misaligned. This misalignment may reduce the electromagnetic influence between the third and fourth contact portions P3 and P4 of the second conductive portion 1723 having a relatively high density of radiated current and the fifth and sixth contact portions P5 and P6 of the third conductive portion 1733 having a relatively high density of radiated current during feeding in the folded state of the multi-foldable electronic device 17, thereby ensuring and/or improving antenna radiation performance for the NFC band and the non-NFC band.

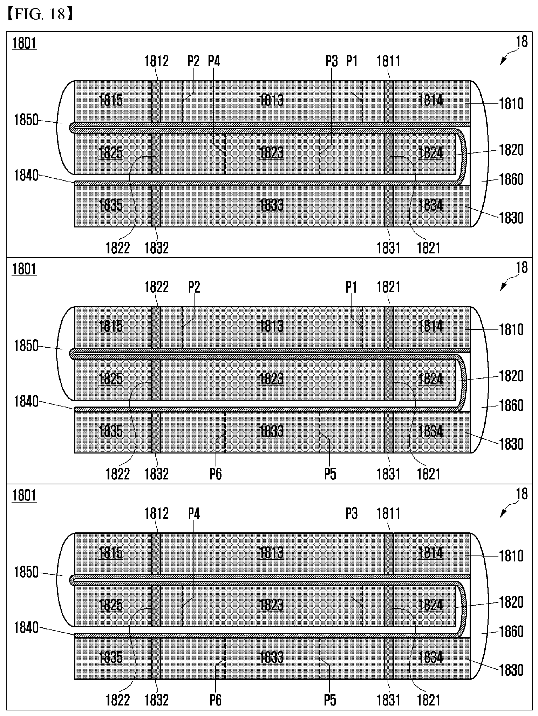

FIG. 18 is a diagram illustrating a multi-foldable electronic device 18 in the folded state according to various embodiments. It is to be understood that the disclosure conceives and includes all of the combinations of features and/or embodiments disclosed with reference to FIG. 18. That is, all of the combinations of features described below with reference to FIG. 18 are to be considered as being included in the disclosure as specific examples.

Referring to FIG. 18, a multi-foldable electronic device 18 may include a first housing 1810, a second housing 1820, a third housing 1830, and a flexible display 1840.

According to various embodiments, the multi-foldable electronic device 18 may be implemented to be foldable between the first housing 1810 and the second housing 1820. The first housing 1810 and the second housing 1820 may be rotatably connected via a first hinge portion 1850 including, for example, one or more hinges (or also referred to as hinge modules).

According to various embodiments, the multi-foldable electronic device 18 may be implemented to be foldable between the first housing 1810 and the third housing 1830. The first housing 1810 and the third housing 1830 may be rotatably connected via a second hinge portion 1860 including, for example, one or more hinges (or also referred to as hinge modules).

According to various embodiments, the flexible display 1840 may be disposed on the first housing 1810, the second housing 1820, and the third housing 1830. The flexible display 1840 may include a first display area disposed on the first housing 1810, a second display area extending from the first display area and disposed on the second housing 1820, and a third display area extending from the first display area and disposed on the third housing 1830.

According to various embodiments, in the folded state of the multi-foldable electronic device 2, the second housing 1820 may be disposed between the first housing 1810 and the third housing 1830. In the folded state of the multi-foldable electronic device 2, the second housing 1820 may face the first housing 1810 while forming an angle of about 0 degrees to about 10 degrees with the first housing 1810. In the folded state of the multi-foldable electronic device 2, the third housing 1830 may face the second housing 1820 while forming an angle of about 0 degrees to about 10 degrees with the first housing 1810. In the folded state of the multi-foldable electronic device 2, the flexible display 1840 may not be visible to the outside. In the folded state of the multi-foldable electronic device 2, the first display area disposed on the first housing 1810 and the second display area disposed on the second housing 1820 may face each other between the first housing 1810 and the second housing 1820. In the folded state of the multi-foldable electronic device 2, the third display area disposed on the third housing 1830 may be positioned between the second housing 1820 and the third housing 1830.

According to various embodiments, in the unfolded state of the multi-foldable electronic device 2, the flexible display 1840 may be disposed substantially flat, so that the first housing 1810 and the second housing 1820, and the first housing 1810 and the third housing 1830 may form an angle of about 180 degrees.

According to various embodiments, the first housing 1810 may include a first side member (also referred to as a first side part). The first side member may include a first non-conductive portion 1811, a second non-conductive portion 1812, and a first conductive portion 1813 between the first non-conductive portion 1811 and the second non-conductive portion 1812. The first non-conductive portion 1811 may be disposed between the first conductive portion 1813 and another conductive portion 1814 of the first side member. The second non-conductive portion 1812 may be disposed between the first conductive portion 1813 and still another conductive portion 1815 of the first side member.

According to various embodiments, the second housing 1820 may include a second side member (also referred to as a second side part). The second side member may include a third non-conductive portion 1821, a fourth non-conductive portion 1822, and a second conductive portion 1823 between the third non-conductive portion 1821 and the fourth non-conductive portion 1822. The third non-conductive portion 1821 may be disposed between the second conductive portion 1823 and another conductive portion 1824 of the second side member. The fourth non-conductive portion 1822 may be disposed between the second conductive portion 1823 and still another conductive portion 1825 of the second side member.

According to various embodiments, the third housing 1830 may include a third side member (also referred to as a third side part). The third side member may include a fifth non-conductive portion 1831, a sixth non-conductive portion 1832, and a third conductive portion 1833 between the fifth non-conductive portion 1831 and the sixth non-conductive portion 1832. The fifth non-conductive portion 1831 may be disposed between the third conductive portion 1833 and another conductive portion 1834 of the third side member. The sixth non-conductive portion 1832 may be disposed between the third conductive portion 1833 and still another conductive portion 1835 of the third side member.

According to various embodiments, in the folded state of the multi-foldable electronic device 18, the second side member of the second housing 1820 may be disposed between the second side member of the first housing 1810 and the third side member of the third housing 1830, and the first side member, the second side member, and the third side member may be aligned with each other. In the folded state of the multi-foldable electronic device 18, the first non-conductive portion 1811 of the first side member, the third non-conductive portion 1821 of the second side member, and the fifth non-conductive portion 1831 of the third side member may be aligned with each other. In the folded state of the multi-foldable electronic device 18, the second non-conductive portion 1812 of the first side member, the fourth non-conductive portion 1822 of the second side member, and the sixth non-conductive portion 1832 of the third side member may be aligned with each other. In the folded state of the multi-foldable electronic device 18, the first conductive portion 1813 of the first side member, the second conductive portion 1823 of the second side member, and the third non-conductive portion 1833 of the third side member may be aligned with each other.

According to an example of "1801", the multi-foldable electronic device 17 may be configured to transmit and/or receive a non-NFC band signal via the first conductive portion 1813 of the first side member. One of the first contact portion P1 and the second contact portion P2 of the first conductive portion 1813 may receive a feeding signal from a non-NFC wireless communication circuit, and the other contact portion may be electrically connected to an antenna ground of the multi-foldable electronic device 18. According to the example of "1801", the multi-foldable electronic device 18 may be configured to transmit and/or receive a non-NFC band signal via the second conductive portion 1823 of the second side member. For example, the third contact portion P3 and the fourth contact portion P4 of the second conductive portion 1823 may receive voltages of opposite polarities, respectively, from the NFC wireless communication circuit. For example, one of the third contact portion P3 and the fourth contact portion P4 of the second conductive portion 1823 may receive a feeding signal from the NFC wireless communication circuit, and the other contact portion may be electrically connected to the antenna ground of the multi-foldable electronic device 18.

According to the example of "1801", the multi-foldable electronic device 18 may be configured to transmit and/or receive a non-NFC band signal via the second conductive portion 1823 of the second side member. One of the third contact portion P3 and the fourth contact portion P4 of the second conductive portion 1823 may receive a feeding signal from a non-NFC wireless communication circuit, and the other contact portion may be electrically connected to an antenna ground of the multi-foldable electronic device 18. According to the example of "1801", the multi-foldable electronic device 18 may be configured to transmit and/or receive an NFC band signal via the first conductive portion 1813 of the first side member. For example, the first contact portion P1 and the second contact portion P2 of the first conductive portion 1813 may receive voltages of opposite polarities, respectively, from the NFC wireless communication circuit. For example, one of the first contact portion P1 and the second contact portion P2 of the first conductive portion 1813 may receive a feeding signal from the NFC wireless communication circuit, and the other contact portion may be electrically connected to the antenna ground of the multi-foldable electronic device 18.

According to various embodiments, in the example of "1801", when the multi-foldable electronic device 18 is in the folded state, the first and second contact portions P1 and P2 of the first conductive portion 1813 and the third and fourth contact portions P3 and P4 of the second conductive portion 1823 may be misaligned. This misalignment may reduce the electromagnetic influence between the first and second contact portions P1 and P2 of the first conductive portion 1813 having a relatively high density of radiated current and the third and fourth contact portions P3 and P4 of the second conductive portion 1823 having a relatively high density of radiated current during feeding in the folded state of the multi-foldable electronic device 18, thereby ensuring and/or improving antenna radiation performance for the NFC band and the non-NFC band.

According to an example of "1802", the multi-foldable electronic device 18 may be configured to transmit and/or receive a non-NFC band signal via the first conductive portion 1813 of the first side member. One of the first contact portion P1 and the second contact portion P2 of the first conductive portion 1813 may receive a feeding signal from a non-NFC wireless communication circuit, and the other contact portion may be electrically connected to an antenna ground of the multi-foldable electronic device 18. According to the example of "1802", the multi-foldable electronic device 18 may be configured to transmit and/or receive an NFC band signal via the third conductive portion 1833 of the third side member. For example, the fifth contact portion P5 and the six contact portion P6 of the third conductive portion 1833 may receive voltages of opposite polarities, respectively, from the NFC wireless communication circuit. For example, one of the fifth contact portion P5 and the sixth contact portion P6 of the third conductive portion 1833 may receive a feeding signal from the NFC wireless communication circuit, and the other contact portion may be electrically connected to the antenna ground of the multi-foldable electronic device 18.

According to an example of "1802", the multi-foldable electronic device 18 may be configured to transmit and/or receive a non-NFC band signal via the third conductive portion 1833 of the third side member. One of the fifth contact portion P5 and the sixth contact portion P6 of the third conductive portion 1833 may receive a feeding signal from a non-NFC wireless communication circuit, and the other contact portion may be electrically connected to an antenna ground of the multi-foldable electronic device 18. According to the example of "1802", the multi-foldable electronic device 18 may be configured to transmit and/or receive an NFC band signal via the first conductive portion 1813 of the first side member. For example, the first contact portion P1 and the second contact portion P2 of the first conductive portion 1813 may receive voltages of opposite polarities, respectively, from the NFC wireless communication circuit. For example, one of the first contact portion P1 and the second contact portion P2 of the first conductive portion 1813 may receive a feeding signal from the NFC wireless communication circuit, and the other contact portion may be electrically connected to the antenna ground of the multi-foldable electronic device 18.

According to various embodiments, in the example of "1802", when the multi-foldable electronic device 18 is in the folded state, the first and second contact portions P1 and P2 of the first conductive portion 1813 and the fifth and sixth contact portions P5 and P6 of the third conductive portion 1833 may be misaligned. This misalignment may reduce the electromagnetic influence between the first and second contact portions P1 and P2 of the first conductive portion 1813 having a relatively high density of radiated current and the fifth and sixth contact portions P5 and P6 of the third conductive portion 1833 having a relatively high density of radiated current during feeding in the folded state of the multi-foldable electronic device 18, thereby ensuring and/or improving antenna radiation performance for the NFC band and the non-NFC band.

According to an example of "1803", the multi-foldable electronic device 18 may be configured to transmit and/or receive a non-NFC band signal via the second conductive portion 1823 of the second side member. One of the third contact portion P3 and the fourth contact portion P4 of the second conductive portion 1823 may receive a feeding signal from a non-NFC wireless communication circuit, and the other contact portion may be electrically connected to an antenna ground of the multi-foldable electronic device 18. According to the example of "1803", the multi-foldable electronic device 18 may be configured to transmit and/or receive an NFC band signal via the third conductive portion 1833 of the third side member. For example, the fifth contact portion P5 and the six contact portion P6 of the third conductive portion 1833 may receive voltages of opposite polarities, respectively, from the NFC wireless communication circuit. For example, one of the fifth contact portion P5 and the sixth contact portion P6 of the third conductive portion 1833 may receive a feeding signal from the NFC wireless communication circuit, and the other contact portion may be electrically connected to the antenna ground of the multi-foldable electronic device 18.

According to the example of "1803", the multi-foldable electronic device 18 may be configured to transmit and/or receive a non-NFC band signal via the third conductive portion 1833 of the third side member. One of the fifth contact portion P5 and the sixth contact portion P6 of the third conductive portion 1833 may receive a feeding signal from a non-NFC wireless communication circuit, and the other contact portion may be electrically connected to an antenna ground of the multi-foldable electronic device 18. According to the example of "1803", the multi-foldable electronic device 18 may be configured to transmit and/or receive a non-NFC band signal via the second conductive portion 1823 of the second side member. For example, the third contact portion P3 and the fourth contact portion P4 of the second conductive portion 1823 may receive voltages of opposite polarities, respectively, from the NFC wireless communication circuit. For example, one of the third contact portion P3 and the fourth contact portion P4 of the second conductive portion 1823 may receive a feeding signal from the NFC wireless communication circuit, and the other contact portion may be electrically connected to the antenna ground of the multi-foldable electronic device 18.

According to various embodiments, in the example of "1803", when the multi-foldable electronic device 18 is in the folded state, the third and fourth contact portions P3 and P4 of the second conductive portion 1823 and the fifth and sixth contact portions P5 and P6 of the third conductive portion 1833 may be misaligned. This misalignment may reduce the electromagnetic influence between the third and fourth contact portions P3 and P4 of the second conductive portion 1823 having a relatively high density of radiated current and the fifth and sixth contact portions P5 and P6 of the third conductive portion 1833 having a relatively high density of radiated current during feeding in the folded state of the multi-foldable electronic device 18, thereby ensuring and/or improving antenna radiation performance for the NFC band and the non-NFC band.

According to various example embodiments, the technical features of the disclosure are applicable to a multi-foldable electronic device (not separately illustrated) in which a screen (or a flexible display) can be folded three or more times.

According to various example embodiments of the disclosure, a foldable electronic device includes a first housing, a second housing, a hinge, a first wireless communication circuit, and a second wireless communication circuit. The first housing includes a first rear cover and a first side member (e.g., a first side part 2112). The second housing includes a second rear cover and a second side member (e.g., the second side part 2212). The hinge portion rotatably interconnects the first housing and the second housing. The first wireless communication circuit is configured to transmit and/or receive a first wireless signal of a first frequency band through a first conductive portion (e.g., the first metal portion E1) included in the first side member. The second wireless communication circuit is configured to transmit and/or receive a second wireless signal of a second frequency band through a second conductive portion (e.g., the second metal portion E7) included in the second side member. The first conductive portion includes a first contact portion electrically connected to the first wireless communication circuit. The second conductive portion includes a second contact portion (e.g., the third contact portion P3) electrically connected to the second wireless communication circuit. The first conductive portion overlaps the second conductive portion in a direction orthogonal to the first rear cover in a folded state of the foldable electronic device. In the folded state of the foldable electronic device, the first contact portion P1 and the second contact portion (e.g., the third contact portion P3) are not aligned.

According to various example embodiments of the disclosure, the second conductive portion (e.g., the seventh metal portion E7) may further include a third contact portion (e.g., the fourth contact portion P4) electrically connected to the second wireless communication circuit. A positive voltage may be fed from the second wireless communication circuit to the second contact portion (e.g., the third contact portion P3) of the second conductive portion. A negative voltage may be fed from the second wireless communication circuit to the third contact portion (e.g., the fourth contact portion P4) of the second conductive portion. In the folded state of the foldable electronic device, the first contact portion may be misaligned with the second contact portion (e.g., the third contact portion P3) and the third contact portion (e.g., the fourth contact portion P4).

According to various example embodiments of the disclosure, the first conductive portion (e.g., the first metal portion E1) may further include a fourth contact portion (e.g., the second contact portion P2) electrically connected to a ground (e.g., the antenna ground G) of the foldable electronic device. In the folded state of the foldable electronic device, the first contact portion and the fourth contact portion (e.g., the second contact portion P2) may not be aligned with the second contact portion (e.g., the third contact portion P3) and the third contact portion (e.g., the fourth contact portion P4).

According to various example embodiments of the disclosure, the ground (e.g., the antenna ground G) of the foldable electronic device may include a first ground area located in the first housing, and a second ground area located in the second housing and electrically connected to the first ground area. The foldable electronic device may include a first non-ground area and a second non-ground area. The first non-ground area may be located between the first conductive portion (e.g., the first metal portion E1) and the first ground area such that the first conductive portion and the first ground are spaced apart from each other. The second non-ground area may be located between the second conductive portion (e.g., the seventh metal portion E7) and the second ground area such that the second conductive portion (e.g., the seventh metal portion E7) and the second ground area are spaced apart from each other. In the folded state of the foldable electronic device, the first non-ground area and the second non-ground area may be aligned with each other.

According to various example embodiments of the disclosure, the foldable electronic device may include a first electrical path and a second electrical path. A positive voltage may be transmitted from the second wireless communication circuit to the second contact portion (e.g., the third contact portion P3) of the second conductive portion (e.g., the seventh metal portion E7) through the first electrical path. A negative voltage may be transmitted from the second wireless communication circuit to the third contact portion (e.g., the fourth contact portion P4) of the second conductive portion (e.g., the seventh metal portion E7) through the second electrical path. The second wireless communication circuit may be accommodated in the first housing. The first electrical path and the second electrical path may be arranged across the hinge portion.

According to various example embodiments of the disclosure, the foldable electronic device may include a coil-shaped conductive pattern, a third electrical path, and a fourth electrical path. The coil-shaped conductive pattern may be accommodated in the first housing and may extend from a first end to a second end. The third electrical path may electrically connect the first electrical path and the first end of the coil-shaped conductive pattern such that a positive voltage is fed to the first end of the coil-shaped conductive pattern. The fourth electrical path may electrically connect the second electrical path and a second end of the coil-shaped conductive pattern such that a negative voltage is supplied to the second end of the coil-shaped conductive pattern.

According to various example embodiments of the disclosure, the foldable electronic device may include a fifth electrical path and a matching circuit (e.g., the fourth matching circuit M14). The fifth electrical path may be accommodated in the second housing and may electrically connect the first electrical path or the second electrical path to a ground (e.g., the antenna ground G) of the foldable electronic device. The matching circuit (e.g., the fourth matching circuit M14) may be disposed in the fifth electrical path to reduce a shift in resonance frequency or an impedance mismatch for the first conductive portion (e.g., the first metal portion E1) due to the overlapping between the first conductive portion (e.g., the first metal portion E1) and the second conductive portion (e.g., the seventh metal portion E7) in the folded state of the foldable electronic device. Under the control of at least one processor, comprising processing circuitry, individually and/or collectively, included in the foldable electronic device, the matching circuit (e.g., the fourth matching circuit M14) may vary the element value depending on whether the foldable electronic device is in the folded state or the unfolded state.

According to various example embodiments of the disclosure, the foldable electronic device may include a fifth electrical path and a matching circuit (e.g., the fourth matching circuit M24). The fifth electrical path may be accommodated in the second housing and may electrically connect the second conductive portion (e.g., the seventh metal portion E7) and the ground (e.g., the antenna ground G) of the foldable electronic device. The matching circuit (e.g., the fourth matching circuit M24) may be disposed in the fifth electrical path to reduce a shift in resonance frequency or an impedance mismatch for the first conductive portion due to the overlapping between the first conductive portion (e.g., the first metal portion E1) and the second conductive portion (e.g., the seventh metal portion E7) in the folded state of the foldable electronic device. Under the control of at least one processor, comprising processing circuitry, included in the foldable electronic device, individually and/or collectively, the matching circuit (e.g., the fourth matching circuit M24) may vary the element value based on whether the foldable electronic device is in the folded state or the unfolded state.

According to various example embodiments of the disclosure, the foldable electronic device may include at least one inductor (e.g., the second matching circuit M12, the third matching circuit M13, the second matching circuit M32, and/or the third matching circuit M33) accommodated in the second housing. The at least one inductor may be disposed in the first electrical path or the second electrical path for frequency tuning and/or impedance matching for the second conductive portion (e.g., the seventh metal portion E7).

According to various example embodiments of the disclosure, the first conductive portion (e.g., the first metal portion E1) and the second conductive portion (e.g., the seventh metal portion E7) may extend in a direction perpendicular to a folding axis of the foldable electronic device.

According to various example embodiments of the disclosure, the second conductive portion (e.g., the seventh metal portion E7) may further include a third contact portion (e.g., the fourth contact portion P4) electrically connected to a ground (e.g., the antenna ground G) of the foldable electronic device. In the folded state of the foldable electronic device, the first contact portion may not be aligned with the second contact portion (e.g., the third contact portion P3) and the third contact portion (e.g., the fourth contact portion P4).

According to various example embodiments of the disclosure, the foldable electronic device may include a balun, a first electrical path, a second electrical path, a third electrical path, and a fourth electrical path. The first electrical path may electrically connect the balun and the second wireless communication circuit. The second electrical path may electrically connect the balun and the second wireless communication circuit. The third electrical path may electrically connect the balun and the second contact portion (e.g., the third contact portion P3) of the second conductive portion (e.g., the seventh metal portion E7). The fourth electrical path may be accommodated in the second housing and may electrically connect the third contact portion (e.g., the fourth contact portion P4) of the second conductive portion (e.g., the seventh metal portion E7) and the ground (e.g., the antenna ground G) of the foldable electronic device. The second wireless communication circuit may output a positive voltage to the first electrical path and a negative voltage to the second electrical path. The balun may pass one of the positive voltage and the negative voltage to the third electrical path.

According to various example embodiments of the disclosure, the foldable electronic device may include a coil-shaped conductive pattern, a fifth electrical path, and a sixth electrical path. The coil-shaped conductive pattern may be accommodated in the first housing and may extend from a first end to a second end. To feed a positive voltage to a first end of the coil-shaped conductive pattern, the fifth electrical path may electrically connect the first electrical path and the first end of the coil-shaped conductive pattern. To feed a negative voltage to the a second end of the coil-shaped conductive pattern, the sixth electrical path may electrically connect the second electrical path and the second end of the coil-shaped conductive pattern.

According to various example embodiments of the disclosure, the second wireless communication circuit, the balun, the first electrical path, and the second electrical path may be accommodated in the first housing. The third electrical path may be disposed across the hinge portion.

According to various example embodiments of the disclosure, the second wireless communication circuit and the balun may be accommodated in the second housing. The first electrical path and the second electrical path may be disposed across the hinge portion. The third electrical path may be accommodated in the second housing.

According to various example embodiments of the disclosure, the foldable electronic device may include a seventh electrical path and a matching circuit (e.g., the fourth matching circuit M54). The seventh electrical path may be accommodated in the second housing and may electrically connect the third electrical path and the ground (e.g., the antenna ground G) of the foldable electronic device. To reduce the shift in the resonant frequency or impedance mismatch of the first conductive portion (e.g., the first metal portion E1) due to the overlap between the first conductive portion (e.g., the first metal portion E1) and the second conductive portion (e.g., the seventh metal portion E7) in the folded state of the foldable electronic device, the matching circuit (e.g., the fourth matching circuit M54) may be disposed in the seventh electrical path. Under the control of at least one processor, comprising processing circuitry, included in the foldable electronic device, individually and/or collectively, the matching circuit (e.g., the fourth matching circuit M54) may vary the element value based on whether the foldable electronic device is in the folded state or the unfolded state.

According to various example embodiments of the disclosure, the foldable electronic device may include a seventh electrical path and a matching circuit (e.g., the fourth matching circuit M64). The seventh electrical path may be accommodated in the second housing and may electrically connect the second conductive portion (e.g., the seventh metal portion E7) and the ground (e.g., the antenna ground G) of the foldable electronic device. To reduce the shift in the resonant frequency or impedance mismatch of the first conductive portion (e.g., the first metal portion E1) due to the overlap between the first conductive portion (e.g., the first metal portion E1) and the second conductive portion (e.g., the seventh metal portion E7) in the folded state of the foldable electronic device, the matching circuit (e.g., the fourth matching circuit M64) may be disposed in the seventh electrical path. Under the control of at least one processor, comprising processing circuitry, included in the foldable electronic device, individually and/or collectively, the matching circuit (e.g., the fourth matching circuit M64) may vary the element value based on whether the foldable electronic device is in the folded state or the unfolded state.

According to various example embodiments of the disclosure, the foldable electronic device may include at least one inductor (e.g., the second matching circuit M52 and/or the third matching circuit M53) accommodated in the second housing. The at least one inductor may be disposed in the third electrical path or the fourth electrical path for frequency tuning and/or impedance matching for the second conductive portion (e.g., the seventh metal portion E7).

According to various example embodiments of the disclosure, the first side member (e.g., the first side part 2112) may further include a first non-conductive portion (e.g., the first non-metal portion F1) and a second non-conductive portion (e.g., the sixth non-metal portion F6). The first conductive portion (e.g., the first metal portion E1) may be disposed between the first non-conductive portion (e.g., the first non-metal portion F1) and the second non-conductive portion (e.g., the sixth non-metal portion F6). The first side member (e.g., the second side part 2212) may further include a third non-conductive portion (e.g., the seventh non-metal portion F7) and a fourth non-conductive portion (e.g., the twelfth non-metal portion F12). The second conductive portion (e.g., the seventh metal portion E7) may be disposed between the third non-conductive portion (e.g., the seventh non-metal portion F7) and the fourth non-conductive portion (e.g., the twelfth non-metal portion F12). The first non-conductive portion (e.g., the first non-metal portion F1) may overlap the third non-conductive portion (e.g., the seventh non-metal portion F7) in a direction orthogonal to the first rear cover in the folded state of the foldable electronic device. The second non-conductive portion (e.g., the sixth non-metal portion F6) may overlap the fourth non-conductive portion (e.g., the twelfth non-metal portion F12) in a direction orthogonal to the first rear cover in the folded state of the foldable electronic device.

According to various example embodiments of the disclosure, the first frequency band is a non-NFC band, and the second frequency band may be an NFC band.

Embodiments disclosed in the disclosure and drawings are merely presented as examples to easily describe technical content and aid understanding of the disclosure, and are not intended to limit the scope of the disclosure. Accordingly, the scope of the various embodiments of the disclosure should be understood as including various changes or modifications of the embodiments in addition to the embodiments disclosed herein. In addition, it will be appreciated that any embodiment(s) described herein may be used with any other embodiment(s) described herein. For example, it is emphasized that although the disclosure is presented in a form that provides a number of embodiments, various embodiments may be linked only by reference to the same drawing or drawings. The disclosure is to be understood to include all of the combinations of two (or more) embodiments unless there is an apparent contradiction therebetween. For example, when features are presented as optional in the disclosure, all of the combinations of those optional features are included in the disclosure.

## Claims

1. A foldable electronic device (2) comprising:
a first housing (21) comprising a first rear cover (212) and a first side member (2112);
a second housing (22) comprising a second rear cover (222) and a second side member (2212);
a hinge portion (24) rotatably connecting the first housing (21) and the second housing (22);
a first wireless communication circuit (610) configured to transmit and/or receive a first wireless signal of a first frequency band through a first conductive portion (E1) included in the first side member (2112); and
a second wireless communication circuit (620) configured to transmit and/or receive a second wireless signal of a second frequency band through a second conductive portion (E7) included in the second side member (2212),
wherein the first conductive portion (E1) comprises a first contact portion (P1) electrically connected to the first wireless communication circuit (610),
wherein the second conductive portion (E7) comprises a second contact portion (P3) electrically connected to the second wireless communication circuit (620),
wherein, in a folded state of the foldable electronic device (2), the first conductive portion (E1) overlaps the second conductive portion (E7) in a direction orthogonal to the first rear cover (212), and
wherein, in the folded state of the foldable electronic device (2), the first contact portion (P1) and the second contact portion (P3) are not aligned with each other.

2. The foldable electronic device of claim 1, wherein the second conductive portion (E7) further comprises a third contact portion (P4) electrically connected to the second wireless communication circuit (620),
wherein the foldable electronic device (2) is configured to feed a positive voltage to the second contact portion (P3) of the second conductive portion (E7) from the second wireless communication circuit (620),
wherein the foldable electronic device (2) is configured to feed a negative voltage to the third contact portion (P4) of the second conductive portion (E7) from the second wireless communication circuit (620), and
wherein, in the folded state of the foldable electronic device (2), the first contact portion (P1) is not aligned with the second contact portion (P3) and the third contact portion (P4).

3. The foldable electronic device of claim 2, wherein the first conductive portion (E1) further comprises a fourth contact portion (P2) electrically connected to a ground (G) of the foldable electronic device (2), and
wherein, in the folded state of the foldable electronic device (2), the first contact portion (P1) and the fourth contact portion (P2) are not aligned with the second contact portion (P3) and the third contact portion (P4).

4. The foldable electronic device of claim 3, wherein the ground (G) of the foldable electronic device (2) comprises a first ground area (G1) located in the first housing (21), and a second ground area (G2) located in the second housing (22) and electrically connected to the first ground area (G1), and
wherein the foldable electronic device (2) comprises:
a first non-ground area (NG1) located between the first conductive portion (E1) and the first ground area (G1) wherein the first conductive portion (E1) and the first ground area (G1) are spaced apart from each other; and
a second non-ground area (NG2) located between the second conductive portion (E7) and the second ground area (G2) wherein the second conductive portion (E7) and the second ground area (G2) are spaced apart from each other, and
wherein, in the folded state of the foldable electronic device (2), the first non-ground area (NG1) and the second non-ground area (NG2) are aligned with each other.

5. The foldable electronic device of claim 2, comprising:
a first electrical path (EP11, EP31) configured to transmit the positive voltage from the second wireless communication circuit (620) to the second contact portion (P3) of the second conductive portion (E7); and
a second electrical path (EP12, EP32) configured to transmit the negative voltage from the second wireless communication circuit (620) to the third contact portion (P4) of the second conductive portion (E7),
wherein the second wireless communication circuit (620) is accommodated in the first housing (21), and
wherein the first electrical path (EP11, EP31) and the second electrical path (EP12, EP32) are disposed across the hinge portion (24).

6. The foldable electronic device of claim 5, comprising:
a coil-shaped conductive pattern (630) accommodated in the first housing (21) and having a first end (631) and a second end (632);
a third electrical path (EP13) electrically connecting the first electrical path (EP11) and the first end (631) of the coil-shaped conductive pattern (630) wherein the foldable electronic device (2) is configured to feed the positive voltage to the first end (631) of the coil-shaped conductive pattern (630); and
a fourth electrical path (EP14) electrically connecting the second electrical path (EP12) and the second end (632) of the coil-shaped conductive pattern (630) wherein the foldable electronic device (2) is configured to feed the negative voltage to the second end (632) of the coil-shaped conductive pattern (630).

7. The foldable electronic device of claim 5, comprising:
a fifth electrical path (EP15) accommodated in the second housing (22) and electrically connecting the first electrical path (EP11) or the second electrical path (EP12) to a ground (G) of the foldable electronic device (2); and
a matching circuit (M14) disposed in the fifth electrical path (EP15) and configured to reduce a shift in resonant frequency or impedance mismatch for the first conductive portion (E1) due to overlapping between the first conductive portion (E1) and the second conductive portion (E7) in the folded state of the foldable electronic device (2),
wherein, under control of at least one processor (120) included in the foldable electronic device (2), the matching circuit (M14) is configured to vary an element value based on whether the foldable electronic device (2) is in the folded state or the unfolded state.

8. The foldable electronic device of claim 5, comprising:
a fifth electrical path (EP25) accommodated in the second housing (22) and electrically connecting the second conductive portion (E7) and a ground (G) of the foldable electronic device (2); and
a matching circuit (M24) disposed in the fifth electrical path (EP25) and configured to reduce a shift in resonant frequency or impedance mismatch for the first conductive portion (E1) due to overlapping between the first conductive portion (E1) and the second conductive portion (E7) in the folded state of the foldable electronic device (2),
wherein, under control of at least one processor (120) included in the foldable electronic device (2), the matching circuit (M24) is configured vary an element value based on whether the foldable electronic device (2) is in the folded state or the unfolded state.

9. The foldable electronic device of claim 5, comprising:
at least one inductor (M12, M13, M32, M33) accommodated in the second housing (22) and disposed in the first electrical path (EP11, EP31) or the second electrical path (EP12, EP32) configured to provide frequency tuning and/or impedance matching for the second conductive portion (E7).

10. The foldable electronic device of one of claims 1 to 9, wherein the first conductive portion (E1) and the second conductive portion (E7) extend in a direction perpendicular to a folding axis (A) of the foldable electronic device (2).

11. The foldable electronic device of claim 1, wherein the second conductive portion (E7) further comprises a third contact portion (P4) electrically connected to a ground (G) of the foldable electronic device (2), and
wherein, in the folded state of the foldable electronic device (2), the first contact portion (P1) is not aligned with the second contact portion (P3) and the third contact portion (P4).

12. The foldable electronic device of claim 11, comprising:
a balun (1000);
a first electrical path (EP51) electrically connecting the balun (1000) and the second wireless communication circuit (620);
a second electrical path (EP52) electrically connecting the balun (1000) and the second wireless communication circuit (620);
a third electrical path (EP53) electrically connecting the balun (1000) and the second contact portion (P3) of the second conductive portion (E7); and
a fourth electrical path (EP54) accommodated in the second housing (22) and electrically connecting the third contact portion (P4) of the second conductive portion (E7) and the ground (G) of the foldable electronic device (2),
wherein the second wireless communication circuit (620) is configured to output a positive voltage to the first electrical path (EP51) and a negative voltage to the second electrical path (EP52), and
wherein the balun (1000) is configured to pass one of the positive voltage and the negative voltage to the third electrical path (EP53).

13. The foldable electronic device of claim 12, comprising:
a coil-shaped conductive pattern (630) accommodated in the first housing (21) and having a first end (631) and a second end (632);
a fifth electrical path (EP55) electrically connecting the first electrical path (EP51) and the first end (631) of the coil-shaped conductive pattern (630) wherein the foldable electronic device (2) is configured to feed the positive voltage to the first end (631) of the coil-shaped conductive pattern (630); and
a sixth electrical path (EP56) electrically connecting the second electrical path (EP52) and the second end (632) of the coil-shaped conductive pattern (630) wherein the foldable electronic device (2) is configured to feed the negative voltage to the second end (632) of the coil-shaped conductive pattern (630).

14. The foldable electronic device of claim 12, wherein the second wireless communication circuit (620), the balun (1000), the first electrical path (EP51), and the second electrical path (EP52) are accommodated in the first housing (21), and
wherein the third electrical path (EP53) is disposed across the hinge portion (24).

15. The foldable electronic device of claim 12, wherein the second wireless communication circuit (620) and the balun (1000) are accommodated in the second housing (22),
wherein the first electrical path (EP51) and the second electrical path (EP52) are disposed across the hinge portion (24), and
wherein the third electrical path (EP53) is accommodated in the second housing (22).
